(19) Europäisches Patentamt
European Patent Office
Office européen des brevets

(11) EP 1 561 150 B1

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **03776899.1**

(22) Anmeldetag: **12.11.2003**

(51) Int Cl.:
***G02F 1/137*** *(2006.01)* ***C09K 19/02*** *(2006.01)*
***C09K 19/46*** *(2006.01)* ***C09K 19/58*** *(2006.01)*

(86) Internationale Anmeldenummer:
**PCT/EP2003/012626**

(87) Internationale Veröffentlichungsnummer:
**WO 2004/046805 (03.06.2004 Gazette 2004/23)**

(54) **ELEKTROOPTISCHES LICHTSTEUERELEMENT, ELEKTROOPTISCHE ANZEIGE UND STEUERMEDIUM**

ELECTROOPTICAL LIGHT MODULATING ELEMENT, ELECTROOPTICAL DISPLAY AND MODULATING MEDIUM

ELEMENT DE MODULATION DE LUMIERE ELECTRO-OPTIQUE, ECRAN ELECTRO-OPTIQUE ET SUBSTANCE DE MODULATION

(84) Benannte Vertragsstaaten:
**AT BE BG CH CY CZ DE DK EE ES FI FR GB GR HU IE IT LI LU MC NL PT RO SE SI SK TR**

(30) Priorität: **15.11.2002 DE 10253606**
**27.03.2003 DE 10313979**
**08.08.2003 DE 10336783**

(43) Veröffentlichungstag der Anmeldung:
**10.08.2005 Patentblatt 2005/32**

(73) Patentinhaber: **Merck Patent GmbH**
**64293 Darmstadt (DE)**

(72) Erfinder:
- **HECKMEIER, Michael**
  **69502 Hemsbach (DE)**
- **CZANTA, Markus**
  **64289 Darmstadt (DE)**
- **GOETZ, Achim**
  **64665 Alsbach-Hähnlein (DE)**
- **KIRSCH, Peer**
  **64342 Seeheim-Jugenheim (DE)**
- **FARRAND, Louise Diane**
  **Blandford Forum,**
  **Dorset DT11 9ED (GB)**
- **TAUGERBECK, Andreas**
  **64285 Darmstadt (DE)**
- **MONTENEGRO, Elvira**
  **69469 Weinheim (DE)**

(56) Entgegenhaltungen:
**EP-A- 1 122 587** **WO-A-02/093244**
**DE-A- 3 244 885** **US-A- 3 795 436**

- **H. KIKUCHI ET AL.: "Polymer-stabilized liquid crystal blue phases" NATURE MATERIALS, Bd. 1, 2. September 2002 (2002-09-02), Seiten 64-68, XP002272036**
- **KITZEROW H-S: "THE EFFECT OF ELECTRIC FIELDS ON BLUE PHASES" MOLECULAR CRYSTALS AND LIQUID CRYSTALS, GORDON AND BREACH, LONDON, GB, Bd. 202, 22. Juli 1990 (1990-07-22), Seiten 51-83, XP009023429 ISSN: 0026-8941**
- **K. TARUMI ET AL.: "Advanced liquid-crystal materials for TFT monitor and TV applications" JOURNAL OF THE SOCIETY FOR INFORMATION DISPLAY, Bd. 10, Nr. 2, 5. - 7. Juni 2001, Seiten 127-132, XP009026948**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Gebiet der Erfindung

Die vorliegende Erfindung betrifft Lichtsteuerelemente, diese enthaltende Anzeigen, sowie Lichtsteuermedien. Die Lichtsteuerelemente verwenden bevorzugt Steuermedien die bei bestimmten Temperaturen anisotrope Eigenschaften aufweisen, wie z. B. Flüssigkristalle. Die Lichtsteuerelemente werden bei einer Temperatur betrieben, bei der die Steuermedien in der Blauen Phase vorliegen. Ähnliche Anzeigen, die Steuermedien verwenden, die in der isotropen Phase vorliegen sind DE 102 17 273.0 und in der bislang unveröffentlichten Patentanmeldungen DE 102 41 301.0 vom 04.09.2002, zwei weiteren Anmeldungen der Anmelderin der vorliegenden Anmeldung, beschrieben.

Die vorliegende Erfindung betrifft ein elektrooptisches Lichtsteuerelement sowie solche Elemente enthaltende elektrooptische Anzeigen und Anzeigesysteme wie beispielsweise Fernsehbildschirme und Computermonitore, sowie die in den Lichtsteuerelementen verwendeten Steuermedien. Die erfindungsgemäßen Lichtsteuerelemente enthalten ein mesogenes Steuermedium, das beim Betrieb der Lichtsteuerelemente in der Blauen Phase vorliegt. Sie sind neben einem guten Kontrast und einer geringen Blickwinkelabhängigkeit des Kontrasts, kurzen Schaltzeiten und relativ niedriger Betriebsspannung besonders durch eine geringe Temperaturabhängigkeit der Betriebsspannung ausgezeichnet.

Insbesondere betrifft die vorliegende Erfindung auch mesogene Medien und deren Verwendung als Steuermedien in derartigen Lichtsteuerelementen.

### Aufgabe und Stand der Technik

Konventionelle elektrooptische Flüssigkristallanzeigen sind allgemein bekannt. Sie werden bei einer Temperatur betrieben, bei der sich das Steuermedium in einer optisch anisotropen Mesophase befindet. Bei den meisten Anzeigetypen werden die Steuermedien in der nematischen Phase verwendet. In der Mesophase haben die Steuermedien bereits in der Regel ohne Anlegen eines elektrischen Feldes anisotrope Eigenschaften, wie zum Beispiel eine Doppelbrechung $\Delta n$). Diese wird nicht erst durch ein elektrisches Feld induziert. Am weitesten verbreitet sind TN-(Englisch: "twisted nematic") und STN- (Englisch: "super twisted nematic") Anzeigen. Die Flüssigkristallzellen dieser Anzeigen haben Elektroden auf den Substraten auf den beiden einander gegenüberliegenden Seiten des Flüssigkristallmediums. Somit ist das elektrische Feld im wesentlichen vertikal zur Flüssigkristallschicht. Insbesondere die zuerst genannten Anzeigen werden in Kombination mit einer TFT (Englisch: "thin film transistor") Ansteuerung für Anzeigen mit großem Informationsgehalt und großer Auflösung verwendet. So zum Beispiel in "lap-top" und "note-book" Computern. Insbesondere bei "desk-top" Computermonitoren werden in neuerer Zeit zunehmend Flüssigkristallanzeigen des IPS-Typs (Englisch: "in-plane switching", z. B. DE 40 00 451 und EP 0 588 568) oder alternativ des VAN-Typs (Englisch: "vertically aligned nematic") verwendet. VAN-Anzeigen sind eine moderne Variante der ECB-Anzeigen (Englisch:" electrically controlled birefringence"). In einer weiteren, modernen Variante, den MVA-Anzeigen (Englisch: "multi domain vertically aligned") werden pro angesteuerter Elektrode mehrere Domänen stabilisiert und zusätzlich wird eine spezielle optische Kompensationsschicht verwendet. Diese Anzeigen verwenden, wie die bereits erwähnten TN-Anzeigen, ein zur Flüssigkristallschicht vertikales elektrisches Feld. Im Gegensatz hierzu verwenden IPS-Anzeigen in der Regel Elektroden auf nur einem Substrat, also an einer Seite der Flüssigkristallschicht, sind also durch eine wesentliche Komponente des elektrischen Felds parallel zur Flüssigkristallschicht gekennzeichnet.

Alle konventionellen Anzeigen haben relativ lange Schaltzeiten, insbesondere sind die Schaltzeiten für TV- und Multi-Media-Anwendungen, die immer stärkere Verbreitung finden, oft nicht ausreichend kurz. Dieses fällt insbesondere im Vergleich mit den bislang nahezu ubiquitären Kathodenstrahlröhren auf. Ein weiterer Nachteil der bekannten, in Flüssigkristallanzeigen eingesetzten elektro-optischen Effekte ist die bei den meisten Typen deutlich ausgeprägte Blickwinkelabhängigkeit des erzielten Kontrasts. Diese ist in den meisten Fällen so groß, dass für Anzeigen im Direktsichtbetrieb in der Regel Kompensationsschichten, typischerweise anisotrope Filme, mit zum Teil kompliziertem Aufbau, verwendet werden müssen.

In DE 102 17 273.0 werden Lichtsteuerelemente beschrieben, bei denen das mesogene Steuermedium bei der Betriebstemperatur in der isotropen Phase vorliegt. Diese Lichtsteuerelemente schalten besonders schnell und haben eine gute Blickwinkelabhängigkeit des Kontrasts. Allerdings sind die Ansteuerspannungen für viele Anwendungen zu hoch. Somit besteht der Bedarf nach verbesserten Lichtsteuerelementen insbesondere mit verringerter Ansteuerspannung.

In DE 102 41 301.0, einer weiteren, bislang unveröffentlichten Anmeldung der Anmelderin der vorliegenden Anmeldung, werden spezielle Elektrodenstrukturen vorgeschlagen, die zu einer signifikanten Verringerung der Betriebsspannungen führen. Allerdings bedingen diese Elektrodenstrukturen einen deutlich größeren Aufwand bei der Herstellung der Lichtsteuerelemente.

Die in DE 102 17 273.0 und DE 102 41 301.0 vorgeschlagenen Lichtsteuerelemente weisen außerdem eine ausgeprägte Temperaturabhängigkeit auf. Der durch das elektrische Feld in den Steuermedien in der isotropen Phase

induzierte elektrooptische Effekt ist bei Temperaturen nahe des Klärpunkts der Steuermedien am stärksten ausgeprägt. Hier haben die Lichtsteuerelemente die niedrigsten charakteristischen Spannungen, also werden hier die geringsten Betriebsspannungen benötigt. Mit steigender Temperatur steigen die charakteristischen Spannungen und damit die Betriebsspannung deutlich an. Typische Temperaturabhängigkeiten der Schwellenspannung liegen im Bereich von einigen Volt pro Grad bis zu Zehn und mehr Volt pro Grad. In erster Näherung kann die relative Temperaturabhängigkeit der charakteristischen Spannungen der verschiedenen Lichtsteuerelemente mit isotropem Steuermedium nach DE 102 17 273.0 und DE 102 41 301.0 als vom eingesetzten Medium und als von der Elektrodenstruktur unabhängig angesehen werden. In DE 102 17 273.0 werden isotrope Medien mit einigen deutlich variierenden Zusammensetzungen beschrieben, die in Lichtsteuerelementen, die in der isotropen Phaase betrieben werden, eingesetzt werden können, wohingegen in DE 102 41 301.0 verschiedene Elektrodenstrukturen offenbart werden. Die relative Temperaturabhängigkeit der Schwellenspannung liegt bei einer Temperatur von 1° oberhalb des Klärpunkts in der Größenordnung von 50%/Grad. Mit steigender Temperatur nimmt sie ab. Bei einer Temperatur von 5° oberhalb des Klärpunkts liegt sie in der Größenordnung von einigen 10%/Grad.

Für die in praktischen Anzeigen verwendete Lichtsteuerelemente, ist diese Temperaturabhängigkeit des elektrooptischen Effekts meist zu groß. In der Regel sind Effekte erwünscht, deren Betriebsspannungen über einen Temperaturbereich von mindestens einigen Grad, bevorzugt über 5° oder mehr, besonders bevorzugt über 10° oder mehr und ganz besonders bevorzugt über 20° oder mehr nahezu unabhängig von der Betriebstemperatur sind.

Die alternative Realisierung einer elektronischen Nachführung der Ansteuerspannung ist relativ aufwendig. Einerseits führt sie in der Regel zum Verlust eines Teils der verfügbaren Ansteuerspannung, da diese ja auch bei der höchsten Betriebstemperatur noch ausreichend groß sein muß. Andererseits ist sie mit einigem Meß- und Regelaufwand verbunden. So muß die aktuelle Temperatur des Lichtsteuerelements bestimmt werden. Bei Anzeigen mit einer größeren Fläche kann eventuell sogar die Bestimmung eines Temperaturgradienten bzw. der Temperaturen an mehreren Stellen der Anzeige erforderlich sein.

Die weitere Alternative, die Temperatur der Lichtsteuerelemente konstant zu halten, ist ebenfalls nicht leicht zu realisieren. Aus offensichtlichen praktischen Gründen muß hierzu die Anzeige geheizt werden. Diese Alternative erfordert ebenfalls die Bestimmung der Temperatur der Lichtsteuerelemente.

Dadurch lässt sich der Vorteil eines besonders guten Kontrasts der in DE 102 17 273.0 beschriebenen Anzeigen, die ein isotropes Steuermedium verwenden, praktisch nicht leicht ausnutzen.

Somit ist ersichtlich, dass ein großer Bedarf an Lichtsteuerelementen, die ein Steuermedium in einer optisch isotropen Phase verwenden, besteht, die eine geringe Temperaturabhängigkeit der charakteristischen Spannungen zeigen.

Flüssigkristalle mit entsprechend starker chiraler Verdrillung können eine oder mehrere optisch isotrope Mesophasen aufweisen. Diese Phasen erscheinen bei entsprechendem cholesterischen Pitch, d.h. wenn der Pich im Bereich der Wellenlänge des sichtbaren Lichts liegt, in einer ausreichend großen Schichtdicke leicht bläulich. Aus diesem Grund werden sie als Blaue Phasen bezeichnet (Gray and Goodby, "Smectic Liquid Crystals, Textures and Structures", Leonhard Hill, USA, Canada (1984)).

Die Effekte elektrischer Felder auf Flüssigkristalle, die in einer Blauen Phase vorliegen, werden beispielsweise in H.S. Kitzerow, "The Effect of Electric Fields on Blue Phases", Mol. Cryst. Liq. Cryst, (1991), Bd. 202, S. 51-83 beschrieben. Dort werden drei Arten Blauer Phasen (BP I bis BP III) erwähnt, die in feldfreien Flüssigkristallen beobachtet werden können. Es werden jedoch keine elektrooptischen Anzeigen, die eine feldinduzierte Doppelbrechung ausnutzen, beschrieben. Unter dem Einfluss eines elektrischen Feldes können weitere Blaue Phasen oder andere Phasen auftreten, die von den Blauen Phasen I, II und III verschieden sind.

Der vorliegenden Erfindung lag somit die Aufgabe zugrunde, besonders schnell schaltende Lichtsteuerelemente die ein Steuermedium verwenden, das im feldfreien Zustand in einer optisch isotropen Phase vorliegt, mit gutem Kontrast, guter Blickwinkelabhängigkeit, niedrigen Ansteuerspannungen und insbesondere mit einer geringen Temperaturabhängigkeit der Ansteuerspannung zu realisieren und die dafür nötigen Steuermedien bereitzustellen. Diese Lichtsteuerelemente sollen eine möglichst geringe Schichtdicke der Steuermedien aufweisen um als Elemente von FPDs (Englisch: flat panel displays, also flachen Anzeigen), wie zum Beispiel Flachbildschirmen für Computer, eingesetzt werden zu können. Ferner sollen sie mittels einer möglichst einfachen Elektrodenkonfiguration ansteuerbar sein.

## Vorliegende Erfindung

Überraschender Weise wurde gefunden, dass, wie im Folgenden beschrieben, Lichtsteuerelemente die, wie die in der unveröffentlichten Anmeldung DE 10217273.0 beschriebenen Lichtsteuerelemente, Steuermedien in einer optisch isotropen Phase verwenden, deutlich verbessert werden können, wenn Steuermedien verwendet werden, die in der Blauen Phase vorliegen. Insbesondere können so Lichtsteuerelemente mit deutlich verringerter Temperaturabhängigkeit der charakteristischen Spannungen und damit der Betriebsspannung realisiert werden.

Die Erfindung betrifft ein mesogenes Steuermedium gemäß Anspruch 1 und ein Lichtsteuerelement gemäß

Anspruch 13.

Bevorzugt wird eine Elektrodenanordnung verwendet, die ein elektrisches Feld mit einer signifikanten Komponente parallel zur Fläche des mesogenen Steuermediums erzeugen kann.

Im Folgenden wird die vorliegende Erfindung näher erläutert.

Als Steuermedium des Lichtsteuerelements ein mesogenes Medium verwendet. Als mesogene Medien bzw. Verbindungen werden in der vorliegenden Anmeldung Medien bzw. Verbindungen bezeichnet, die eine Mesophase aufweisen, die in einer Mesophase löslich sind oder die eine Mesophase induzieren. Die Mesophase ist eine smektische, eine nematische oder eine Blaue Phase. Hierbei sind die smektische Phase bzw. die nematische Phase bevorzugt chiral. In der vorliegenden Anmeldung werden die Begriffe "chirale nematische Phase" und "cholesterische Phase" synonym verwendet, wenn nicht ausdrücklich anders angegeben. Der Begriff "Blaue Phase" steht für jede der bekannten Blauen Phasen und umfasst auch mehrere dieser Phasen gleichzeitig, wenn nicht ausdrücklich anders angegeben.

Bei Anlegen eines elektrischen Felds können feldinduzierte Phasen, wie z.B. BPH und BPX auftreten. Bei elektrischen Feldern mit großer Feldstärke ist ferner ein Phasenübergang in eine Phase möglich, die ohne elektrisches Feld bei einer niedrigeren Temperatur auftritt. Die Bestimmung der Phasen zur Charakterisierung der Materialien, besonders der Steuermedien selbst bezieht sich auf den Fall, dass kein elektrisches Feld vorliegt, wohingegen die Bestimmung der Phasen bei der Charakter isierung der Lichtsteuerelemente unter Anlegen einer entsprechenden Spannung erfolgt, in der Regel der Betriebsspannung, bzw. der Schwellenspannung, soweit nicht ausdrücklich anders angegeben. Die Übergangstemperatur T(*,BP) wird im feldfreien Zustand bestimmt, wohingegen die Übergangstemperatur T(BP,I) unter Anlegen eines elektrischen Felds, aus der Änderung der Steigung der Temperaturabhängigkeit der charakteristischen Spannungen der Lichtsteuerelemente, bestimmt wird.

Bevorzugt weisen die Steuermedien eine Blaue Phase und eine weitere Mesophase, bevorzugt eine cholesterische Phase.

Als bevorzugtes Medium zur Untersuchung der mesogenen Eigenschaften der Materialien die keine Mesophase aufweisen wird die nematische Mischung ZLI-4792 der Merck KGaA, Darmstadt, Deutschland verwendet. Bevorzugt haben die mesogenen Materialien einen aus 10%-iger Lösung in dieser Mischung extrapolierten Klärpunkt von -50˚C oder mehr, besonders bevorzugt von -20˚C oder mehr und ganz besonders bevorzugt von 0˚C oder mehr.

Die chirale Komponente (A) enthält eine oder mehrere chiralen Verbindungen, bevorzugt besteht sie aus diesen Verbindungen. Diese chiralen Verbindungen haben eine mesogene Struktur und weisen bevorzugt selbst eine oder mehrere Mesophasen, bevorzugt mindestens eine cholesterische Phase auf.

Bevorzugt enthält das Steuermedium eine oder mehrere Verbindungen, die bevorzugt eine cholesterische Phase aufweisen. In bestimmten Ausführungsformen kann das Steuermedium jedoch auch vorteilhaft eine oder mehrere chirale Verbindungen enthalten, von denen eine, mehrere oder alle selbst keine Mesophase aufweisen. In diesem Fall sind chirale Verbindungen bevorzugt, die einen Schmelzpunkt oberhalb von Umgebungstemperatur haben, da diese sich besser handhaben lassen. Außerdem sind besonders in diesem Fall Verbindungen mit einer großen HTP, also Verbindungen, die bereits beim Einsatz geringer Konzentrationen in nematischen Hostmischungen eine kurzen cholesterischen Pitch induzieren, bevorzugt.

In einer bevorzugten Ausführungsform weist eine chirale Verbindung oder weisen mehrere der chiralen Verbindungen der Komponente (A) eine Mesophase, bevorzugt eine cholesterische Phase auf. In dieser Ausführungsform beeinflussen die chiralen Verbindungen die physikalischen Eigenschaften der mesogenen achiralen Komponente (B), wie z.B. den Klärpunkt, die Doppelbrechung und die dielektrische Anisotropie, relativ wenig und es können auch entsprechend große Konzentrationen der chiralen Komponente (A) eingesetzt werden, was die Verwendung von Verbindungen mit relativ kleiner HTP ermöglicht. Die physikalischen Eigenschaften der mesogenen, achiralen Komponente (B), wie z.B. den Klärpunkt, die Doppelbrechung und die dielektrische Anisotropie, werden relativ wenig geändert, solange der cholesterische Pich lang genug ist, in der Regel viel größer als die Wellenlänge des Lichts.

In einer anderen bevorzugten Ausführungsform weist die chirale Verbindung, bzw. weisen die chiralen Verbindungen der Komponente (A) keine Mesophase auf. Diese Ausführungsform ist besonders dann bevorzugt, wenn die chirale Komponente (A) eine große HTP in der achiralen Komponente (B) besitzt, da dann der gewünschte niedrige cholesterische Pitch mit einer kleinen Konzentration der chiralen Komponente (A) erhalten werden kann, was dazu führt, dass die physikalischen Eigenschaften des Steuermediums, wie z.B. den Klärpunkt, die Doppelbrechung und die dielektrische Anisotropie, nur wenig gegenüber denen der achiralen Komponente (B) verändert werden.

Wenn in einer der beiden in den beiden vorhergehenden Absätzen beschriebenen oder in einer anderen Ausführungsform jedoch der cholesterische Pich relativ kleine Werte, in der Größenordnung der Wellenlänge des Lichts, annimmt, induziert die chirale Komponente (A) jedoch in dem mesogenen Medium eine völlig andere Phase, eine Blaue Phase, deren Struktur von der, der nematischen und cholesterischen Phase völlig verschieden sind.

Die physikalischen Eigenschaften, wie z.B. den Klärpunkt, die Doppelbrechung und die dielektrische Anisotropie, der Medien, die sowohl die chirale Komponente (A), als auch die achirale Komponente (B) enthalten sind in der Regel nicht mit den bei nematischen Flüssigkristallmischungen üblichen Methoden zugänglich. In diesem Fall wird zu Bestimmung der entsprechenden physikalischen Eigenschaften die chirale Komponente (A) ersetzt durch eine achirale

Komponente (A') mit gleicher Konzentration. Die achirale Komponente (A') enthält die selbe Verbindung, bzw. die selben Verbindungen in den gleichen Konzentrationen wie die Komponente (A). Im Gegensatz zur Komponente (A) enthält die Komponente (A') jedoch nicht die chiralen Verbindungen, sondern die entsprechenden Racemate, also eine unchirale Mischung der jeweiligen beiden entsprechenden Enantiomere jeder der Verbindungen im Verhältnis 1:1.

In dem Medium, das sowohl Komponente (A) als auch Komponente (B) enthält tritt die Blaue Phase auf.

Bevorzugt weisen eine oder mehrere der achiralen Verbindungen der Komponente (B) eine Mesophase, bevorzugt eine smektische und/oder nematische, bevorzugt eine nematische Phase auf.

In einer bevorzugten Ausführungsform der vorliegenden Erfindung macht die achirale Komponente (B) den überwiegenden Teil des Steuermediums aus. In dieser Ausführungsform beträgt die Konzentration der chiralen Komponente im Steuermedium bevorzugt 0,5% bis 45%, besonders bevorzugt 1 % bis 35% und ganz besonders bevorzugt 3% bis 25%.

In dieser Ausführungsform kann der cholesterische Pitch des Steuermediums in der cholesterischen, auch chiral nematisch genannten, Phase in erster Näherung durch Gleichung (1) wiedergegeben werden.

$$P = (HTP \cdot c)^{-1} \qquad (1)$$

worin

P den cholesterischen Pitch,

c die Konzentration der chiralen Komponete (A) und HTP (Englisch "helical twisting power") eine Konstante, die das Verdrillungsvermögen der chiralen Substanz charakterisiert und von der chiralen Substanz (Komponente (A)) und von der achiralen Komponente (B) abhängt

darstellt.

Soll die Bestimmung des Pitchs genauer erfolgen, kann die Gleichung (1) entsprechend abgewandelt werden. Meist wird hierzu die Entwicklung des cholesterischen Pitchs in Form eines Polynoms (2) verwendet.

$$P = (HTP \cdot c)^{-1} + (\alpha_1 \cdot c)^{-2} + (\alpha_2 \cdot c)^{-3} + \ldots \qquad (2)$$

worin die Parameter die oben bei Gleichung (1) gegebene Bedeutung haben und

$\alpha_1$ und $\alpha_2$ Konstanten die von der chiralen Komponente (A) und von der achiralen Komponente (B) abhängen

darstellen.

Das Polynom kann bis zu dem Grad fortgeführt werden, der die gewünschte Genauigkeit ermöglicht.

Besteht die chirale Komponente (A) aus zwei oder mehreren Verbindungen wird Gleichung (1) abgewandelt zu Gleichung (3).

$$P = [\Sigma_i (HTP(i) \cdot c_i)]^{-1} \qquad (3)$$

worin

P den cholesterischen Pitch,

$c_i$ die Konzentration der i-ten Verbindung der chiralen Komponente (A) und HTP(i) die HTP der i-ten Verbindung der chiralen Komponente (A) in der achiralen Komponente (B)

darstellt.

Die Temperaturabhängigkeit der HTP wird üblicherweise auch in einer Polynomentwicklung (4) dargestellt, wobei oft bereits nach dem linearen Glied abgebrochen werden kann.

$$HTP(T) = HTP(T_0) + \beta_1 \cdot (T - T_0) + \beta_2 \cdot (T - T_0)^2 + ... \qquad (4)$$

worin die Parameter die oben bei Gleichung (1) gegebene Bedeutung haben und

| | |
|---|---|
| T | die Temperatur, |
| $T_0$ | die Bezugstemperatur, |
| HTP(T) | die HTP bei der Temperatur T, |
| $HTP(T_0)$ | die HTP bei der Temperatur $T_0$ und |
| $\beta_1$ und $\beta_2$ | Konstanten die von der chiralen Komponete (A) und von der achiralen Komponete (B) abhängen |

darstellen.

In einer bevorzugten Ausführungsform der vorliegenden Erfindung enthält die chirale Komponente (A) eine oder mehrere chirale Verbindungen mit einer HTP (Englisch "helical twisting power") in der kommerziellen, nematischen Wirtsmischung MLC-6260 der Fa. Merck KGaA, Darmstadt von 10 $\mu m^{-1}$ oder mehr, bevorzugt von 30 $\mu m^{-1}$ oder mehr, besonders bevorzugt von 50 $\mu m^{-1}$ oder mehr und ganz besonders bevorzugt von 90 $\mu m^{-1}$ oder mehr.

In einer bevorzugten Ausführungsform der vorliegenden Erfindung enthält die chirale Komponente (A) zwei oder mehr chirale Verbindungen. Bevorzugt haben die chiralen Verbindungen alle das selbe Vorzeichen der HTP.

Bevorzugt hat das Steuermedium eine charakteristische Temperatur, in einer bevorzugen Ausführungsform einen Klärpunkt, im Bereich von -30°C bis 80°C, bevorzugt bis 55°C.

Die erfindungsgemäßen Lichtsteuerelemente enthalten ein mesogenes Medium, das bei Betriebstemperatur in der Blauen Phase vorliegt. Dieses Medium befindet sich zweckmäßiger Weise auf bzw. unter einem Substrat.

In der Regel befindet sich das Steuermedium zwischen zwei Substraten. Diese Ausführungsform ist bevorzugt. Wenn sich das Steuermedium zwischen zwei Substraten befindet ist mindestens eines dieser Substrate lichtdurchlässig. Das lichtdurchlässige Substrat, bzw. die lichtdurchlässigen Substrate können z. B. aus Glas, Quarz oder Kunststoff bestehen. Wird ein Substrat verwendet, das nicht lichtdurchlässig ist, so kann dies unter anderem aus einem Metall oder einem Halbleiter bestehen. Diese Medien können als solche verwendet werden oder auf einem Träger, z.B. einer Keramik, vorliegen. Ist das Steuermedium ein polymeres Medium so kann gegebenenfalls auf die Verwendung eines zweiten Substrats verzichtet werden. Polymere Steuermedien können sogar selbsttragend ausgeführt werden. In diesem Fall wird gar kein Substrat benötigt. In diesem Fall, ebenso wie bei der Verwendung ausschließlich flexibeler Substrate, können flexibele Lichtsteuerelemente realisiert werden.

Die Betriebstemperatur des Lichtsteuerelements liegt bevorzugt oberhalb der charakteristischen Temperatur des Steuermediums, in der Regel der Übergangstemperatur des Steuermediums in die Blaue Phase, in der Regel im Bereich von 0,1° bis 50° oberhalb dieser Temperatur, bevorzugt im Bereich von 0,1° bis 10° oberhalb dieser Temperatur und besonders bevorzugt im Bereich von 0,1° bis 5° oberhalb dieser Temperatur. Die Betriebstemperatur liegt im Bereich der von der Übergangstemperatur des Steuermediums in die Blaue Phase bis zur Übergangstemperatur des Steuermediums in die isotrope Phase, dem Klärpunkt, reicht.

Der Betriebstemperaturbereich der erfindungsgemäßen Lichtsteuerelemente erstreckt sich bevorzugt mindestens über einen Temperaturbereich von 5° oder mehr, bevorzugt von 20° oder mehr, bevorzugt von 30° oder mehr bevorzugt von 40° oder mehr besonders bevorzugt von 60° oder mehr und ganz besonders bevorzugt von 80° oder mehr. Bevorzugt erstreckt sich der Betriebstemperaturbereich der erfindungsgemäßen Lichtsteuerelemente mindestens von 10°C oder weniger bis 50°C oder mehr, bevorzugt mindestens von 0°C oder weniger bis 60°C oder mehr, besonders bevorzugt mindestens von -20°C oder weniger bis 80°C oder mehr, ganz besonders bevorzugt mindestens von -30°C oder weniger bis 100°C oder mehr und am meisten bevorzugt mindestens von -40°C oder weniger bis 120°C oder mehr.

In einer bevorzugten Ausführungsform erstreckt sich der Betriebstemperaturbereich der erfindungsgemäßen Lichtsteuerelemente relativ zur charakteristischen Temperatur des Steuermediums mindestens bis 50°C oder mehr oberhalb der charakteristischen Temperatur, besonders bevorzugt mindestens von -5°C oder weniger unterhalb der charakteristischen Temperatur bis 60°C oder mehr oberhalb der charakteristischen Temperatur und ganz besonders bevorzugt mindestens von -10°C unterhalb der charakteristischen Temperatur oder weniger bis 80°C oder mehr oberhalb der charakteristischen Temperatur.

Bei Anlegen einer Spannung wird in dem mesogenen Medium in der optisch isotropen Phase eine Orientierung induziert welche zu einer optischen Verzögerung führt, die auf bekannte Weise, z.B. und bevorzugt zwischen gekreuzten Polarisatoren, visualisiert werden kann. Bevorzugt wird ein inhomogenes elektrisches Feld verwendet.

Die erfindungsgemäßen Lichtsteuerelemente enthalten mindestens ein Element zur Polarisierung des Lichts. Zusätzlich enthalten sie bevorzugt ein weiteres optisches Element. Dieses weitere optische Element ist entweder ein zweites Element zur Polarisaton des Lichts, ein Reflektor oder ein Transflektor.

Die optischen Elemente sind so angeordnet, dass das Licht beim Durchgang durch das mesogene Medium

des Lichtsteuerelements sowohl vor dem Eintritt in das mesogene Medium, als auch nach dem Austritt aus dem mesogenen Medium mindestens einmal mindestens ein polarisierendes Element durchläuft.

In einer bevorzugten Ausführungsform des Lichtsteuerelements gemäß der vorliegenden Erfindung befindet sich das mesogene Medium zwischen zwei Polarisatoren, also einem Polarisator und einem Analysator. Bevorzugt werden zwei Linearpolarisatoren verwendet. In dieser Ausführungsform sind die Absorptionsachsen der Polarisatoren bevorzugt gekreuzt und bilden bevorzugt einen Winkel von 90°.

Optional enthält das erfindungsgemäße Lichtsteuerelement eine oder mehrere doppelbrechende Schichten. Bevorzugt enthält es eine λ/4-Schicht oder mehrere λ/4-Schichten, bevorzugt eine λ/4-Schicht. Die optische Verzögerung der λ/4-Schicht beträgt bevorzugt ca. 140 nm.

Die Schichtdicke (d) des mesogenen Steuermediums beträgt bevorzugt 0,1 μm bis 5.000 μm (i.e. 5 mm), besonders bevorzugt 0,5 μm bis 1.000 μm (i.e. 1 mm), besonders bevorzugt 1,0 μm bis 100 μm und ganz besonders bevorzugt 1,5 μm, bevorzugt 3,0 μm, bis 30 μm und insbesondere 2,0 μm, bevorzugt 3,5 μm, bis 20 μm. In einer bevorzugten Ausführungsform beträgt die Schichtdicke des mesogenen Steuermediums bevorzugt 0,5 μm bis 50 μm, besonders bevorzugt 1,0 μm bis 20 μm und ganz besonders bevorzugt 1,0 μm bis 8,0 μm.

Gegenstand der vorliegenden Erfindung sind auch elektrooptische Anzeigen, die ein oder mehrere erfindungsgemäße Lichtsteuerelemente enthalten. Bevorzugt werden diese elektrooptischen Anzeigen mittels einer aktiven Matrix angesteuert.

Gegenstand der vorliegenden Erfindung sind des weiteren elektrooptische Anzeigesysteme enthaltend eine oder mehrere erfindungsgemäße elektrooptische Anzeigen. Diese elektrooptische Anzeigesysteme werden bevorzugt zur Darstellung von Information, unter anderem, bevorzugt als Fernsehbildschirm oder als Computermonitor verwendet. Bei der darzustellenden Information handelt es sich bevorzugt um digitale Signale oder um Videosignale.

Das erfindungsgemäße Lichtsteuerelement kann zusätzlich ein oder mehrere weitere übliche optische Elemente wie doppelbrechende Schichten (z.B. Kompensationsschichten), Diffusorschichten, und Elemente zur Erhöhung der Helligkeit und/oder der Lichtausbeute und / oder der Blickwinkelabhängigkeit enthalten, wobei diese Aufzählung nicht abschließend ist.

Die erfindungsgemäßen Lichtsteuerelemente sind durch einen guten Kontrast gekennzeichnet, der stark und nahezu überwiegend von den Eigenschaften der verwendeten Polarisatoren abhängt. Zum Vergleich mit herkömmlichen TN-Zellen werden hier TN-Zellen mit einer optischen Verzögerung von 0,50 μm, positivem Kontrast und der Absorptionsachse der Polarisatoren senkrecht zu der Vorzugsorientierung der nematischen Flüssigkristalle am benachbarten Substrat, die nicht chirale Flüssigkristalle enthalten, herangezogen. Der Kontrast der erfindungsgemäßen Lichtsteuerelemente hängt unter anderem, insbesondere von der Form, Art und Struktur der verwendeten Elektroden ab. Werden bei den erfindungsgemäßen Lichtsteuerelementen und bei diesen herkömmlichen TN-Zellen die gleichen Polarisatoren verwendet, ist der Kontrast der erfindungsgemäßen Lichtsteuerelemente in der Regel um 20% oder mehr, teilweise, besonders bei Beobachtungswinkeln, die von der Normalen der Displayoberfläche stark abweichen, um 40% oder mehr größer als der Kontrast der TN-Zellen.

Die Blickwinkelabhängigkeit des Kontrasts der erfindungsgemäßen Lichtsteuerelemente ist sehr gut. Sie ist deutlich besser als die der bekannten ECB-Zellen. Sie ist eher vergleichbar mit der bei den kommerziell verfügbaren IPS-Anzeigen (z.B. von Hitachi und NEC, beide Japan) und MVA-Anzeigen (z.B. von Fujitsu, Japan) beobachteten Blickwinkelabhängigkeit. Sie ist viel geringer als die der konventionellen TN-Anzeigen. So schließt eine Isokontrastkurve eines gegebenen Kontrastverhältnisses bei den erfindungsgemäßen Lichtsteuerelementen in der Regel einen Winkelbereich ein, die mehr als doppelt so groß, oft sogar mehr als dreimal so groß ist wie die entsprechende Isokontrastkurve für das gleiche Kontrastverhältnis bei der TN-Anzeige.

Die Schaltzeiten der erfindungsgemäßen Lichtsteuerelemente sind sehr klein. Sie liegen in der Regel bei Werten von 5 ms oder weniger, bevorzugt bei 1 ms oder weniger, besonders bevorzugt bei 0,5 ms oder weniger und ganz besonders bevorzugt bei 0,1 ms oder weniger.

Besonders vorteilhaft ist die Tatsache, dass beim Schalten zwischen verschiedenen Graustufen die Schaltzeit insbesondere für das Einschalten nahezu unabhängig von der verwendeten Ansteuerspannung sind. Dies stellt einen wesentliche Vorteil gegenüber herkömmlichen Lichtsteuerelementen wie Flüssigkristallzellen, z.B. TN-Zellen, dar.

Die elektrooptische Kennlinie wurde durch charakteristische Spannungen charakterisiert. Hierzu wurden insbesondere die Spannungen verwendet, bei denen 10%, 50% bzw. 90% relativer Kontrast erreicht wird. Diese Spannungen (kurz $V_{10}$, $V_{50}$ und $V_{90}$) werden auch als Schwellen-, Mittgrau- bzw. Sättigungsspannung bezeichnet. Zusätzlich wurde in der Regel die Spannung bei der 70% relativer Kontrast erreicht wird ($V_{70}$), bestimmt.

Elektrooptische Anzeigen gemäß der vorliegenden Erfindung enthalten ein oder mehrere erfindungsgemäße Lichtsteuerelemente. Diese werden in einer bevorzugten Ausführungsform mittels einer aktiven Matrix angesteuert.

In einer anderen bevorzugten Ausführungsform werden die erfindungsgemäßen Lichtsteuerelemente im sogenannten "field sequential mode" angesteuert. Hierbei werden die Schaltelemente synchron zur Ansteuerung nacheinander mit verschieden farbigem Licht beleuchtet. Zur Erzeugung des gepulsten farbigen Lichts können beispielsweise ein Farbrad ("color wheel"), Stroboskoplampen oder Blitzlampen eingesetzt werden.

Elektrooptische Anzeigen gemäß der vorliegenden Erfindung können, insbesondere wenn sie für Fernsehbildschirme, Computermonitore oder ähnliches verwendet werden, zur Darstellung farbiger Bilder einen Farbfilter enthalten. Dieser Farbfilter besteht zweckmäßiger Weise aus einem Mosaik von Filterelementen verschiedener Farben. Hierbei ist typischer Weise jedem elektro-optischen Schaltelement ein Element des Farbfiltermosaiks einer Farbe zugeordnet.

Die erfindungsgemäßen Lichtsteuerelemente enthalten eine Elektrodenstruktur die ein elektrisches Feld mit einer signifikanten Komponente parallel zur Schicht des mesogenen Mediums erzeugt. Diese Elektrodenstruktur kann in der Form von interdigitalen Elektroden ausgeführt sein. Sie kann in Form von Kämmen oder Leitern ausgeführt sein. Auch Ausführungen in Form von überlagerten "H"s und doppel-"T"s bzw. "I"s sind vorteilhaft. Die Elektrodenstruktur befindet sich vorteilhaft auf nur einer Seite des mesogenen Mediums, bei Verwendung mindestens eines Substrats bevorzugt zwischen diesem und dem mesogenen Medium. Bevorzugt liegt die Elektrodenstruktur in mindestens zwei unterschiedlichen Ebenen vor, die sich beide auf einer Seite des mesogenen Steuermediums befinden. Dies gilt insbesondere wenn die Elektrodenstruktur überlappende Teilstrukturen enthält. Diese Teilstrukturen werden vorteilhafter Weise durch eine dielektrische Schicht voneinander getrennt. Wenn sich die Teilstrukturen auf den gegenüberliegenden Seiten einer Isolationsschicht befinden kann ein "lay out" gewählt werden, das die Realisierung von Kondensatoren erlaubt. Dies ist insbesondere bei der Ansteuerung von Anzeigen mittels einer aktiven Matrix vorteilhaft. Derartige Aktiv Matrix Anzeigen verwenden eine Matrix von den einzelnen Lichtsteuerelementen zugeordneten Ansteuerelementen mit einer nichtlinearen Strom-Spannungs-Kennlinie, wie z. B. TFTs oder MIM- (Englisch: "metal insulator metal") Dioden.

Der Aufbau von Lichtsteuerelementen mit einem mesogenen Steuermaterial in einer optisch isotropen Phase ist im Prinzip in DE 102 172 73.0 beschrieben. Hier wird der Aufbau der erfindungsgemäßen Lichtsteuerelemente kurz beschrieben. Das Schaltelement enthält zwischen den inneren Oberflächen der Substrate das Steuermedium. Auf der inneren Oberfläche des einen Substrats befindet sich die der Elektrodenstruktur mit mindestens zwei Elektroden, die mit voneinander verschiedenen Potentialen beaufschlagt werden können.

Die Elektroden können aus durchsichtigem Material bestehen, wie z. B. Indiumzinnoxid (ITO). In diesem Fall kann es vorteilhaft und gegebenenfalls nötig sein einen Teil oder Teile des Lichtsteuerelements mittels einer schwarzen Maske abzudecken. Dies erlaubt Bereiche in denen das elektrische Feld nicht effektiv ist abzuschirmen und so den Kontrast zu verbessern. Die Elektroden können aber auch aus undurchsichtigem Material bestehen, üblicherweise aus Metall, z.B. aus Chrom, Aluminium, Tantal, Kupfer, Silber oder Gold, bevorzugt aus Chrom. In diesem Fall kann der Einsatz einer separaten schwarzen Maske gegebenenfalls entfallen.

Das verwendete elektrische Feld ist bevorzugt ein inhomogenes Feld.

Es wurde gefunden, dass der seitliche Abstand der Elektroden, die mit verschiedenem Potential beaufschlagt werden können, voneinander einen starken Einfluß auf die charakteristischen Spannungen der Lichtsteuerelemente hat. Mit abnehmendem Abstand nimmt die benötigte Ansteuerspannung ab. Wenn der Abstand jedoch kleiner wird, wird auch das Öffnungsverhältnis des Lichtsteuerelements kleiner und die Helligkeit nimmt ab. Bevorzugt haben die Elektroden einen Abstand voneinander der im Bereich von 0,5 µm bis 100 µm, bevorzugt im Bereich von 1 µm bis 20 µm, besonders bevorzugt im Bereich von 1 µm bis 15 µm, ganz besonders bevorzugt im Bereich von 2 µm bis 12 µm und am meisten bevorzugt im Bereich von 2 µm, bevorzugt von 3 µm, bis 11 µm liegt.

Mit abnehmendem Elektrodenabstand verringert sich die Ansteuerspannung. Gleichzeitig nimmt aber das Öffnungsverhältnis und damit die Transmission und bei gegebener Beleuchtung auch die Helligkeit der Anzeige ab. Soll die Helligkeit der elektrooptischen Anzeige optimiert werden, wird bevorzugt ein Elektrodenabstand verwendet, der 8 µm oder mehr, besonders bevorzugt 10 µm oder mehr und ganz besonders bevorzugt 12 µm oder mehr beträgt. Steht jedoch die Ansteuerspannung im Vordergrund der Optimierung, beträgt der Abstand der Elektroden zueinander bevorzugt 19 µm oder weniger, besonders bevorzugt 15 µm oder weniger, ganz besonders bevorzugt 10 µm oder weniger und insbesondere bevorzugt 9 µm oder weniger.

Die Breite der Elektroden in der Richtung zu den Nachbarelektroden, die mit verschiedenem Potential beaufschlagt werden können, ist weniger kritisch als der Abstand der Elektroden in dieser Richtung. Er hat nahezu keinen Einfluß auf die charakteristischen Spannungen der Lichtsteuerelemente. Mit zunehmender Breite der Elektroden wird jedoch das Öffnungsverhältnis des Lichtsteuerelements kleiner und die Helligkeit nimmt ab, insbesondere wenn die Elektroden aus lichtundurchlässigem Material bestehen. Mit abnehmender Breite der Elektroden nimmt dagegen ihr elektrischer (Ohm'-scher) Widerstand zu. Bevorzugt haben die Elektroden eine Breite die im Bereich von 0,5 µm bis 30 µm, bevorzugt im Bereich von 0,5 µm bis 20 µm, besonders bevorzugt im Bereich von 0,7 µm bis 19 µm, ganz besonders bevorzugt im Bereich von 1 µm bis 9 µm und am ganz bevorzugt im Bereich von 1,5 µm bis 6 µm liegt.

Die mesogenen Medien gemäß der vorliegenden Erfindung weisen eine Blaue Phase auf.

Die charakteristische Temperatur bzw. der Klärpunkt der mesogenen Medien, die bevorzugt eine Blaue Phase aufweisen, liegt bevorzugt im Bereich von -20°C bis 80°C, bevorzugt von -30°C bis 80°C, bevorzugt ist die charakteristische Temperatur bzw. der Klärpunkt 60°C oder weniger, besonders bevorzugt liegt er im Bereich von 0°C bis 60°C, bevorzugt im Bereich von 0°C bis 55°C und ganz besonders bevorzugt im Bereich von 20°C bis 60°C, bevorzugt bis 50°C. Bei Anzeigen mit Hintergrundbeleuchtung liegt die charakteristische Temperatur, in einer bevorzugten Ausführungsform der Klärpunkt, bevorzugt im Bereich von 10°C bis 70°C und besonders bevorzugt im Bereich von 30°C bis 60°C.

Die Blaue Phase ist bevorzugt stabil bis -10°C, besonders bevorzugt bis -30°C und ganz besonders bevorzugt bis -40°C.

Die optische Anisotropie des Mediums bzw. der achiralen Komponente (B) des Mediums bei einer Temperatur von 4° unterhalb der charakteristischen Temperatur bzw. des Klärpunkts des Mediums bzw. der Komponente (B) beträgt bevorzugt 0,070 oder mehr, bevorzugt 0,080 oder mehr, besonders bevorzugt 0,090 oder mehr und ganz besonders bevorzugt 0,100 oder mehr. Bei Verwendung von Medien mit kleinerer optischer Anisotropie in den erfindungsgemäßen Lichtsteuerelementen ist eine höhere Ansteuerspannung nötig, als bei Verwendung von Medien mit größerer optischer Anisotropie. Sofern eine entsprechend große Ansteuerspannung zur Verfügung steht, können auch Medien mit einer achiralen Komponente eingesetzt werden, die eine kleinere optische Anisotropie aufweisen als 0,070.

In einer bevorzugten Ausführungsform weist die achirale Komponente (B) der erfindungsgemäßen, mesogenen Medien in der nematischen Phase bei einer Temperatur von 4 Grad unterhalb des Klärpunkts bevorzugt eine Doppelbrechung ($\Delta n$) von 0,100 oder mehr, besonders bevorzugt von 0,150 oder mehr und ganz besonders bevorzugt von 0,200 oder mehr auf. In dieser bevorzugten Ausführungsform beträgt die Konzentration der chiralen Komponente (A) 20% oder weniger, bevorzugt 10% oder weniger und ganz besonders bevorzugt 7% oder weniger des mesogenen Mediums.

Der Wert der Doppelbrechung der Komponente (B) ist für die erfindungsgemäße Anwendung so gut wie unbegrenzt. Praktisch ist er jedoch in der Regel 0,500 oder kleiner und meist 0,450 oder kleiner. Der Wert der Doppelbrechung der erfindungsgemäßen Medien wird hier in der nematischen Phase bei einer Temperatur von 4° unterhalb des Klärpunkts gemessen.

Ist die achirale Komponente des Steuermediums (Komponente (B)) bei dieser Temperatur nicht stabil nematisch oder zumindest bis zu dieser Temperatur in der nematischen Phase unterkühlbar, so wird, ebenso wie bei Einzelsubstanzen und Vormischungen, die Doppelbrechung einer Mischung aus dem Medium und der nematischen Mischung ZLI-4792 der Merck KGaA bei 20°C bestimmt und aus der Änderung gegenüber der Mischung ZLI-4792 auf den Wert des reinen Mediums extrapoliert. Es werden 10% des Mediums und 90% der Mischung ZLI-4792 verwendet. Wenn die Löslichkeit des Mediums nicht ausreicht wird auf eine Konzentration von 5% ausgewichen und falls die Löslichkeit dann immer noch nicht ausreicht wird als Wirtsmischung die nematische Mischung MLC-6828 der Fa. Merck KGaA verwendet, wie unten weiter beschrieben, und nötigenfalls auch hier die Konzentration von 10% auf 5% verringert. Das Verfahren der Extrapolation der Werte aus der Wirtsmischung wird für alle entsprechenden Eigenschaften der Medien verwendet, sofern diese bei der entsprechenden Temperatur nicht in der nematischen Phase untersucht werden können.

Die Komponente (B) der mesogenen Medien gemäß der vorliegenden Erfindung weist bevorzugt ein Dipolmoment von 4 Debye oder mehr, besonders bevorzugt von 6 Debye oder mehr und besonders bevorzugt von 8 Debye oder mehr auf.

Für die Lichtsteuerelemente gemäß der vorliegenden Erfindung können sowohl mesogene Steuermedien verwendet werden, deren Komponente (B) in der Mesophase eine positive dielektrische Anisotropie ($\Delta\varepsilon$) aufweisen, als auch solche deren Komponente (B) in der Mesophase eine negative dielektrische Anisotropie aufweisen. Bevorzugt werden mesogene Steuermedien verwendet, deren Komponente (B) in der Mesophase eine positive dielektrische Anisotropie ($\Delta\varepsilon$) aufweisen.

Wenn die Komponente (B) der mesogenen Steuermedien eine positive dielektrische Anisotropie hat, hat diese bei 1 kHz und einer Temperatur von 4° unterhalb des Klärpunkts, bevorzugt in der nematischen Phase, einen Wert von bevorzugt 15 oder mehr, besonders bevorzugt 30 oder mehr und ganz besonders bevorzugt 45 oder mehr. Hat die Komponente (B) des Mediums keine nematische Phase oder liegt sie bei einer Temperatur von 4° unterhalb des Klärpunkts nicht in der nematischen Phase vor, so wird ihre dielektrische Anisotropie, wie die Doppelbrechung, durch Extrapolation der Werte einer entsprechenden Wirtsmischung ermittelt.

Wenn Komponente (B) des mesogenen Steuermediens eine negative dielektrische Anisotropie hat, beträgt diese bevorzugt -5 oder weniger, besonders bevorzugt -7 oder weniger und ganz besonders bevorzugt -10 oder weniger. Für dielektrisch negative Komponenten (B), bzw. die dielektrisch negativen Bestandteile der Komponenten (B) der Steuermedien, wird, sofern nötig, die nematische Mischung ZLI-3086 der Merck KGaA als Wirtsmischung verwendet.

Besonders bevorzugt sind Steuermedien mit einer Komponente (B) einer positiven dielektrischen Anisotropie.

Bevorzugt weisen die erfindungsgemäßen Steuermedien in den erfindungsgemäßen Lichtsteuerelementen bei einer Temperatur von 2 Grad oberhalb der charakteristischen Temperatur eine charakteristische Spannung $V_{10}$ im Bereich von 5 V bis 150 V, bevorzugt von 15 V bis 110 V, besonders bevorzugt von 20 V bis 90 V und ganz besonders bevorzugt von 30 V bis 80 V auf. Die charakteristischen Spannungen werden in dieser Anmeldungen für Zellen mit einer Breite der Elektroden von 10 $\mu$m und einem Elektrodenabstand von 10 $\mu$m angegeben, sofern nicht ausdrücklich etwas anderes angegeben ist. Besonders bevorzugt haben die erfindungsgemäßen Steuermedien in den erfindungsgemäßen Lichtsteuerelementen bei einer Temperatur von 2 Grad oberhalb der charakteristischen Temperatur eine charakteristische Spannung $V_{10}$ von 105 V oder weniger, bevorzugt von 95 V oder weniger, besonders bevorzugt von 75 V oder weniger und ganz besonders bevorzugt von 50 V oder weniger.

In einer bevorzugten Ausführungsform der vorliegenden Erfindung weisen die erfindungsgemäßen Steuermedien in den erfindungsgemäßen Lichtsteuerelementen bei einer Temperatur von 2 Grad oberhalb der charakteristischen Temperatur eine charakteristische Spannung $V_{10}$ im Bereich von 2 V, bevorzugt von 5 V, bis 110 V, besonders bevorzugt von 10 V bis 90 V und ganz besonders bevorzugt von 10 V bis 80 V auf.

In einer weiteren bevorzugten Ausführungsform der vorliegenden Erfindung weisen die erfindungsgemäßen Steuermedien in den erfindungsgemäßen Lichtsteuerelementen bei einer Temperatur von 2 Grad oberhalb der charakteristischen Temperatur eine charakteristische Spannung $V_{10}$ im Bereich von 2 V bis 100 V, bevorzugt von 3 V bis 50 V, besonders bevorzugt von 4 V bis 30 V, ganz besonders bevorzugt von 5 V bis 20 V und am meisten bevorzugt von 5 V bzw. 7 V bis 15 V auf.

In dieser Anmeldung wird eine charakteristische Temperatur ($T_{char.}$) wie folgt definiert:

wenn die charakteristische Spannung als Funktion der Temperatur ein Minimum durchläuft, wird die Temperatur dieses Minimumms als charakteristische Temperatur bezeichnet,

wenn die charakteristische Spannung als Funktion der Temperatur kein Minimum aufweist, das Steuermedium aber eine oder mehrere Blaue Phasen aufweist, wird die Temperatur des Übergangs in die Blaue Phase, beim Auftreten mehrerer Blauer Phasen die Temperatur des Übergangs in die mit steigender Temperatur zuerst auftretende Blaue Phase, als charakteristische Temperatur bezeichnet,

wenn die charakteristische Spannung als Funktion der Temperatur kein Minimum aufweist und das Steuermedium auch keine Blaue Phase aufweist, wird die Temperatur des Übergangs in die isotrope Phase als charakteristische Temperatur bezeichnet.

Bevorzugt weisen die erfindungsgemäßen Steuermedien in den erfindungsgemäßen Lichtsteuerelementen eine geringe Temperaturabhängigkeit der charakteristischen Spannungen ($V_X$), beispielsweise $V_{10}$, $V_{50}$, $V_{70}$ und $V_{90}$ auf. Die Temperaturabhängigkeit ($dV_X/dT$) der charakteristischen Spannungen ($V_X$) wird bevorzugt durch ihre relativen Werte ($dV^*_X/dT$) beschrieben. Hierzu wird sie auf die jeweilige charakteristische Spannung bei einer Referenztemperatur bezogen. Die Referenztemperatur ($T_{ref.}$) ist die Temperatur von 2 Grad oberhalb der charakteristischen Temperatur des jeweiligen Steuermediums.

$$dV^*_X/dT = dV_X(T_{ref.})/dT \; / \; V_X(T_{ref.}) \qquad (5)$$

worin

$V_X$: die Spannung bei der X% relativem Kontrast erreicht wird,
$T$ die Temperatur,
$T_{ref.}$ die Bezugstemperatur $T_{ref.} = T_{char.} + 2^\circ$ (siehe Text) und
$T_{char.}$ charakteristische Temperatur

bedeuten.

Bevorzugt wird die relative Temperaturabhängigkeit der charakteristischen Spannungen, bevorzugt von $V_{70}$, über einen bestimmten Temperaturbereich beginnend unterhalb bis oberhalb der gewünschten Betriebstemperatur angegeben. Bevorzugt liegt die Betriebstemperatur in einem Bereich von 0,5° bis 60°, besonders bevorzugt von 1° bis 50° und ganz besonders bevorzugt von 1° bis 30° oberhalb der charakteristischen Temperatur des Steuermediums in der Zelle. Zum Vergleich der Temperaturabhängigkeiten der charakteristischen Spannungen, wird in dieser Anmeldung die Temperaturabhängigkeit über einen Bereich von (ca.) einem Grad unterhalb bis (ca.) einem Grad oberhalb einer Temperatur von zwei (ca.) Grad oberhalb der charakteristischen Temperatur des Steuermediums angegeben. Die Temperaturabhängigkeit wird als Quotient der Differenz der Spannungswerte bei den extremen Temperaturen (Endtemperaturen bzw. Grenztemperaturen) und der Differenz dieser Temperaturen angegeben und dem Mittelwert dieser Temperaturen zugeordnet, sofern nicht explizit anders angegeben.

Der Betrag und bevorzugt der Wert der Temperaturabhängigkeit der charakteristischen Spannungen, bevorzugt von $V_{70}$, in diesem Temperaturbereich liegt bevorzugt im Bereich von 0%/Grad bis 30%/Grad, bevorzugt im Bereich von 0%/Grad bis 23%/Grad, bevorzugt bis 22%/Grad, bevorzugt bis 20%/Grad, besonders bevorzugt im Bereich von 0%/Grad bis 15 %/Grad, bevorzugt bis 12%/Grad und ganz besonders bevorzugt von 0 %/Grad bis 7%/Grad.

Die erfindungsgemäßen Lichtsteuerelemente haben bevorzugt eine geringe Temperaturabhängigkeit über einen weiten Bereich von Betriebstemperaturen.

Besonders bevorzugt gelten die genannten Grenzen für die Temperaturabhängigkeit über einen Temperaturbereich von +/-1 ˚ oder mehr um die Betriebstemperatur im Bereich der Betriebstemperaturen ausgewählt aus dem Bereich von 2˚ oberhalb der charakteristischen Temperatur des Steuermediums bis 10˚ oberhalb charakteristischen Temperatur, besonders bevorzugt über einen Temperaturbereich von +/-4˚ um die Temperatur von 5˚ oberhalb der charakteristischen Temperatur, insbesondere bevorzugt über einen Temperaturbereich von +/-1˚ oder mehr um die Betriebstemperatur im Bereich der Betriebstemperaturen ausgewählt aus dem Bereich von 2˚ oberhalb der charakteristischen Temperatur bis 20˚ oberhalb der charakteristischen Temperatur, ganz besonders bevorzugt über einen Temperaturbereich von +/-4˚, bevorzugt +/-9˚ um die Temperatur von 10˚ oberhalb der charakteristischen Temperatur.

Die in den erfindungsgemäßen Lichtsteuerelementen verwendeten Steuermedien haben bevorzugt eine Blaue Phase, die sich über einen Temperaturbereich mit einer Breite von 5 Grad oder mehr, bevorzugt von 10 Grad oder mehr, besonders bevorzugt von 20 Grad oder mehr und ganz besonders bevorzugt von 30 Grad oder mehr erstreckt.

In einer besonders bevorzugten Ausführungsform der vorliegenden Erfindung haben die in den erfindungsgemäßen Lichtsteuerelementen verwendeten Steuermedien bevorzugt eine Blaue Phase, die sich über einen Temperaturbereich mit einer Breite von 15 Grad oder mehr, besonders bevorzugt von 30 Grad oder mehr und ganz besonders bevorzugt von 40 Grad oder mehr erstreckt.

Bevorzugt weisen die Steuermedien einen Betriebstemperaturbereich, bevorzugt eine Blaue Phase im Temperaturbereich von 20˚C oder weniger bis 35˚C oder mehr, besonders bevorzugt im Temperaturbereich von 10˚C oder weniger bis 50˚C oder mehr, insbesondere bevorzugt im Temperaturbereich von 0˚C oder weniger bis 60˚C oder mehr, und ganz besonders bevorzugt im Temperaturbereich von -30˚C oder weniger bis 80˚C oder mehr auf.

Die Breite des Temperaturbereichs der Blaue Phase wird wie folgt bestimmt, sofern nicht ausdrücklich anders angegeben.

Zunächst wird die HTP der einzelnen Verbindungen der chiralen Komponente (A), bzw. der gesamten chiralen Komponente (A) in der kommerziell erhältlichen Flüssigkristallmischung MLC-6828 der Fa. Merck KGaA bestimmt.

Zur generellen Überprüfung des Auftretens einer Blauen Phase wird dann eine Mischung aus der chiralen Komponente (A) in der (speziell für diesen Zweck entwickelten) achiralen Flüssigkristallmischung AM-3 hergestellt. Zusammensetzung und Eigenschaften dieser Mischung sind bei Beispiel 4 angeben. Dabei wird die Konzentration der Komponente (A) in der achiralen Mischung so gewählt, dass der cholesterische Pitch der resultierenden Mischung im Bereich von 180 nm bis 800 nm, bevorzugt im Bereich von 400 nm bis 600 nm und besonders bevorzugt bei 550 nm liegt. Ein Tropfen der so erhaltenen Mischung wird auf einem Objektträger mit einem Glasplättchen abgedeckt und unter dem Mikroskop untersucht.

Bei einer Schichtdicke von ca. 100 μm oder mehr ist die Blaue Phase direkt zu beobachten (siehe hierzu auch Gray und Goodby).

Als nächstes kann dann die Mischung des zu untersuchenden Steuermediums hergestellt werden. Hierzu wird die chirale Komponente (A) in der gewünschten Konzentration in der achiralen Komponente (B) gelöst. Alternativ zu dem oben beschriebenen Verfahren der Bestimmung der Lage und der Breite der Blauen Phase kann auch Ausgehend von der Mischung aus den Komponenten (A) und (B) ausgegangen werden. Hierzu kann der cholesterische Pitch gegebenenfalls so weit vergrößert werden, bis die Blaue Phase der Beobachtung im Mikroskop zugänglich ist. Hierzu stehen die drei folgenden Möglichkeiten zur Verfügung die in der Reihenfolge ihrer Bevorzugung angegeben werden:

erstens die Konzentration der Komponente (A) wird verringert, z.B. durch Zugabe von Komponente (B), bis der Wert des cholesterischen Pitch, der oben, im Zusammenhang mit dem Verfahren mit der Referenzmischung AM-3 beschriebenen Verfahren, angegeben ist, erreicht ist;

zweitens die Kompensation der HTP der Komponente (A) wird durch Einsatz einer oder mehrerer chiraler Verbindungen mit zu dem der Komponente (A) entgegengesetzten Vorzeichen der HTP bis zum Erreichen des gewünschten Pitchs und

drittens Einsatz der, der Verbindung oder den Verbindungen der Komponente (A) entsprechenden Enantiomeren zur Kompensation der HTP der Komponente (A) in der Konzentration, die zum Erreichen des gewünschten Pitchs führt.

Die Mischung aus Komponente (A) und (B) wird als Steuermedium in eine Zelle mit einer Schichtdicke von 20 μm oder weniger, bevorzugt ca. 10 μm gefüllt und bezüglich ihrer elektrooptischen Eigenschaften untersucht.

Das Phasenverhalten des Steuermediums wird dann in der elektrooptischen Testzelle untersucht. Hierzu wird die Temperaturabhängigkeit der charakteristischen Spannungen, bevorzugt von $V_{10}$, des Steuermediums in der Referenzzelle gemäß der vorliegenden Erfindung untersucht. Das Auftreten der Blauen Phase im Lichtsteuerelement ist am Einsetzen der optischen Isotropie mit steigender Temperatur zu erkennen. Der elektrooptische Effekt tritt bei der Umwandlungstemperatur auf, bei der die Umwandlung in eine optisch isotrope Phase stattfindet, ähnlich wie in DE 102 17 273.0 beschrieben. Allerdings liegen die Medien gemäß der vorliegenden Erfindung dann in der Blauen Phase vor und

nicht in der isotropen Phase, wie die in DE 102 17 273.0 beschriebenen Medien. Der elektrooptische Effekt in den erfindungsgemäßen Lichtsteuerelementen ist wie folgt charakterisiert. Die Zellen sind bei gekreuzten Polarisatoren (völlig) dunkel. Dies gilt insbesondere wenn der cholesterische Pitch viel kleiner ist als die Wellenlänge des verwendeten Lichts. Der Kontrast des erfindungsgemäßen elektrooptischen Effekts weist so gut wie keine Blickwinkelabhängigkeit auf und der Effekt zeigt keine Bistabilität.

Mit weiter steigender Temperatur nehmen die charakteristischen Spannungen in der Regel mit steigender Temperatur leicht zu. Dieser Effekt ist über den gesamten Bereich der Blauen Phase zu beobachten. Auch nach Überschreiten der Umwandlungstemperatur von der Blauen Phase in die isotrope Phase kann der elektrooptische Effekt beobachtet werden. Somit ist der Betriebstemperaturbereich der erfindungsgemäßen Lichtsteuerelemente in der Regel größer als der Bereich, in dem bei den Steuermedien die Blaue Phase auftritt. Bei Temperaturen oberhalb des Phasenübergangs von der Blauen Phase in die isotrope Phase ist jedoch der Gradient des Anstiegs der charakteristischen Spannungen mit der Temperatur deutlich größer als in der Blauen Phase. Durch Interpolation aus den jeweiligen (oft nahezu linearen) Verläufen der charakteristischen Spannungen mit der Temperatur unterhalb bzw. oberhalb dieser Übergangstemperatur kann die Übergangstemperatur von der Blauen in die isotrope Phase erhalten werden.

Der Temperaturbereich über den bei dem Steuermedium die Blaue Phase auftritt, kann außerdem mittels DSC (Englisch "differential scannning calorimetry") bestätigt werden.

Bei Steuermedien bei denen die charakteristische Spannung des elektrooptischen Effekts in den erfindungsgemäßen Zellen ein Minimum durchläuft, ist in der Regel keine Unterscheidung von zwei Bereichen mit unterschiedlicher Steigung des Temperaturverlaufs (zunächst flach, dann steiler) zu beobachten. In diesen Fällen wird in der vorliegenden Anmeldung die Breite der Blauen Phase wie folgt definiert. Als Temperatur des oberen Endes des Phasenbereichs wird die Temperatur definiert, bei der die charakteristische Spannung den doppelten Wert des Minimums der charakteristischen Spannung annimmt. Als Temperatur des unteren Endes des Phasenbereichs wird die Temperatur definiert, bei der die charakteristische Spannung ebenfalls den doppelten Wert des Minimums der charakteristischen Spannung annimmt. Sofern jedoch dieser Wert bei Temperaturen unterhalb der Temperatur des Minimums nicht erreicht wird, wird die Temperatur, bei der der elektrooptische Effekt mit steigender Temperatur zuerst auftritt, als Temperatur des unteren Endes des Phasenbereichs definiert.

Bevorzugt zeigt der elektrooptische Effekt bei Betrachtung unter dem bevorzugten Blickwinkel, bevorzugt über einen Blickwinkelbereich der sich horizontal und vertikal bis zu 30° oder mehr, bevorzugt bis zu 40° oder mehr, besonders bevorzugt bis zu 45° oder mehr und ganz besonders bis zu 60° oder mehr erstreckt, ein Kontrastverhältnis von 5:1 oder mehr, bevorzugt von 10:1 oder mehr und ganz besonders bevorzugt von 15:1 oder mehr.

Bevorzugt zeigt der elektrooptische Effekt eine Schaltzeit von 15 ms oder weniger, bevorzugt von 10 ms oder weniger, besonders bevorzugt von 5 ms oder weniger und ganz besonders bevorzugt von 3 ms oder weniger. Dabei werden die Schaltzeiten, wie in der gesamten vorliegenden Anmeldung, wenn nicht explizit anders angegeben unter den folgenden Bedingungen bestimmt. Bei der Bestimmung der Einschaltzeit ($\tau_{on}$) wird der Wert der Rechteckspannung von $V_0$ auf $V_{100}$ des Schaltelements erhöht und die Zeit bestimmt, die vergeht für die Änderung der Transmission bzw. des relativen Kontrasts von 10% auf 90%. Die Ausschaltzeit ($\tau_{off}$) wird für Schalten von 90% auf 10% relativen Kontrast bei Verringerung der Spannung von $V_{100}$ auf $V_0$ angegeben.

Wenn sich der Klärpunkt des Steuermediums in der Zelle von dem im Bulk unterscheidet, werden die charakteristischen Spannungen bei den Steuermedien die keine Blaue Phase aufweisen und bei denen die charakteristischen Spannungen mit steigender Temperatur auch kein Minimum durchlaufen, wird die Temperatur auf den Klärpunkt in der Zelle bezogen.

In dem Fall, dass das mesogene Steuermedium bei der Bestimmung in einer Kapillare im Klärpunktsmeßgerät (Fa. Mettler) keinen scharfen Klärpunkt aufweist, sondern einen relativ breiten Klärbereich, der typischer Weise einige Grad breit ist, wird hier, abweichend von der üblichen Definition, nicht der Beginn des Klärens, sondern das Ende des Klärbereichs als Klärpunkt bezeichnet.

Die mesogenen Medien gemäß der vorliegenden Erfindung bestehen bevorzugt aus zwei bis 40 Verbindungen, besonders bevorzugt aus fünf bis 30 Verbindungen und ganz besonders bevorzugt aus sieben bis 25 Verbindungen.

Die chiralen Verbindungen der chiralen Komponete (A) weisen vorzugsweise eine hohe HTP auf. Sie werden auch chirale Dotierstoffe genannt, da sie in der Regel in relativ geringen Konzentrationen zu mesogenen Basismischungen zugegeben werden. Bevorzugt weisen sie eine gute Löslichkeit in der achiralen Komponente (B) auf. Sie beeinträchtigen die mesogenen, bzw. flüssigkristallinen Eigenschaften des mesogenen Mediums nicht oder nur in geringem Maße, solange der cholesterische Pitch kleine Werte hat, die viel kleiner sind, als die Wellenlänge des Lichts. Wenn der cholesterische Pitch in der Größenordnung der Wellenlänge des Lichts liegt induzieren sie jedoch eine Blaue Phase, mit einer gänzlich anderen Struktur als der der cholesterischen Phase. Werden zwei oder mehr chirale Verbindungen eingesetzt, können sie den gleichen oder den entgegengesetzten Drehsinn und gleiche oder entgegengesetzte Temperaturabhängigkeit der Verdrillung aufweisen.

Besonders bevorzugt sind chirale Verbindungen mit einer HTP in der kommerziellem Flüssigkristallmischung MLC-6828 der Fa. Merck KGaA von 20 $\mu m^{-1}$ oder mehr, insbesondere von 40 $\mu m^{-1}$ oder mehr, besonders bevorzugt

von 70 $\mu m^{-1}$ oder mehr.

In einer bevorzugten Ausführungsform der vorliegenden Erfindung besteht die chirale Komponente (A) aus zwei oder mehr chiralen Verbindungen, die alle das gleiche Vorzeichen der HTP haben.

Die Temperaturabhängigkeit der HTP der einzelnen Verbindungen kann groß oder klein sein. Die Temperaturabhängigkeit des Pitchs des Mediums kann kompensiert werden indem Verbindungen mit unterschiedlicher Temperaturabhängigkeit der HTP in entsprechenden Verhältnissen gemischt werden.

Für die optisch aktive Komponente stehen dem Fachmann eine Vielzahl zum Teil kommerziell erhältlicher chiraler Dotierstoffe zur Verfügung, wie z.B. Cholesterylnonanoat, R/S-811, R/S-1011, R/S-2011, R/S-3011, R/S-4011, B(OC)2C*H-C-3 oder CB15 (alle Merck KGaA, Darmstadt).

Besonders geeignete Dotierstoffe sind Verbindungen, die einen oder mehrere chirale Reste und eine oder mehrere mesogene Gruppen, oder eine oder mehrere aromatische oder alicyclische Gruppen, die mit dem chiralen Rest eine mesogene Gruppe bilden, aufweisen.

Geeignete chirale Reste sind beispielsweise chirale verzweigte Kohlenwasserstoffreste, chirale Ethandiole, Binaphthole oder Dioxolane, ferner ein- oder mehrbindige chirale Reste ausgewählt aus der Gruppe enthaltend Zukkerderivate, Zuckeralkohole, Zuckersäuren, Milchsäuren, chirale substituierte Glykole, Steroidderivate, Terpenderivate, Aminosäuren oder Sequenzen von wenigen, vorzugsweise 1-5, Aminosäuren.

Bevorzugte chirale Reste sind Zuckerderivate wie Glucose, Mannose, Galactose, Fructose, Arabinose, Dextrose; Zuckeralkohole wie beispielsweise Sorbitol, Mannitol, Iditol, Galactitol oder deren Anhydroderivate, insbesondere Dianhydrohexite wie Dianhydrosorbid (1,4:3,6-Dianhydro-D-sorbid, Isosorbid), Dianhydromannit (Isosorbit) oder Dianhydroidit (Isoidit); Zuckersäuren wie beispielsweise Gluconsäure, Gulonsäure, Ketogulonsäure; chirale substituierte Glykolreste wie beispielsweise Mono- oder Oligoethylen- oder propylenglykole, worin eine oder mehrere $CH_2$-Gruppen durch Alkyl oder Alkoxy substituiert sind; Aminosäuren wie beispielsweise Alanin, Valin, Phenylglycin oder Phenylalanin, oder Sequenzen von 1 bis 5 dieser Aminosäuren; Steroidderivate wie beispielsweise Cholesteryl- oder Cholsäurereste; Terpenderivate wie beispielsweise Menthyl, Neomenthyl, Campheyl, Pineyl, Terpineyl, Isolongifolyl, Fenchyl, Carreyl, Myrthenyl, Nopyl, Geraniyl, Linaloyl, Neryl, Citronellyl oder Dihydrocitronellyl.

Geeignete chirale Reste und mesogene chirale Verbindungen sind beispielsweise in DE 34 25 503, DE 35 34 777, DE 35 34 778, DE 35 34 779 und DE 35 34 780, DE 43 42 280, EP 01 038 941 und DE 195 41 820 beschrieben.

Besonders bevorzugt sind Dotierstoffe ausgewählt aus der Gruppe enthaltend Verbindungen der folgende Formeln A-I bis A-III.

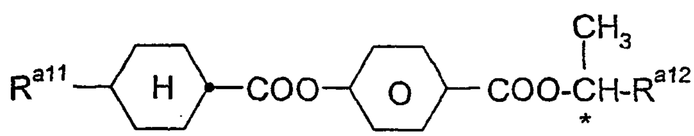

A-I

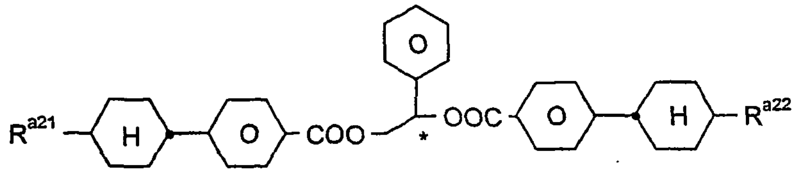

A-II

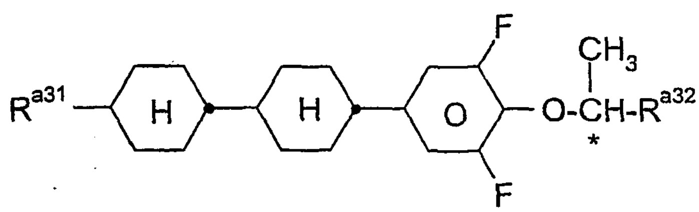

A-III

worin

$R^{a11}$ und $R^{a12}$, voneinander unabhängig, Alkyl, Oxaalkyl oder Alkenyl mit 2 bis 9, bevorzugt bis 7 C-Atomen und

$R^{a11}$ auch Methyl oder Alkoxy mit 1 bis 9 C-Atomen, bevorzugt beide Alkyl, bevorzugt n-Alkyl,

$R^{a21}$ und $R^{a22}$, voneinander unabhängig, Alkyl oder Alkoxy mit 1 bis 9, bevorzugt bis 7 C-Atomen Oxaalkyl, Alkenyl oder Alkenyloxy mit 2 bis 9, bevorzugt bis 7 C-Atomen, bevorzugt $R^{a21}$ $R^{a22}$, bevorzugt Alkyl, bevorzugt n-Alkyl,

$R^{a31}$ und $R^{a32}$, voneinander unabhängig, Alkyl, Oxaalkyl oder Alkenyl mit 2 bis 9, bevorzugt bis 7 C-Atomen und $R^{a11}$ auch Methyl oder Alkoxy mit 1 bis 9 C-Atomen, bevorzugt beide Alkyl, bevorzugt n-Alkyl,

Besonders bevorzugt sind Dotierstoffe ausgewählt aus der Gruppe enthaltend Verbindungen der folgende Formeln.

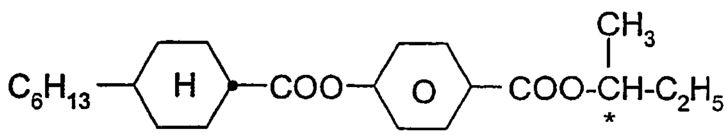

A-I-1

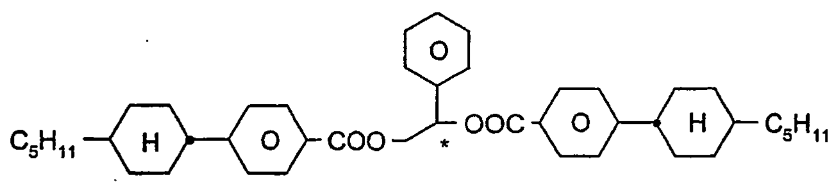

A-II-1

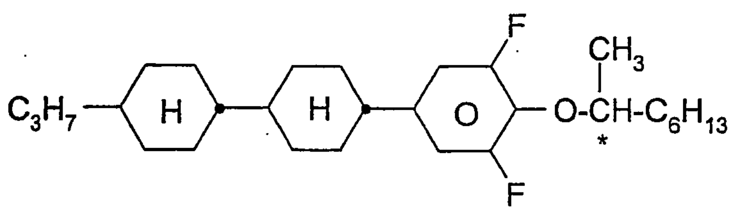

A-III-1

Weitere bevorzugte Dotierstoffe sind Derivate des Isosorbid, Isomannit oder Isoidit der folgenden Formel A-IV

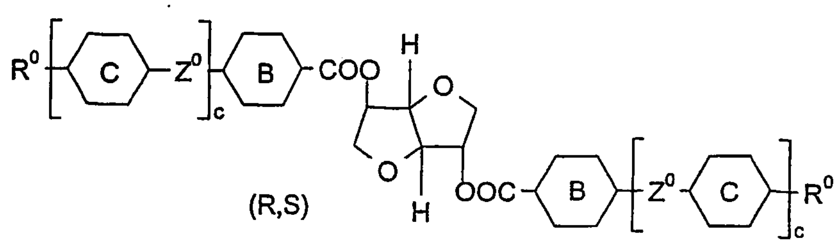

A-IV

worin die Gruppe

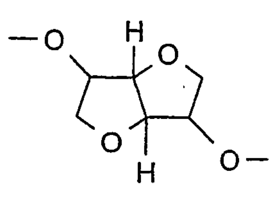

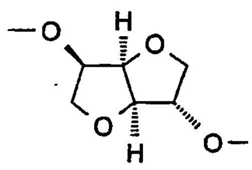

(Dianhydrosorbitol),

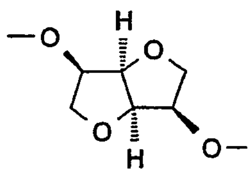

(Dianhydromannitol),

oder

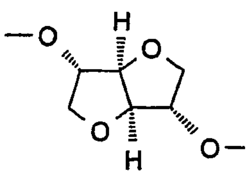

(Dianhydroiditol),

vorzugsweise Dianhydrosorbitol, bedeutet,
sowie chirale Ethandiole wie z.B. Diphenylethandiol (Hydrobenzoin), insbesondere mesogene Hydrobenzoinderivate der folgenden Formel A-V

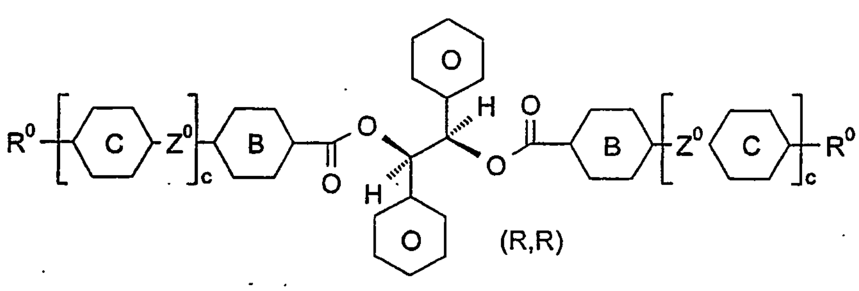

A-V

einschließlich der jeweils nicht gezeigten (R,S), (S,R), (R,R) und (S,S) Enantiomere,
worin

| | |
|---|---|
| B und C | jeweils unabhängig voneinander 1,4-Phenylen, welches auch durch L mono-, di- oder trisubstituiert sein kann, oder 1,4-Cyclohexylen, |
| L | H, F, Cl, CN oder optional halogeniertes Alkyl, Alkoxy, Alkylcarbonyl, Alkoxycarbonyl oder Alkoxycarbonyloxy mit 1-7 C-Atomen, |
| c | 0 oder 1, |
| $Z^0$ | -COO-, -OCO-, $-CH_2CH_2-$ oder eine Einfachbindung, und |
| $R^0$ | Alkyl, Alkoxy, Alkylcarbonyl, Alkoxycarbonyl oder Alkylcarbonyloxy mit 1-12 C-Atomen |

bedeuten.

Die Verbindungen der Formel A-IV sind in WO 98/00 428 beschrieben. Die Verbindungen der Formel A-V sind

in GB-A-2 328 207 beschrieben.

Ganz besonders bevorzugte Dotierstoffe sind chirale Binaphthylderivate wie in WO 02/94 805 beschrieben, chirale Binaphthol-Acetalderivate wie in WO 02/34 739 beschrieben, chirale TADDOL-Derivate wie in WO 02/06 265 beschrieben, sowie chirale Dotierstoffe mit mindestens einer fluorierten Brückengruppe und einer endständigen oder zentralen chiralen Gruppe wie in WO 02/06 196 und WO 02/06 195 beschrieben.

Besonders bevorzugt sind chirale Verbindungen der Formel A-VI

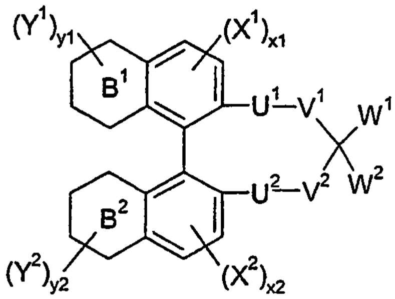

A-VI

worin

| | |
|---|---|
| $X^1$, $X^2$, $Y^1$ und $Y^2$, | jeweils unabhängig voneinander, F, Cl, Br, I, CN, SCN, $SF_5$, geradkettiges oder verzweigtes Alkyl mit 1 bis 25 C-Atomen, weiches einfach oder mehrfach durch F, Cl, Br, I oder CN substituiert sein kann, worin auch eine oder mehrere nicht benachbarte $CH_2$-Gruppen, jeweils unabhängig voneinander, durch -O-, -S-, -NH-, $NR^0$-, -CO-, -COO-, -OCO-, -OCOO-, -S-CO-, -CO-S-, -CH=CH- oder -C≡C- so ersetzt sein können, dass O und/ oder S-Atome nicht direkt miteinander verbunden sind, eine polymerisierbare Gruppe oder Cycloalkyl oder Aryl mit bis zu 20 C-Atomen die optional einfach oder mehrfach durch Halogen, bevorzugt F oder durch eine polymerisierbare Gruppe substituiert sein kann, |
| $R^0$ | H oder Alkyl mit 1 bis 4 C-Atomen, |
| $x^1$ und $x^2$, | jeweils unabhängig voneinander, 0, 1, oder 2, |
| $y^1$ und $y^2$, | jeweils unabhängig voneinander, 0, 1, 2, 3, oder 4, |
| $B^1$ und $B^2$, | jeweils unabhängig voneinander, einen aromatischen oder einen teilweise oder ganz gesättigten aliphatischen sechsgliedrigen Ring, worin eine oder mehrere CH-Gruppen durch N-Atome und eine oder mehrere, nicht benachbarte $CH_2$-Gruppen durch O und/oder S, |
| $W^1$ und $W^2$, | jeweils unabhängig voneinander, $-Z^1-A^1-(Z^2-A^2)_m-R$, einer von beiden alternativ auch $R^1$ oder $A^3$, jedoch nicht beide gleichzeitig H, oder |

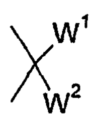

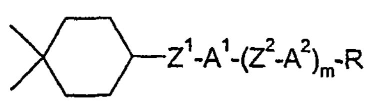

oder

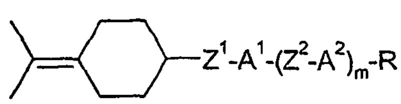

,

| | |
|---|---|
| $U^1$ und $U^2$, | jeweils unabhängig voneinander, $CH_2$, O, S, CO, oder CS, |

$V^1$ und $V^2$, jeweils unabhängig voneinander, $(CH_2)_n$, worin eine bis vier nicht benachbarte $CH_2$-Gruppen durch O und/oder S ersetzt sein können, und eine von $V^1$ und $V^2$, und im Falle, dass

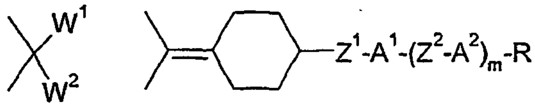

bedeutet, beide eine oder Einfachbindung,

$Z^1$ und $Z^2$, jeweils unabhängig voneinander, -O-, -S-, -CO-, -COO-, -OCO-, -O-COO-, -CO-$NR^0$-, -$NR^0$-CO-, -O-$CH_2$-, -$CH_2$-O-, -S-$CH_2$-, -$CH_2$-S-, -$CF_2$-O-, -O-$CF_2$-, -$CF_2$-S-, -S-$CF_2$-, -$CH_2$-$CH_2$-, -$CF_2$-$CH_2$-, -$CH_2$-$CF_2$-, -$CF_2$-$CF_2$-, -CH=N-, -N=CH-, -N=N-, -CH=CH-, -CF=CH-, -CH=CF-, -CF=CF-, -C≡C-, eine Kombination von zwei dieser Gruppen, wobei keine zwei O und/oder S und/oder N-Atome direkt aneinander gebunden sind, bevorzugt -CH=CH-COO-, oder -COO-CH=CH-, oder eine Einfachbindung,

$A^1$, $A^2$ und $A^3$, jeweils unabhängig voneinander, 1,4-Phenylen, worin eine oder zwei nicht benachbarte CH-Gruppen durch N ersetzt sein können, 1,4-Cyclohexylen, worin eine oder zwei nicht benachbarte $CH_2$-Gruppen durch O und/oder S ersetzt sein können, 1,3-Dioxolan-4,5-diyl, 1,4-Cyclohexenylen, 1,4-Bicyclo-(2,2,2)-oktylen, Piperidin-1,4-diyl, Haphthalin-2,6-diyl, Dekahydronaphthalin-2,6-diyl oder 1,2,3,4-Tetrahydronaphthalin-2,6-diyl, wobei jede dieser Gruppen ein oder mehrfach durch L substituiert sein kann, und außerdem $A^1$ eine Einfachbindung,

L ein Halogenatom, bevorzugt F, CN, $NO_2$, Alkyl, Alkoxy, Alkylcarbonyl, Alkoxycarbonyl oder Alkoxycarbonyloxy mit 1-7 C-Atomen, worin ein oder mehrere H-Atome durch F oder Cl ersetzt sein können,

m in jedem Fall unabhängig 0, 1, 2 oder 3 und

R und $R^1$, jeweils unabhängig voneinander, H, F, Cl, Br, I, CN, SCN, $SF_5$, geradkettiges oder verzweigtes Alkyl mit 1 bzw. 3 bis 25 C-Atomen, welches optional einfach oder mehrfach durch F, Cl, Br, I oder CN substituiert sein kann, uns worin eine oder mehrere nichtbenachbarte $CH_2$-Gruppen durch -O-, -S-, -NH-, -$NR^0$-, -CO-, -COO-, -OCO-, -O-COO-, -S-CO-, -CO-S-, -CH=CH- oder -C=C- ersetzt sein können, wobei keine zwei O und/oder S Atome direkt miteinander verbunden sind oder eine polymerisierbare Gruppe

bedeuten.

Besonders bevorzugt sind chirale Binaphthylderivate der Formel A-VI-1

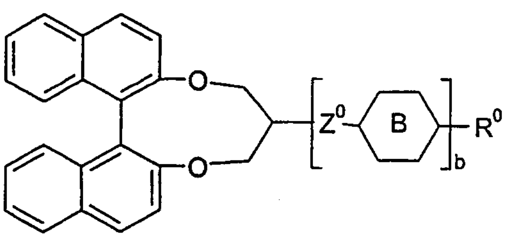

A-VI-1

insbesondere solche ausgewählt aus folgenden Formeln A-VI-1a bis A-VI-1c

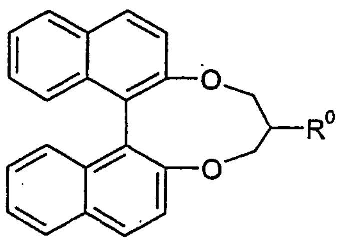

A-VI-1a

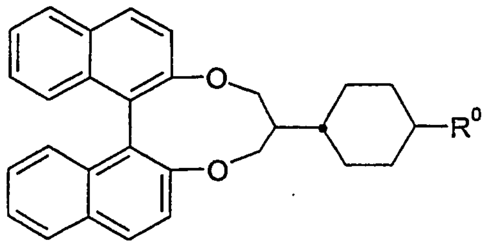

A-VI-1b

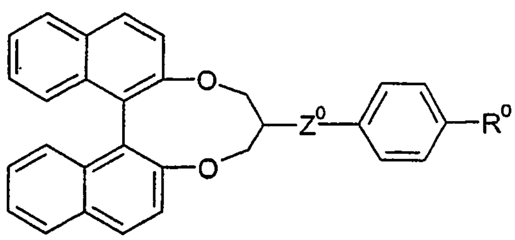

A-VI-1c

worin B, $R^0$ und $Z^0$ die bei Formel A-IV angegebene Bedeutung haben und b 0, 1 oder 2 ist, und $Z^0$ insbesondere -OCO- oder eine Einfachbindung bedeutet.

Besonders bevorzugt sind ferner chirale Binaphthylderivate der Formel A-VI-2

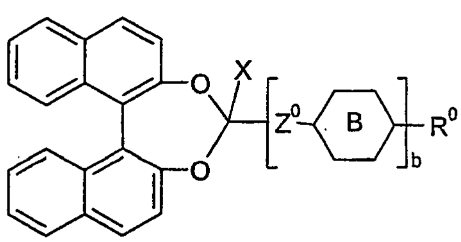

A-VI-2

insbesondere solche ausgewählt aus folgenden Formeln A-VI-2a bis A-VI-2f

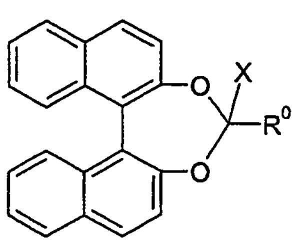

A-VI-2a

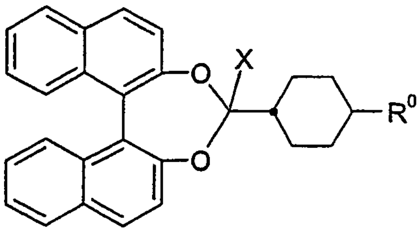

A-VI-2b

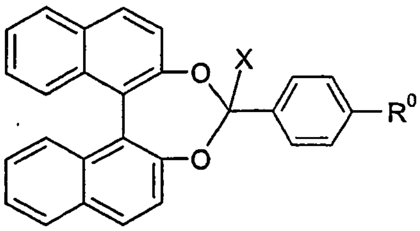

A-VI-2c

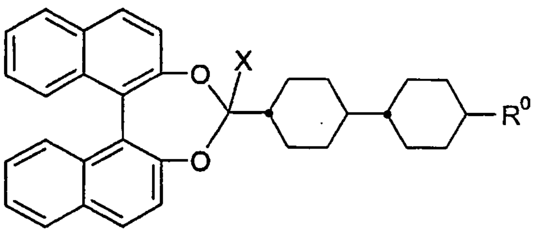

A-VI-2d

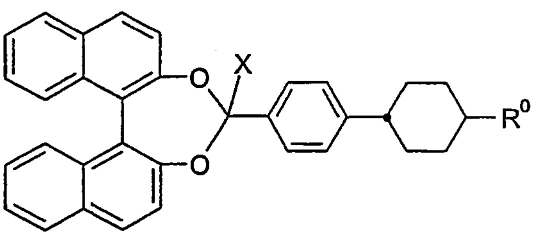

A-VI-2e

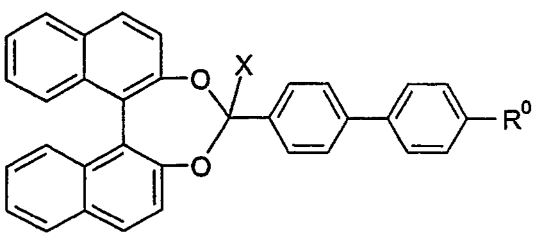

A-VI-2f

worin $R^0$ die bei Formel A-IV angegebene Bedeutung hat, X H, F Cl, CN oder $R^0$, bevorzugt F bedeutet.

Insbesondere die Dotierstoffe der oben genannten Formeln A-IV, A-V, und A-VI, insbesondere A-VI-1a bis A-VI-1c und A-VI-2a bis A-VI-2d, zeigen eine gute Löslichkeit in der achiralen Komponente, und induzieren eine cholesterische Struktur mit hoher Verdrillung und geringer Temperaturabhängigkeit der Helixganghöhe. Dadurch können selbst bei Verwendung nur eines dieser Dotierstoffe in geringen Mengen erfindungsgemäße Medien mit günstigen Eigenschaften erhalten werden, die sich vor allem für den Einsatz in Lichtsteuerelementen, bei denen das Steuermedium in der optisch isotropen Phase angesteuert wird, eignen.

Die achirale Komponente (B) der erfindungsgemäßen mesogenen Medien mit positiver dielektrischer Anisotropie gemäß der vorliegenden Erfindung enthält bevorzugt

- eine Komponente (B-A) bestehend aus einer oder mehreren Verbindungen mit einer sehr stark positiven dielektrischen Anisotropie von 30 oder mehr,

- optional eine Komponente (B-B) bestehend aus einer oder mehreren Verbindungen mit einer stark positiven dielektrischen Anisotropie von 10 bis < 30,

- optional eine Komponente (B-C) bestehend aus einer oder mehreren Verbindungen mit einer moderat positiven dielektrischen Anisotropie von > 1,5 bis < 10,

- optional eine Komponente (B-D) bestehend aus einer oder mehreren dielektrisch neutralen V(erbindungen mit einer dielektrischen Anisotropie im Bereich von -1,5 bis +1,5 und

- gegebenenfalls optional eine Komponente (B-E) bestehend aus einer oder mehreren Verbindungen mit einer negativen dielektrischen Anisotropie von weniger als -1,5.

Die Komponente (B-A) der Komponente (B) dieser Medien enthält eine oder mehrere Verbindungen der Formel I und besteht überwiegend und ganz besonders bevorzugt nahezu vollständig aus einer oder mehreren Verbindungen ausgewählt aus den Verbindungen der Formeln I und II,

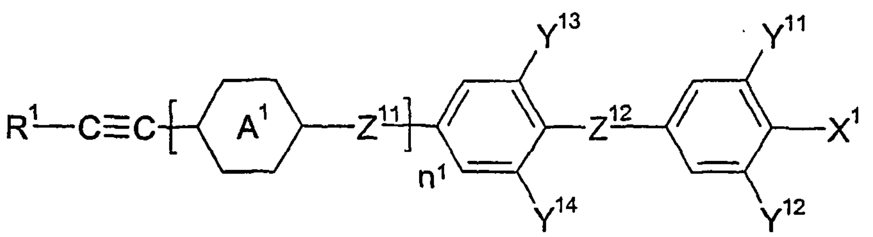
I

worin

$R^1$ Alkyl mit 1 bis 7 C-Atomen oder Oxaalkyl mit 2 bis 7 C-Atomen, jeweils bevorzugt mit 2 bis 5 C-Atomen, bevorzugt Alkyl,

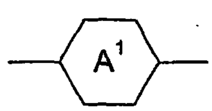

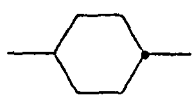
,
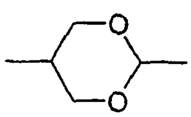
,
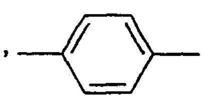
,

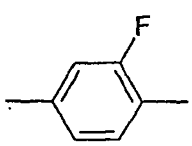
,
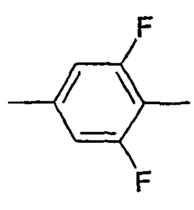
,
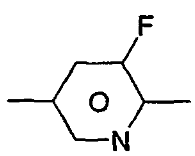
,

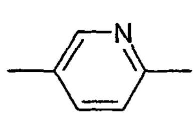
oder
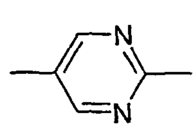

$Z^{11}$ und $Z^{12}$ jeweils voneinander unabhängig, eine Einfachbindung, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$ oder -C≡C- oder eine Kombination von zwei oder mehreren dieser Gruppen, bevorzugt mindestens eine dieser Gruppen -COO- oder $-CF_2-O-$,

$X^1$ F, $-OCF_3$, $-CF_3$, $-OCF_2H$, Cl, CN, -C≡C-CN oder NCS, bevorzugt CN, $-CF_3$, -C≡C-CN oder NCS, besonders bevorzugt CN oder $-CF_3$,

$Y^{11}$, $Y^{12}$, $Y^{13}$ und $Y^{14}$ H oder F und

$n^1$ 0 oder 1, bevorzugt 0 bedeuten,

wobei die Verbindungen der Formel I bevorzugt drei oder mehr, besonders bevorzugt vier oder mehr Fluoratome an den Phenylringen tragen, bevorzugt jedoch je Phenylring nicht mehr als zwei F-atome, besonders bevorzugt bedeuten $Y^{11}$, $Y^{12}$ und $Y^{13}$ F und bevorzugt bedeutet $Z^{12}$ -COO-

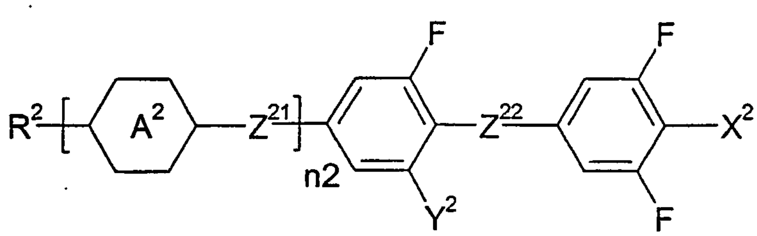

II

worin

$R^2$ Alkyl oder Alkoxy mit 1 bis 7 C-Atomen, Alkenyl, Alkenyloxy oder Oxaalkyl mit 2 bis 7 C-Atomen, bevorzugt Alkyl oder Alkoxy mit 1 bis 5 C-Atomen oder Alkenyl mit 2 bis 5 C-Atomen, bevorzugt Alkyl oder Alkoxy,

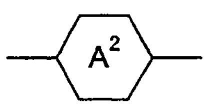

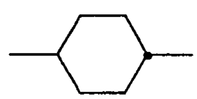 , 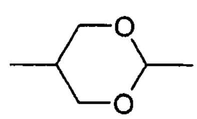 , 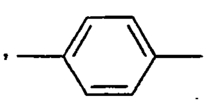 ,

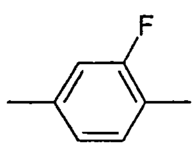 , 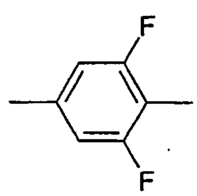 , 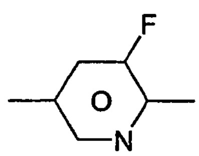 ,

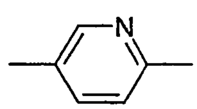 oder 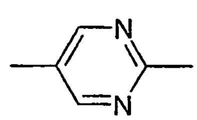

$Z^{21}$ und $Z^{22}$ jeweils voneinander unabhängig, eine Einfachbindung, -CO-O-, trans -CH=CH-, -CH=CF-, -CF=CH-, -CF=CF-,- CH=CH-CO-O-, =CF=CF-CO-O-, -CF=CH-CO-O-, -CH=CF-CO-O-, $-CF_2-O-$, $-O-CF_2-$ oder -C≡C- oder eine Kombination von zwei oder mehreren dieser Gruppen, bevorzugt mindestens eine dieser Gruppen -COO- oder $-CF_2-O-$,

$X^2$ F, $-OCF_3$, $-CF_3$, $-OCF_2H$, Cl, CN, -C≡C-CN oder NCS, bevorzugt CN, $-CF_3$, -C≡C-CN oder NCS, beson-

ders bevorzugt CN,

$Y^2$ H oder F und

$n^2$ 0 oder 1 bedeuten.

In einer bevorzugten Ausführungsform der vorliegenden Anmeldung enthält die Komponente (B) der Medien eine oder mehrere Verbindungen der Formel I und bestehen bevorzugt überwiegend und besonders bevorzugt nahezu vollständig aus einer oder mehreren Verbindungen der Formel I

Bevorzugt werden die Verbindungen der Formel I ausgewählt aus der Gruppe der Verbindungen I-1 und 1-2

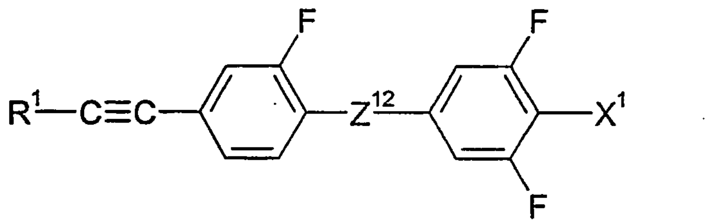

I-1

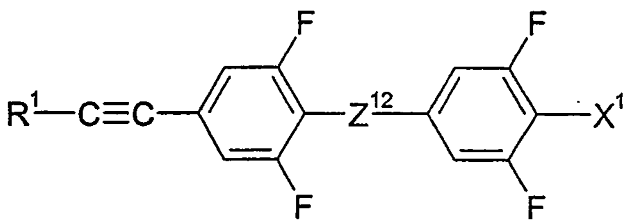

I-2

worin die Parameter die oben unter Formel I gegebene Bedeutung haben und bevorzugt

$R^1$ Alkyl mit 1 bis 7, bevorzugt mit 1 bis 5, bevorzugt bis 3 C-Atomen,

$Z^{12}$ -COO- oder $-CF_2$-O- und

$X^1$ CN, $-CF_3$ oder NCS, bevorzugt CN oder $-CF_3$

bedeuten.

Besonders bevorzugt enthalten die erfindungsgemäßen Medien eine oder mehrere Verbindungen der Formel I, bevorzugt der Formel I-1 und/oder der Formel I-2, worin $X^1$ $CF_3$ bedeutet.

Bevorzugt werden die Verbindungen der Formel II ausgewählt aus der Gruppe der Verbindungen II-1 bis II-7

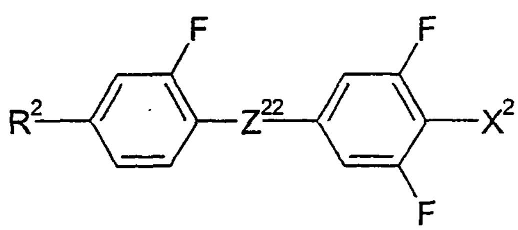

II-1

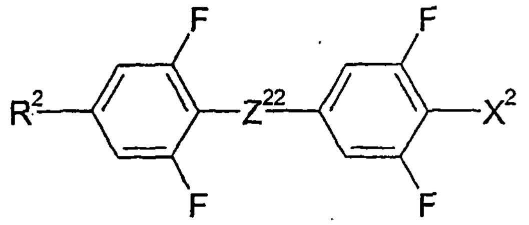

II-2

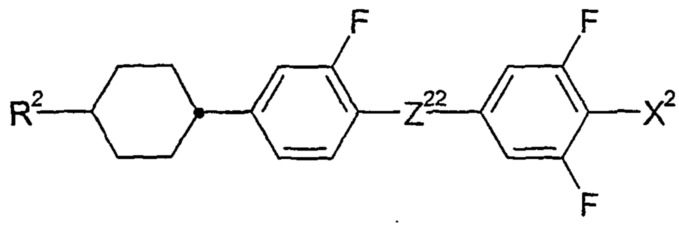

II-3

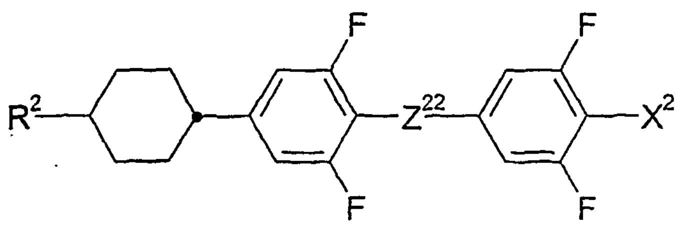

II-4

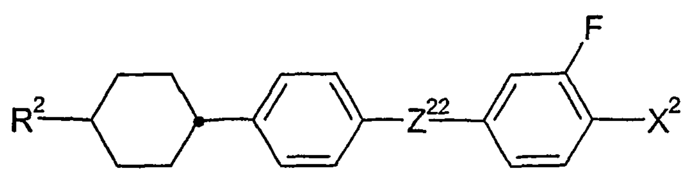

II-5

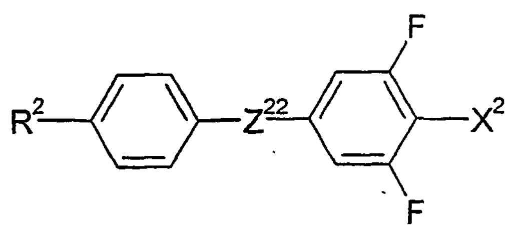

II-6

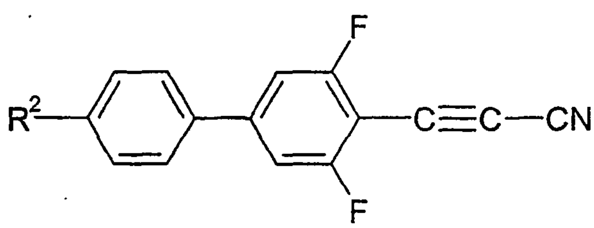

II-7

worin die Parameter die oben unter Formel II gegebene Bedeutung haben und bevorzugt

$R^2$ Alkyl oder Alkoxy mit 1 bis 7 C-Atomen, Alkenyl, Alkenyloxy oder Oxaalkyl mit 2 bis 7 C-Atomen, bevorzugt Alkyl oder Alkoxy mit 1 bis 5 C-Atomen,

$Z^{22}$ eine Einfachbindung, -CO-O- oder -$CF_2$-O- bevorzugt -COO- oder -$CF_2$-O-, bei Formel II-6 auch, besonders bevorzugt, -C≡C- und

$X^2$ CN, oder $CF_3$, bevorzugt $CF_3$, bei Formel II-6 besonders bevorzugt CN, oder $CF_3$, bevorzugt CN

bedeuten.

Bevorzugt enthalten die erfindungsgemäßen Medien eine oder mehrere Verbindungen ausgewählt aus der Gruppe der Verbindungen der Formeln II1 bis II-5, bevorzugt Verbindungen worin $Z^{22}$ -CO-O- oder -$CF_2$-O- bedeutet.

In einer bevorzugten Ausführungsform der vorliegenden Erfindung enthält die Komponente (B-A) der Komponente (B) der erfindungsgemäßen Medien bevorzugt eine oder mehrere Verbindungen der Formel II und besteht besonders bevorzugt überwiegend und ganz besonders bevorzugt nahezu vollständig aus einer oder mehreren Verbindungen der Formel II.

Für die Lichtsteuerelemente gemäß der vorliegenden Erfindung können sowohl mesogene Steuermedien verwendet werden, die in der Mesophase eine positive dielektrische Anisotropie ($\Delta\varepsilon$) aufweisen, als auch solche die eine negative dielektrische Anisotropie aufweisen. Bevorzugt werden mesogene Steuermedien verwendet, die in der Mesophase eine positive dielektrische Anisotropie ($\Delta\varepsilon$) aufweisen. Wenn die mesogenen Steuermedien eine positive dielektrische Anisotropie haben, hat die achirale Komponente (B) dieser Medien bei 1 kHz und einer Temperatur von 4° unterhalb des Klärpunkts, bevorzugt in der nematischen Phase, bevorzugt einen Wert von $\Delta\varepsilon$ von 40 oder mehr, besonders bevorzugt von 50 oder mehr und ganz besonders von 60 oder mehr.

Die Komponente (B) der mesogenen Medien gemäß der vorliegenden Erfindung mit positiver dielektrischer Anisotropie bestehen besonders bevorzugt überwiegend und ganz besonders bevorzugt nahezu vollständig aus der Komponente (B-A).

In einer bevorzugten Ausführungsform enthält die Komponente (B) der mesogenen Medien gemäß der vorliegenden Erfindung mit positiver dielektrischer Anisotropie eine oder mehrere Komponenten ausgewählt aus der Gruppe der Komponenten (B-B) bis (B-D), bevorzugt ausgewählt aus der Gruppe der Komponenten (B-B) und (B-D), besonders bevorzugt der Komponente (B-B).

Die Komponente (B) der mesogenen Medien gemäß der vorliegenden Erfindung mit positiver dielektrischer Anisotropie enthält bevorzugt

- 5% bis 80%, bevorzugt 10% bis 60%, besonders bevorzugt 18% bis 43% einer oder mehrerer Verbindungen der Formel I,
- 5% bis 95%, bevorzugt 15% bis 80%, besonders bevorzugt 40% bis 70% einer oder mehrerer Verbindungen der Formel II und
- 0% bis 30% bevorzugt 0% bis 15%, besonders bevorzugt 0% bis 10% einer oder mehrerer weiterer Verbindungen.

Die Komponente (B) der mesogenen Medien gemäß der vorliegenden Erfindung mit positiver dielektrischer Anisotropie enthält bevorzugt

- 3% bis 45%, bevorzugt 5% bis 40%, besonders bevorzugt 10% bis 35% einer oder mehrerer Verbindungen der Formel I-1 und/oder
- 2% bis 35%, bevorzugt 4% bis 30%, besonders bevorzugt 5% bis 30% einer oder mehrerer Verbindungen der Formel I-1 und/oder
- 0 bis 30%, bevorzugt 2% bis 25%, besonders bevorzugt 5% bis 20% einer oder mehrerer Verbindungen der Formel II-1 und/oder
- 0 bis 30%, bevorzugt 2% bis 25%, besonders bevorzugt 5% bis 20% einer oder mehrerer Verbindungen der Formel II-2 und/oder
- 5% bis 70%, bevorzugt 15% bis 65%, besonders bevorzugt 20% bis 60% einer oder mehrerer Verbindungen der Formel II-3 und/oder II-4, bevorzugt II-4 und/oder
- 0% bis 20% bevorzugt 0% bis 15%, besonders bevorzugt 3% bis 12% einer oder mehrerer Verbindungen der Formel II-5 und/oder
- 0% bis 30% bevorzugt 0% bis 20%, besonders bevorzugt 3% bis 15% einer oder mehrerer Verbindungen der Formel II-6 und/oder
- 0% bis 35% bevorzugt 0% bis 30%, besonders bevorzugt 3% bis 12% einer oder mehrerer Verbindungen der Formel II-7.

Die Komponente (B) der mesogenen Medien gemäß der vorliegenden Erfindung mit negativer dielektrischer Anisotropie bestehen besonders bevorzugt überwiegend und ganz besonders bevorzugt nahezu vollständig aus der

Komponente (B-E).

Die Komponente (B-E) dieser Medien enthält bevorzugt eine oder mehrere Verbindungen.

Die mesogenen Medien mit negativer dielektrischer Anisotropie gemäß der vorliegenden Erfindung enthalten bevorzugt

- eine Komponente (B-A') bestehend aus einer oder mehreren Verbindungen mit einer stark negativen dielektrischen Anisotropie von -5 oder weniger,

- optional eine Komponente (B-B') bestehend aus einer oder mehreren Verbindungen mit einer moderat negativen dielektrischen Anisotropie von -1,5 bis < -5,

- optional eine Komponente (B-C') bestehend aus einer oder mehreren dielektrisch neutralen Verbindungen mit einer dielektrischen Anisotropie von -1,5 bis +1,5 und

- gegebenenfalls eine Komponente (B-D') bestehend aus einer oder mehreren Verbindungen mit einer positiven dielektrischen Anisotropie von mehr als 1,5.

Die mesogenen Medien gemäß der vorliegenden Anmeldung enthalten bevorzugt

- vier oder mehr, bevorzugt sechs oder mehr Verbindungen ausgewählt aus der Gruppe der Verbindungen der Komponenten (A) und (B) und/oder
- fünf oder mehr Verbindungen der Verbindungen der Komponente (B) und/oder
- eine, zwei oder mehr Verbindungen der Verbindungen der Komponente (A).

Das mesogene Medium gemäß der vorliegenden Erfindung kann weitere Additive, z.B. Stabilisatoren oder dichroitische Farbstoffe, in üblichen Konzentrationen enthalten. Die Gesamtkonzentration dieser weiteren Bestandteile liegt im Bereich von 0% bis 10%, bevorzugt im Bereich von 0,1% bis 6%, bezogen auf die Gesamtmischung. Die Konzentrationen der einzelnen dieser Verbindungen liegen bevorzugt im Bereich von 0,1 bis 3%. Die Konzentration dieser Verbindungen und ähnlicher Bestandteile der Mischung werden bei der Angabe der Konzentrationsbereiche der übrigen Mischungsbestandteile nicht berücksichtigt, sofern nicht ausdrücklich anders angegeben.

Die Medien werden auf übliche Weise aus den Verbindungen erhalten. Zweckmäßiger Weise werden die Verbindungen die in geringerer Menge eingesetzt werden in den in größerer Menge eingesetzten Verbindungen gelöst. Wird die Temperatur während des Mischvorgangs über den Klärpunkt der überwiegenden Komponente erhöht, kann die Vollständigkeit der Auflösung leicht beobachtet werden. Die erfindungsgemäßen Medien können jedoch auch auf andere Weisen hergestellt werden. So durch den Einsatz von Vormischungen. Als Vormischungen können unter anderem Homologenmischungen und/oder eutektische Mischungen eingesetzt werden. Die Vormischungen können aber auch bereits selbst einsatzfähige Medien sein. Dies ist bei sogenannten Zwei- oder Mehr-Flaschen-Systemen (Englisch: "two-bottte systems" oder "multi-bottle systems") der Fall.

In der vorliegenden Anmeldung gilt, soweit nicht explizit anders angegeben, das Folgende.

Die angegebenen Bereiche von Werten schließen bevorzugt die Grenzwerte ein.

Die Konzentrationen sind in Massen-% gegeben und beziehen sich auf die vollständige Mischung. Temperaturen sind in Grad Celsius und Temperaturdifferenzen in Differenzgrad Celsius angegeben. Alle physikalischen Eigenschaften wurden bestimmt wie in "Merck Liquid Crystals, Physical Properties of Liquid Crystals", Stand Nov. 1997, Merck KGaA, Deutschland und sind für eine Temperatur von 20 °C gegeben, sofern nicht explizit anders angegeben. Die optische Anisotropie ($\Delta n$), auch Doppelbrechung genannt, wird bei einer Wellenlänge von 589,3 nm bestimmt. Die dielektrischen Eigenschaften werden bei einer Frequenz von 1 kHz bestimmt. Die Eigenschaften der mesogenen Steuermedien und insbesondere die ihrer achiralen Komponenten (B) werden bei einer Temperatur von 4° unterhalb ihres jeweiligen Klärpunks bestimmt.

Der cholesterische Pitch cholesterischer Medien bzw. chiraler nematischer Medien wird in Abhängigkeit von seiner Größe nach bekannten Methoden bestimmt.

Bei relativ großen Werten wird er nach der Methode nach Grandjean-Cano bestimmt. Hierzu wird das Material in eine thermostatisierte, keilförmige Zelle mit homogener Orientierung an den Substraten gefüllt. Die Abstände der beobachteten Disklinationslinien werden bestimmt und über den Keilwinkel wird der Pitch berechnet. Der verwendete Keilwinkel richtet sich nach dem zu bestimmenden Pitch. Typischer weise werden Zellen mit einem Keilwinkel von ca. 0,1 ° bis 4°, bevorzugt von 0,5° bis 3° und besonders bevorzugt von 0,1° bis 2° verwendet. Die Abstände der Disklinationslinien werden bevorzugt unter dem Mikroskop ausgemessen. Orientierungsstörungen werden durch entsprechende Mittelung der Werte berücksichtigt. Alternativ kann der Mittelwert der Abstände durch Beugung eins Laserstrahl (z.B. eines He-Ne- Lasers) am Gitter der Disklinationslinien bestimmt werden. Hierbei erfolgt die Bestimmung der Beugungsmaxima zweckmäßigerweise mittels eines Diodenarrays oder eines CCDs. Der Winkel der Keilzelle wird bevorzugt durch Mehrfachreflexion eines Laserstrahls bestimmt. Alternativ kann er aus der Geometrie der Zelle erhalten oder durch eine Eichmessung mit einem Material mit bekanntem Pitch erhalten werden. Die Meßgenauigkeit für den Pitch beträgt je nach Meßmethode und aktuellem Wert ca. +/- 1 % bis ca. +/- 3%.

Sind die Werte des Pitchs zu groß, wird die Linsen-Methode verwendet. Hierbei wird das Material zwischen einer ebenen Platte und einer konvexen Linse orientiert. Dann werden die Abstände der kreisförmigen Disklinationslinien ausgemessen. Dies kann mit einem Bildverarbeitungssystem geschehen, dadurch wird die Mittelung der Daten vereinfacht. Aus dem Radius der Linse und dem Abstand der Disklinationslinie vom Kontaktpunkt wird der Abstand der Linsenfläche zur planen Unterlage am Ort der Disklinationlinien erhalten. Die Meßgenauigkeit dieser Methode ist etwas geringer als bei der mit den Keilzellen aber es kann ein großer Bereich an Pitch-Werten abgedeckt werden.

Sehr kleine Werte des Pitches werden mit der Methode der Selektivreflexion bestimmt. Hierzu wird die Transmission durch eine orientierte Probe des Materials bestimmt. Aus der Wellenlänge des Maximums der Selektivreflexion wird über den Brechungsindex des Materials der Pitch erhalten. Bei dieser Methode beträgt die Meßgenauigkeit für den Pitch beträgt ebenfalls ca. +/- 1%.

Die HTP der chiralen Materialien, insbesondere der chiralen Einzelverbindungen, wird nach der vorliegenden Anmeldung bei einer Temperatur von 20°C in der kommerziellen, nematischen Wirtsmischung MLC-6828 der Fa. Merck KGaA, Darmstadt nach der Grandjean-Cano Methode bestimmt. Die Temperaturabhängigkeit der HTP wird im Bereich von 0°C bis 50°C untersucht und typischerweise bei 20°C angegeben. In der Regel wird auch die HTP in der in der kommerziellen, nematischen Wirtsmischung MLC-6260, ebenfalls der Fa. Merck KGaA, bestimmt.

Wenn der cholesterische Pitch eines Steuermediums nicht bestimmt werden kann, wird er aus der HTP der Komponente (A) in der Komponente (B) extrapoliert. Wenn auch der Wert der HTP der Komponente (A) in der Komponente (B) bei der entsprechenden Temperatur nicht bestimmt werden kann, wird auch dieser extrapoliert und zwar aus der Temperaturabhängigkeit der HTP, in der Regel bei tieferen Temperaturen.

Im Zusammenhang mit Angaben zur Zusammensetzung der Medien, bzw. ihrer Komponenten, bedeutet

- "enthalten", dass die Konzentration des jeweiligen genannten Materials, also der Komponente oder der Verbindung, in der Bezugseinheit, also dem Medium bzw. der Komponente, bevorzugt 10% oder mehr, besonders bevorzugt 20 % oder mehr und ganz besonders bevorzugt 30% oder mehr beträgt,

- "überwiegend bestehen aus", dass die Konzentration des genannten Materials in der Bezugseinheit bevorzugt 50% oder mehr, besonders bevorzugt 60 % oder mehr und ganz besonders bevorzugt 70% oder mehr beträgt und

- "nahezu vollständig bestehen aus", dass die Konzentration des genannten Materials in der Bezugseinheit bevorzugt 80% oder mehr, besonders bevorzugt 90 % oder mehr und ganz besonders bevorzugt 95% oder mehr beträgt.

Dielektrisch positive Verbindungen haben ein $\Delta\varepsilon > 1,5$, dielektrisch neutrale Verbindungen haben ein $\Delta\varepsilon$ im Bereich $-1,5 \leq \Delta\varepsilon \leq 1,5$ und dielektrisch negative Verbindungen haben ein $\Delta\varepsilon < -1,5$. Die selben Definitionen gelten auch für Komponenten von Mischungen und für Mischungen.

Die dielektrischen Eigenschaften, elektrooptischen Eigenschaften (z.B. die Schwellenspannungen) und die Schaltzeiten wurden in bei der Merck KGaA, Darmstadt, Deutschland hergestellten Testzellen, bestimmt. Die Testzellen zur Bestimmung von $\Delta\varepsilon$ hatten eine Schichtdicke von 22 μm und eine kreisförmige Elektrode aus Indiumzinnoxid (ITO) mit einer Fläche von 1,13 $cm^2$ und einem Schutzring. Für homeotrope Orientierung zur Bestimmung von $\varepsilon_{\|}$ wurden Zellen mit einer homeotrop orientierenden Polyimid-Orientierungsschicht verwendet. Alternativ kann Lezithin (Merck KGaA) als Orientierungsmittel verwendet. Die Zellen zur Bestimmung von $\varepsilon_{\perp}$ hatten Orientierungsschichten aus dem Polyimid AL-1054 der Firma Japan Synthetic Rubber, Japan. Die Kapazitäten wurden in der Regel mit einem Frequenzanalysator Solatron 1260 mit einer Rechteckwelle mit einer Effektivspannung von 0,3 $V_{rms}$ gemessen. Bei Materialien mit einer hohen dielektrischen Anisotropie, bei denen bei einer Spannung von 0,3 $V_{rms}$ bereits eine Umorientierung des Flüssigkristalldirektors auftritt wird abweichend eine niedrigere Spannung von 0,1 $V_{rms}$ verwendet. Die elektooptischen Untersuchungen wurden mit weißem Licht durchgeführt.

Die charakteristischen Spannungen wurden unter senkrechter Beobachtung bestimmt.

Die dielektrischen Eigenschaften der Materialien werden bevorzugt bei einer Frequenz von 1 kHz und, wenn möglich, bei 20°C, sowie bei einer Temperatur von 4° unterhalb der Übergangstemperatur in die optisch isotrope Phase (Blaue Phase oder isotrope Phase), die mit steigender Temperatur zuerst auftritt, sowie bei einer Temperatur von 4° oberhalb des Klärpunkts, bzw. der charakteristischen Temperatur des jeweiligen Materials bestimmt.

Die dielektrische Anisotropie ($\Delta\varepsilon$) der Verbindungen wird durch Extrapolation der Werte einer 10%-igen Lösung der jeweiligen Verbindung in einer Wirtsmischung bei 20°C auf einen Anteil der jeweiligen Verbindung von 100% bestimmt. Die Kapazitäten der Testmischungen werden sowohl in einer Zelle mit homeotroper, als auch in einer Zelle mit homogener Randorientierung bestimmt. Die Schichtdicke beider Zellentypen beträgt ca. 20 μm. Zur Messung wird eine

Rechteckwelle mit einer Frequenz von 1 kHz und einer effektiven Spannung (rms, Englisch: "root mean square") von typischer Weise 0,1 V, bzw. 0,2 V bis 1,0 V verwendet. In jedem Fall ist die verwendete Spannung niedriger als die kapazitive Schwelle der jeweils untersuchten Mischung.

Für dielektrisch positive Verbindungen wird die Mischung ZLI-4792 und für dielektrisch neutrale, sowie für dielektrisch negative Verbindungen, die Mischung ZLI-3086, beide von Merck KGaA, Deutschland, als Wirtsmischung verwendet. Diese Wirtsmischungen werden auch für Komponenten und Medien verwendet, die selbst bei der betreffenden Temperatur keine nematische Phase aufweisen, bzw. die nicht bis zu der betreffenden Temperatur in der nematischen Phase unterkühlt werden können. Ist die Löslichkeit der Verbindungen, Komponenten oder Medien in der jeweiligen Wirtsmischung geringer als 10%, wird ausnahmsweise die Konzentration der untersuchten Substanz auf 5% erniedrigt. Ist die Löslichkeit einer dielektrisch positiven Substanz (einer Verbindung, einer Komponente eines Mediums oder eines Mediums) in der Wirtsmischung ZLI-4792 geringer als 5%, so wird die nematische Mischung MLC-6828, Merck KGaA, Deutschland als Wirtsmischung verwendet. Auch hier wird nötigenfalls die Konzentration der zu untersuchenden Substanz von 10% auf 5% halbiert. Aus der Änderung der Werte gegenüber denen der Wirtsmischung wird auf den Wert der reinen Substanz extrapoliert.

Die erfindungsgemäßen Medien enthalten bevorzugt 0% bis 10% an Verbindungen deren Löslichkeit in der entsprechenden Wirtsmischung (ZLI-3086 bzw. MLC-6828) geringer als 5% ist. Bevorzugt ist die Konzentration dieser Verbindungen 8% oder weniger, besonders bevorzugt 5% oder weniger und ganz besonders bevorzugt 4% oder weniger.

Die dielektrische Anisotropie der Verbindungen, Komponenten oder Medien, die bei 20°C oder bei einer Temperatur von 4° unterhalb ihres Klärpunkts nicht in der nematischen Phase vorliegen, bzw. die nicht bis zu dieser Temperatur in dieser Phase unterkühlbar sind, werden aus einer Wirtsmischung bestimmt, wie oben bei den Verbindungen beschrieben.

Die Dielektrizitätskonstanten $\varepsilon\|$ und $\varepsilon\perp$ werden mit einer absoluten Genauigkeit von ca. +/-0,1 bis +/-0,2 bestimmt, wodurch sich für die dielektrische Anisotropie ($\Delta\varepsilon$) eine absoluten Genauigkeit von ca. +/-0,2 bis +/-0,4, typischerweise von +/-0,3 ergibt. Die Genauigkeit nimmt bei größeren Werten ab, die möglichen Abweichungen nehmen also zu. Bei Werten von $\Delta\varepsilon$ von 25 bis 40 beträgt die absolute Genauigkeit ca. +/-0,5 und bei Werten von mehr als 40 beträgt die absolute Genauigkeit ca. +/-1,0.

Die dielektrische Suszeptibilität der Medien wird bei einer Temperatur von 4° oberhalb ihrer charakteristischen Temperatur bestimmt. Sie wird mittlere dielektrische Suszeptibilität ($\varepsilon_{av.}$) genannt, da sie auch, in erster Näherung, aus der Extrapolation der mittleren dielektrischen Suszeptibilität des nematischen Mediums über dessen Klärpunkt hinaus erhalten werden kann. Die dielektrische Suszeptibilität der Medien wird mit einer absoluten Genauigkeit von ca. +/-0,1 bis +/-0,2 bestimmt. Bei Werten von $\varepsilon_{av.}$ von 50 oder mehr bis 100 beträgt die absolute Genauigkeit ca. +/-0,5 und bei Werten von mehr als 100 beträgt die absolute Genauigkeit ca. +/-2,0.

Der Wert der Doppelbrechung der Komponenten (B) der erfindungsgemäßen Medien wird hier in der nematischen Phase bei 20°C und bei einer Temperatur von 4° unterhalb des Klärpunkts gemessen. Ist das Medium bei einer dieser beiden Temperaturen oder bei diesen beiden Temperaturen nicht stabil nematisch oder zumindest bis zu dieser Temperatur in der nematischen Phase unterkühlbar, so wird die Doppelbrechung einer Mischung aus der entsprechenden nematischen Wirtsmischung extrapoliert, wie oben bei der Bestimmung der dielektrischen Anisotropie beschrieben.

Der Begriff Schwellenspannung bedeutet in der vorliegenden Anmeldung die optische Schwelle und wird für einen relativen Kontrast von 10 % ($V_{10}$) angegeben. Die Mittgrauspannung und die Sättigungsspannung werden ebenfalls optisch bestimmt und für einen relativen Kontrast von 50%, bzw. von 90 % angegeben. Als Bezugsgröße und charakteristischer Wert der elektrooptischen Kennlinie der verschiedenen Medien wird in der vorliegenden Anmeldung in der Regel die Spannung ($V_{10}$), in Ausnahmefällen auch die Spannung ($V_{70}$), angegeben bei der die Kennlinie zum ersten Mal den Wert von 70% relativem Kontrast erreicht. Wird die kapazitive Schwellenspannung ($V_0$), auch Freedericksz-Schwelle genannt, oder die Spannung bei der 100% relativer Kontrast erreicht wird ($V_{100}$) angegeben, so ist dies explizit angegeben.

Die Medien wurden in Testzellen mit interdigitalen Elektroden gefüllt. Die Schichtdicke der Testzellen betrug in der Regel ca. 10 $\mu$m. Die Breite der Elektroden betrug 10 $\mu$m und der Abstand zwischen den benachbarten Elektroden betrug ebenfalls 10 $\mu$m. Die elektrooptische Kennlinie wurde bei einer Temperatur von 2 Grad oberhalb der charakteristischen Temperatur des jeweiligen Mediums bestimmt. Beim Einfüllen der Medien in eine Zelle wurde in einigen Fällen eine leichte Erhöhung des Klärpunkts beobachtet. Dieser Effekt ist möglicherweise mit einer gewissen Stabilisierung der nematischen Phase in dünnen Schichten zu erklären. Die Erhöhung des Klärpunkts betrug in einigen Fällen 0,5 Grad und bis zu ca. 0,7 Grad. In einigen wenigen Fällen können Abweichungen von bis zu ca. 2° bis 4° auftreten. Bei Medien bei denen die charakteristische Temperatur (bzw. der Klärpunkt) in der Zelle von dem im Bulk abweicht, wird hier die charakteristische Temperatur (der Klärpunkt) in der Zelle zur Charakterisierung verwendet.

Als Wellenlänge des Lichts werden 400 nm bis 800 nm, bevorzugt 555 nm angenommen.

In der vorliegenden Anmeldung, besonders in den im folgenden beschriebenen Beispielen werden die Strukturen der chemischen Verbindungen mittels Abkürzungen angegeben. Die Bedeutung der jeweiligen Abkürzungen ist in den folgenden Tabellen A und B zusammengestellt. Alle Gruppen $C_nH_{2n+1}$ und $C_mH_{zm+1}$ sind geradkettige Alkylgruppen mit n bzw. m C-Atomen. Tabelle B ist aus sich selbst heraus verständlich, da sie jeweils die vollständige Abkürzung für eine Formel homologer Verbindungen angibt. In Tabelle A sind nur die Abkürzungen für die Kemstrukturen der Verbindungstypen zusammengestellt. Die Abkürzungen für die jeweiligen einzelnen Verbindungen setzen sich aus der jeweils zutreffenden dieser Abkürzungen für den Kern der Verbindung und der mittels einem Bindestrich angehängten Abkürzung für die Gruppen $R^1$, $R^2$, $L^1$ und $L^2$ gemäß folgender Tabelle zusammen.

| Abkürzung für $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nN.F.F | $C_nH_{2n+1}$ | CN | F | F |
| nON.F.F | $OC_nH_{2n+1}$ | CN | F | F |
| nOF | $OC_nH_{2n+1}$ | F | H | H |
| nCl | $C_nH_{2n+1}$ | Cl | H | H |
| nCl.F | $C_nH_{2n+1}$ | Cl | H | F |
| nCl.F.F | $C_nH_{2n+1}$ | Cl | F | F |
| nF | $C_nH_{2n+1}$ | F | H | H |
| nF.F | $C_nH_{2n+1}$ | F | H | F |
| nF.F.F | $C_nH_{2n+1}$ | F | F | F |
| nmF | $C_nH_{2n+1}$ | $C_mH_{2m+1}$ | F | H |
| $nCF_3$ | $C_nH_{2n+1}$ | $CF_3$ | H | H |
| $nOCF_3$ | $C_nH_{2n+1}$ | $OCF_3$ | H | H |
| $nOCF_3$.F | $C_nH_{2n+1}$ | $OCF_3$ | H | F |
| $nOCF_3$.F.F | $C_nH_{2n+1}$ | $OCF_3$ | F | F |
| $nOCF_2$ | $C_nH_{2n+1}$ | $OCHF_2$ | H | H |
| $nOCF_2$.F | $C_nH_{2n+1}$ | $OCHF_2$ | H | F |
| $nOCF_2$.F.F | $C_nH_{2n+1}$ | $OCHF_2$ | F | F |
| nS | $C_nH_{2n+1}$ | NCS | H | H |
| nS.F | $C_nH_{2n+1}$ | NCS | H | F |
| nS.F.F | $C_nH_{2n+1}$ | NCS | F | F |
| rVsN | $C_rH_{2r+1}$-CH=CH-$C_sH_{2s}$- | CN | H | H |
| rOsN | $C_rH_{2r+1}$-O-$C_sH_{2s}$- | CN | H | H |
| nEm | $C_nH_{2n+1}$ | $COOC_mH_{2m+1}$ | H | H |

**Tabelle A:**

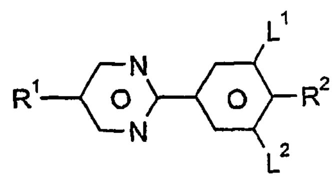

PYP

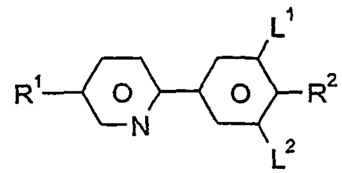

PYRP

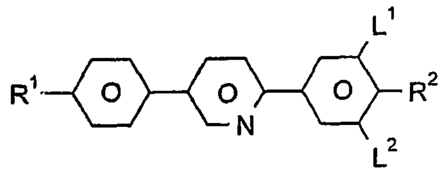

PPYRP

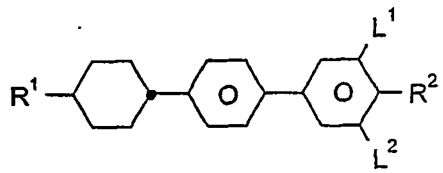

BCH

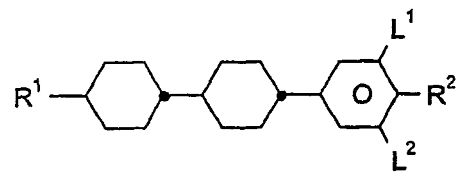

CCP

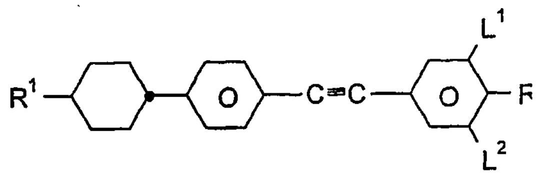

CPTP

(fortgesetzt)

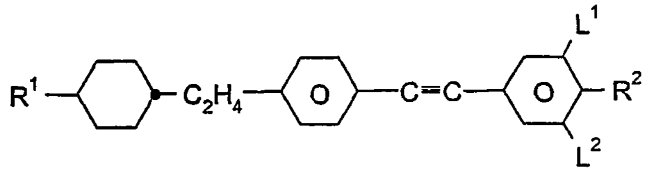

**CEPTP**

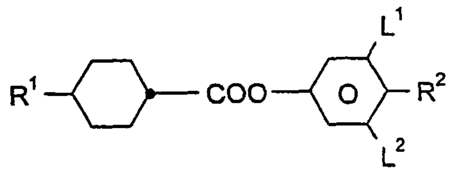

**D**

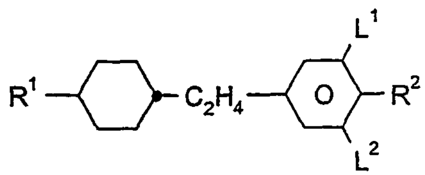

**EPCH**

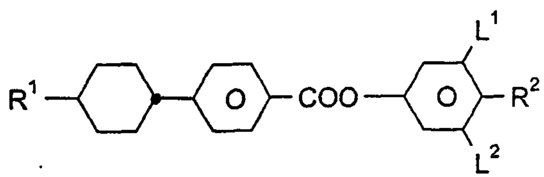

**HP**

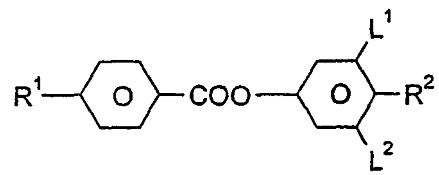

**ME**

(fortgesetzt)

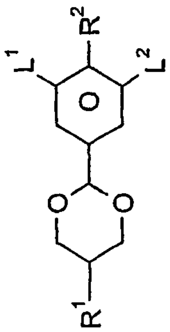

PDX

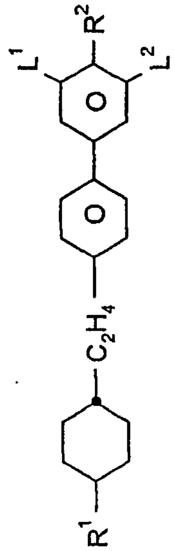

BECH

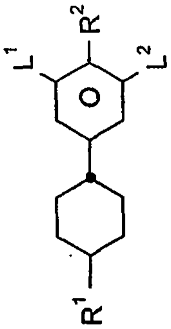

PCH

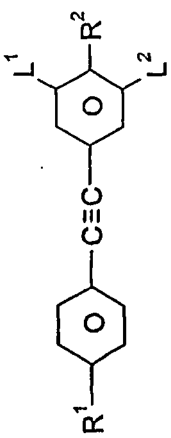

PTP

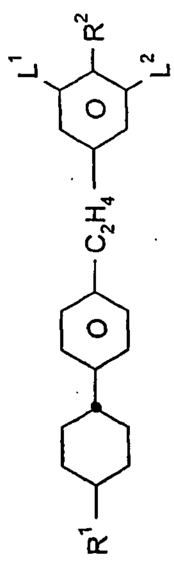

EBCH

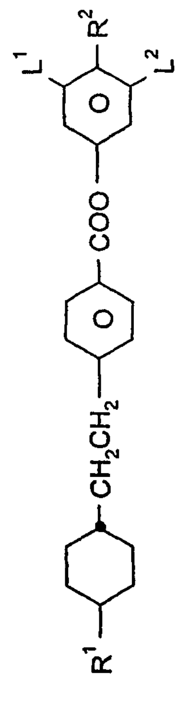

EHP

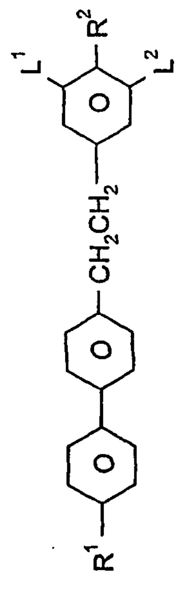

ET

**Tabelle B:**

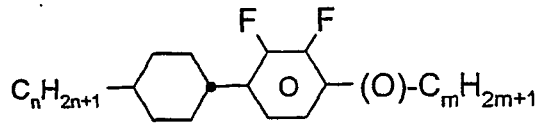

PCH-n(O)mFF

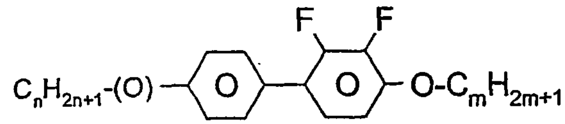

PY-n(O)-Om

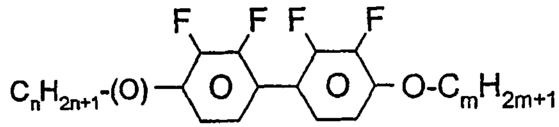

YY-n(O)-Om

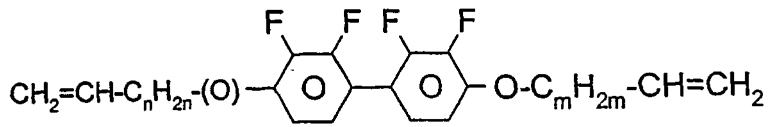

YY-Vn(O)-OmV

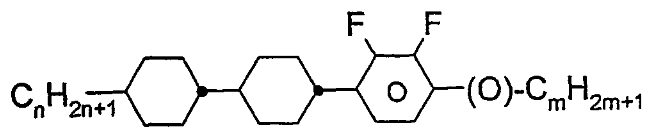

CPP-n(O)mFF

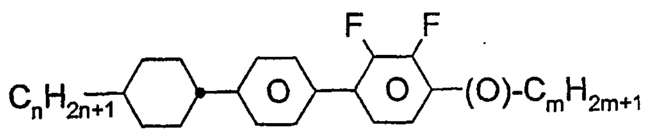

CPY-n(O)-m

(fortgesetzt)

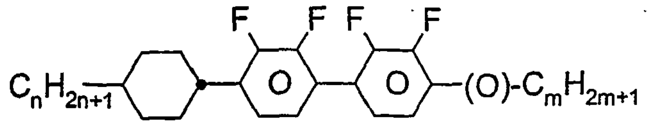

CYY-n(O)m

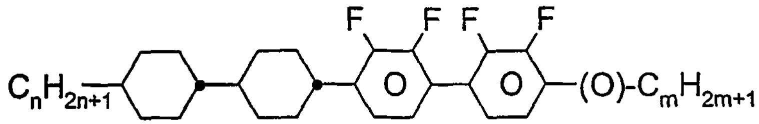

CCYY-n-(O)m

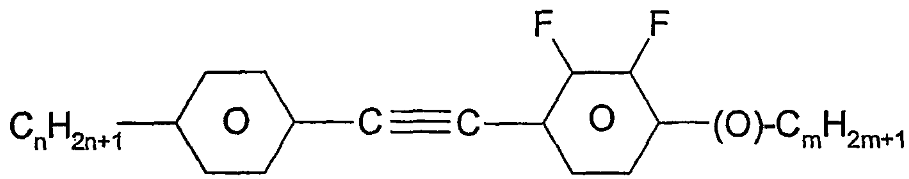

PTP-n(O)mFF

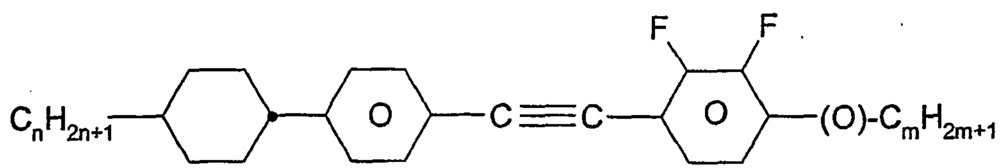

CPTP-n(O)mFF

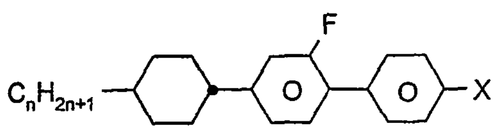

CGP-n-X
(X = besonders F, Cl, CN = "N", NCS = "S" und $CF_3$ = "T")

(fortgesetzt)

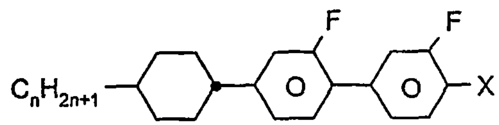

**CGG-n-X**
**(X = besonders F, Cl, CN = "N", NCS = "S" und $CF_3$ = "T")**

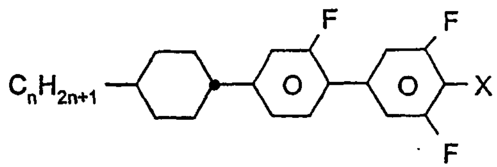

**CGU-n-X**
**(X = besonders F, Cl, CN = "N", NCS = "S" und $CF_3$ = "T")**

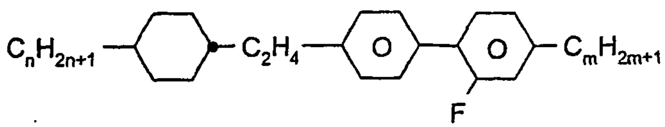

**Inm**

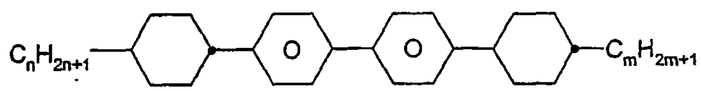

**CBC-nm**

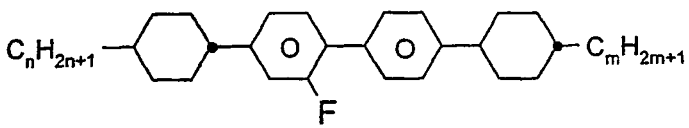

**CBC-nmF**

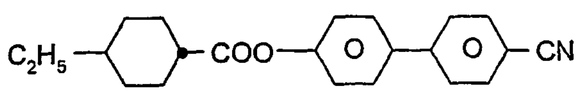

**CHE**

(fortgesetzt)

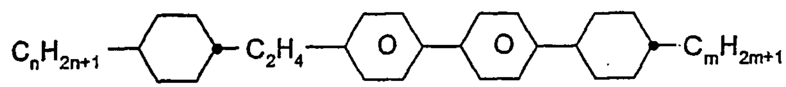

ECBC-nm

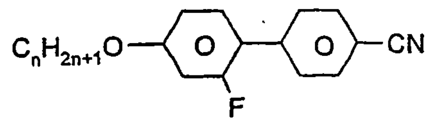

GP-nO-N

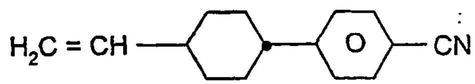

CP-V-N

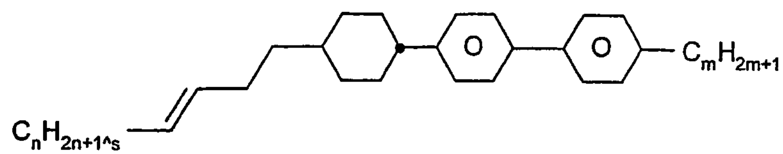

CPP-nV2-m

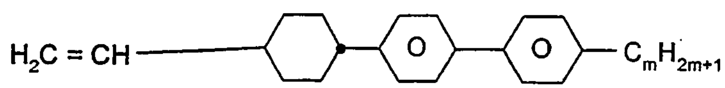

CPP-V-m

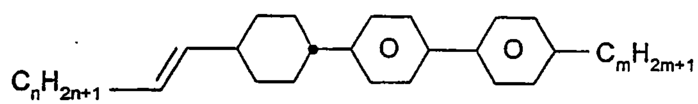

CPP-nV-m

(fortgesetzt)

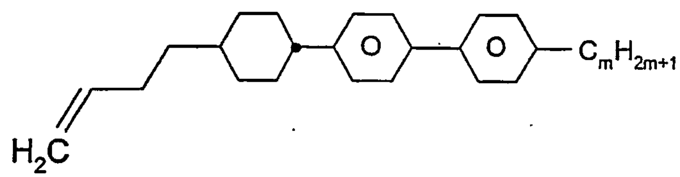

CPP-V2-m

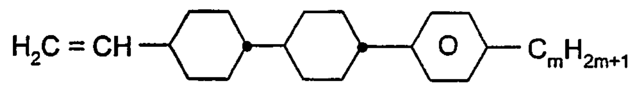

CCP-V-m

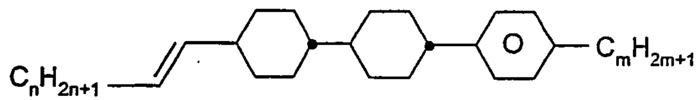

CCP-nV-m

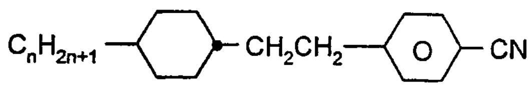

G3·n

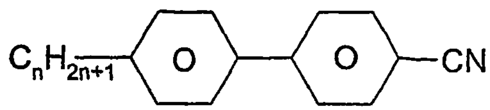

K3·n

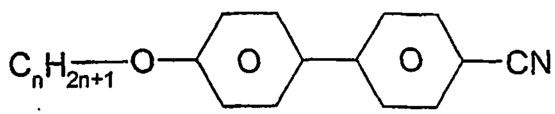

M3·n

(fortgesetzt)

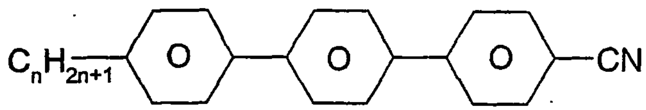

T3·n

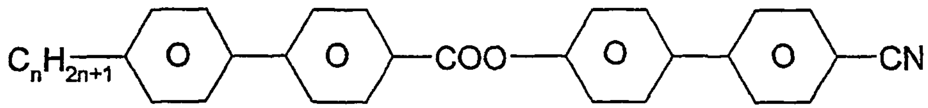

BB3·n

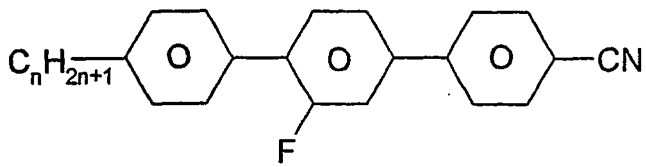

PGIP-n-N

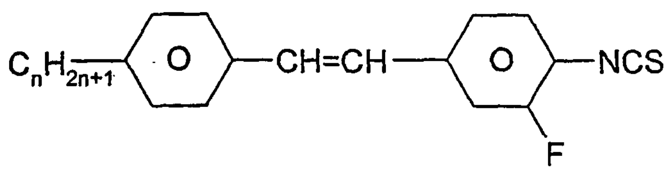

PVG-n-S

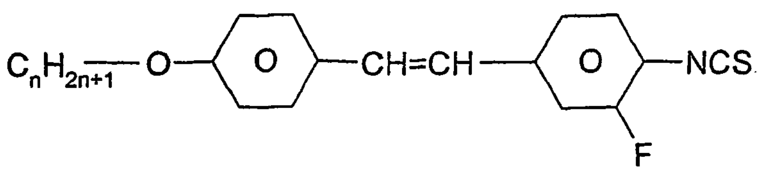

PVG-nO-S

(fortgesetzt)

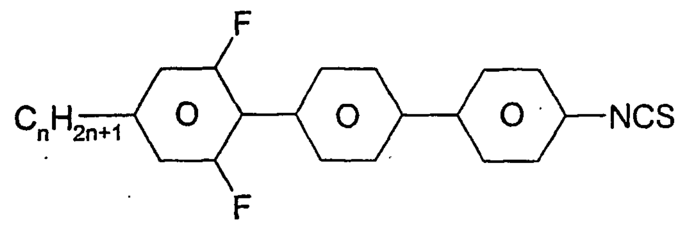

UPP-n-S

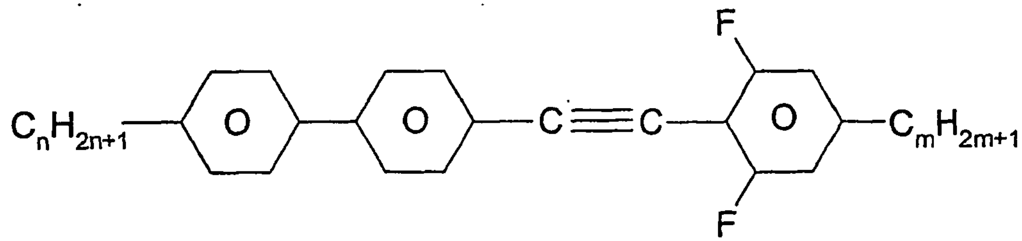

PPTUI-n-m

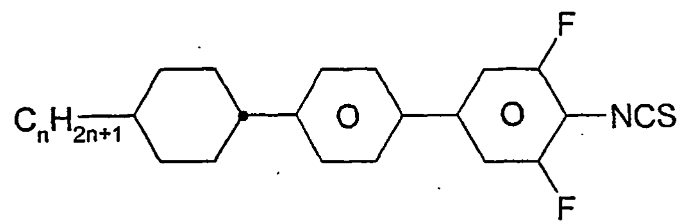

GPU-n-S

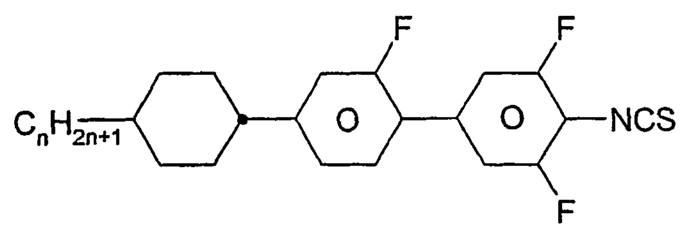

CGU-n-S

(fortgesetzt)

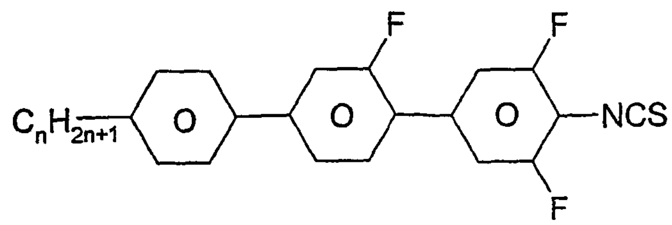

PGU-n-S

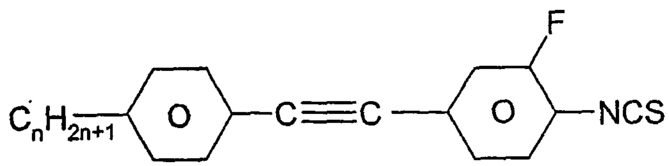

PTG-n-S

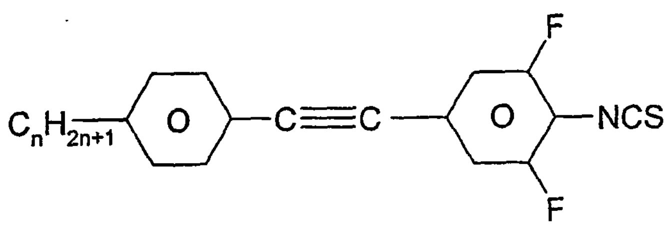

PTU-n-S

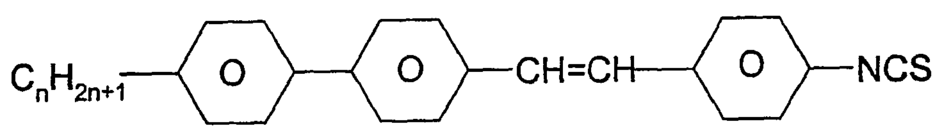

PPVP-n-S

(fortgesetzt)

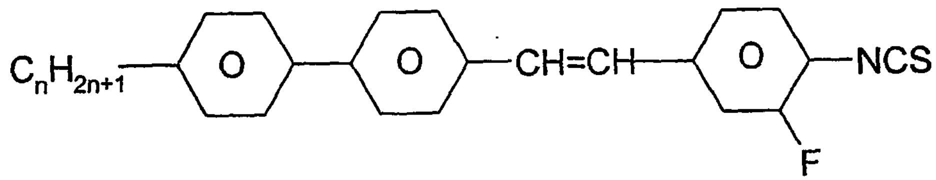

PPVG-n-S

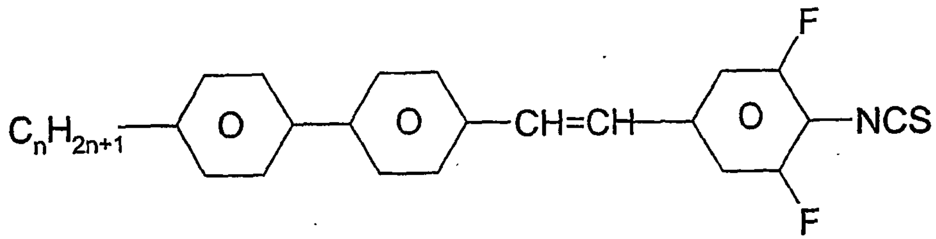

PPVU-n-S

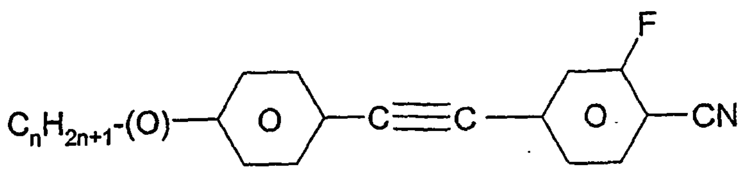

PTG-n(O)-N

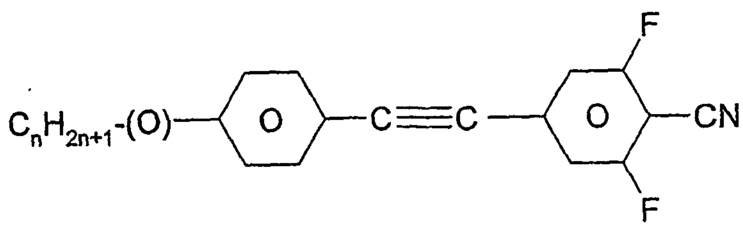

PTU-n(O)-N

(fortgesetzt)

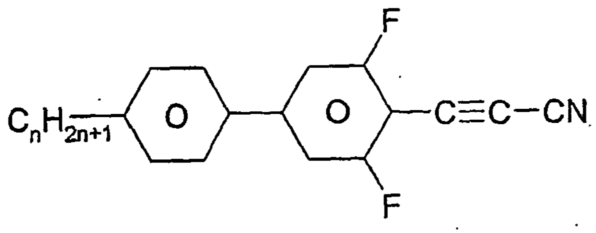

PU-n-AN

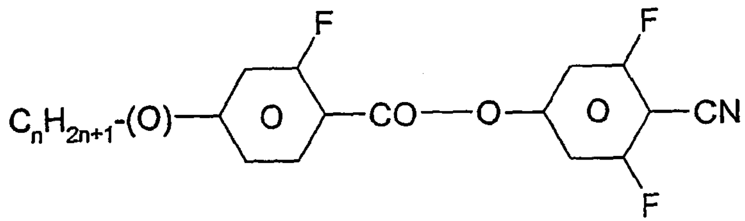

GZU-n(O)-N

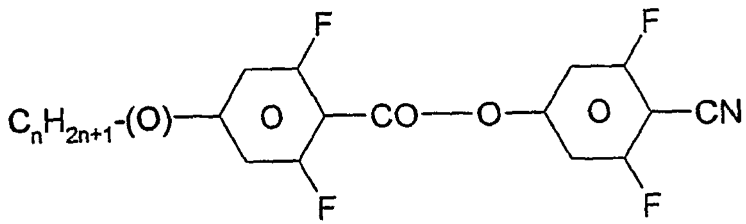

UZU-n(O)-N

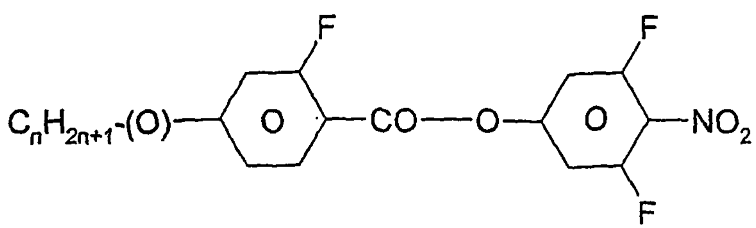

GZU-n(O)-NO2

(fortgesetzt)

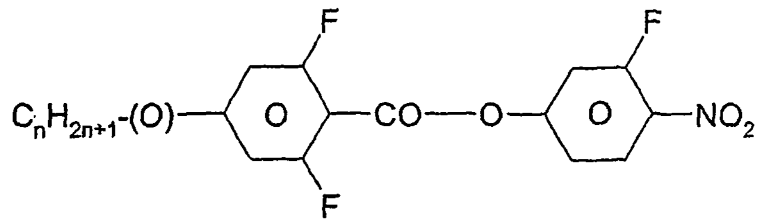

UZG-n(O)-NO2

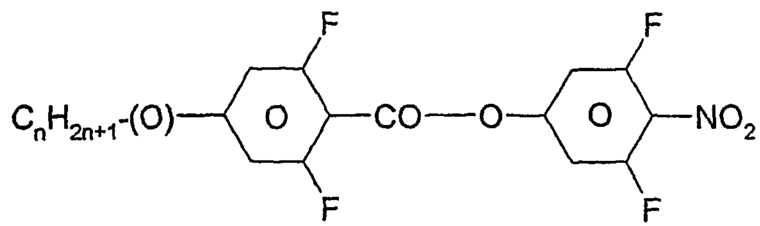

UZU-n(O)-NO2

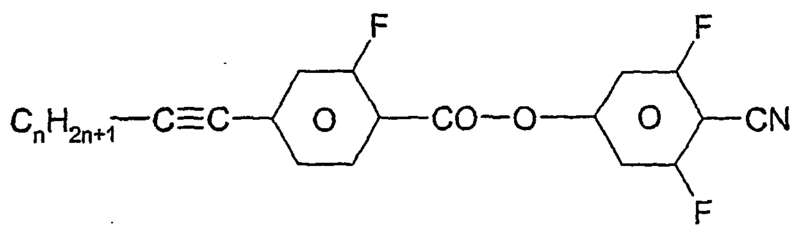

GZU-nA-N

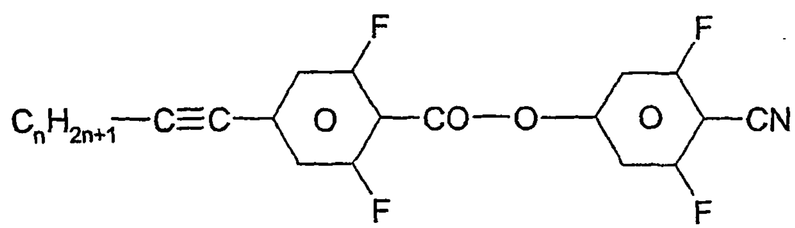

UZU-nA-N

(fortgesetzt)

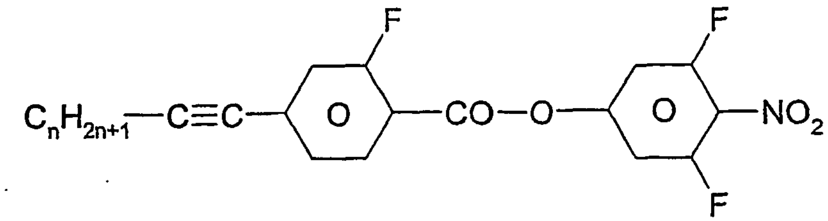

GZU-nA-NO2

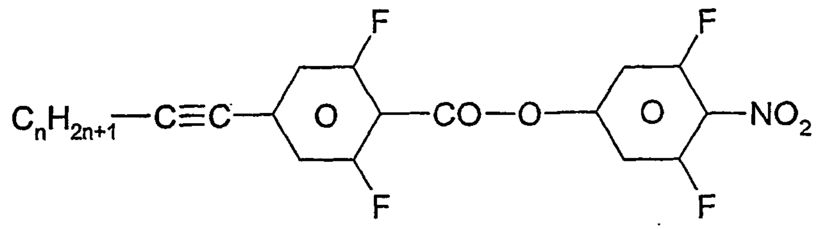

UZU-nA-NO2

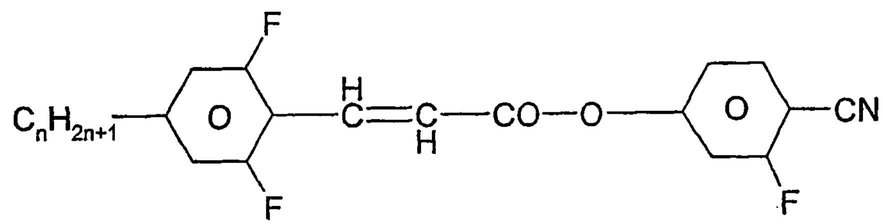

UVZG-n-N

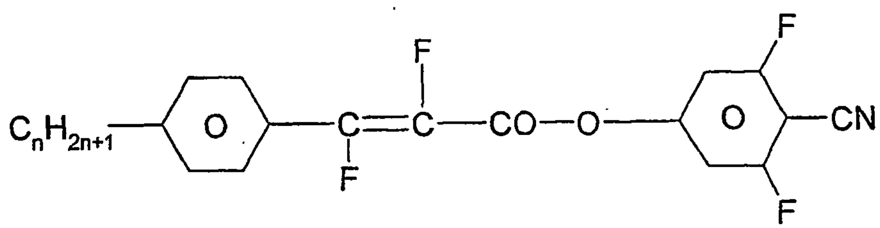

PWZU-3-N

(fortgesetzt)

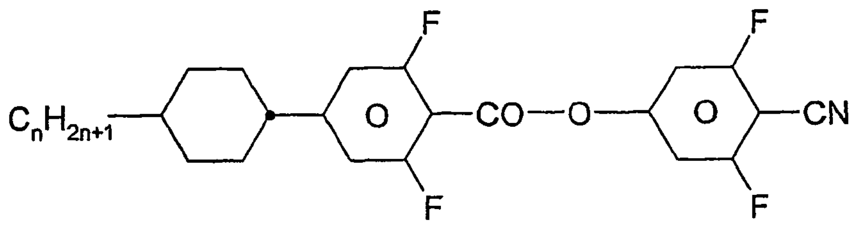

**CUZU-n-N**

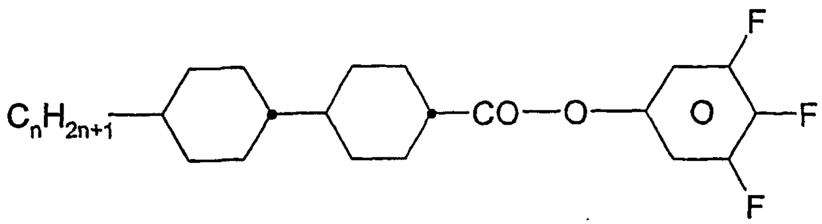

**CCZU-n-F**

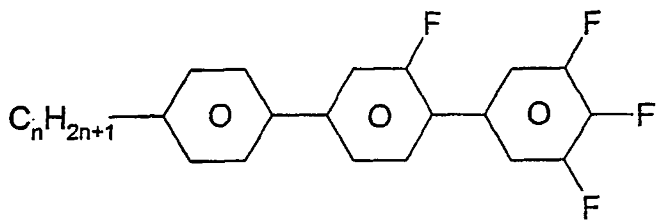

**PGU-n-F**

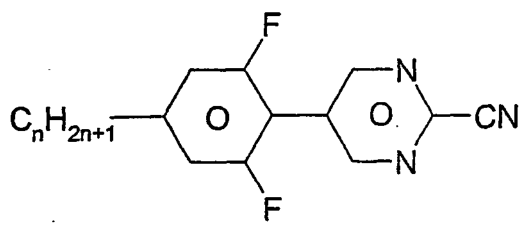

**UM-n-N**

(fortgesetzt)

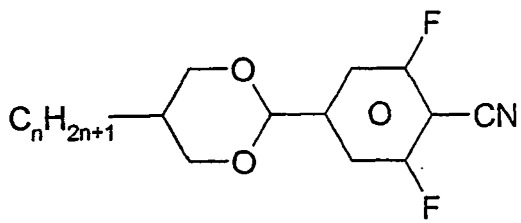

**DU-n-N**

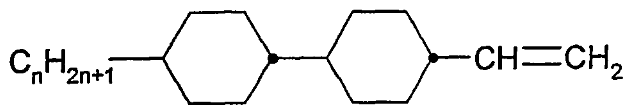

**CC-n-V**

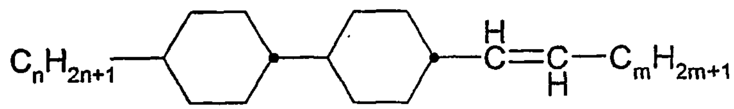

**CC-n-VM**

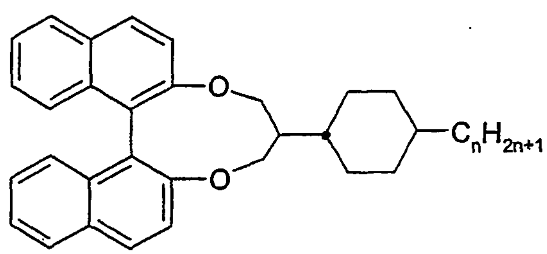

**B(OC)2C*H-C-n**

(fortgesetzt)

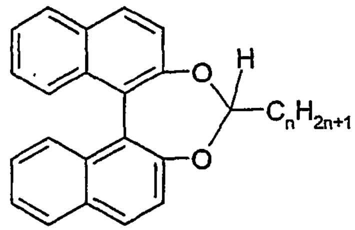

BO2C*H-n

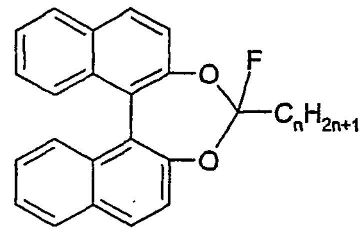

BO2C*F-n

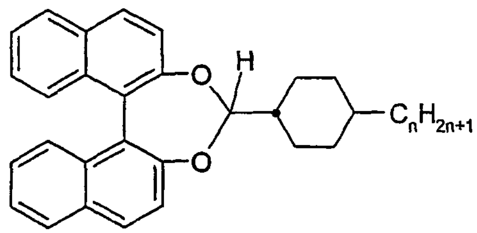

BO2C*H-C-n

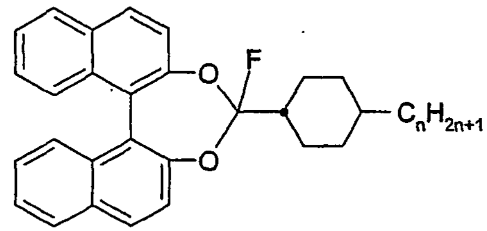

BO2C*F-C-n

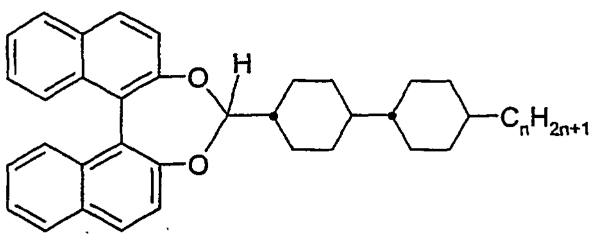

BO2C*H-CC-n

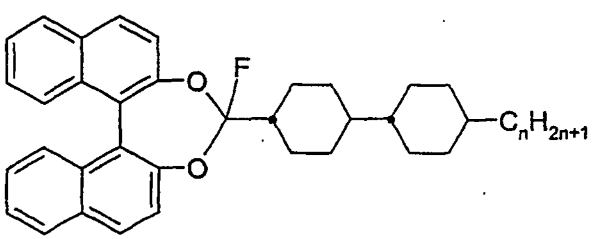

(fortgesetzt)

**BO2C*F-CC-n**

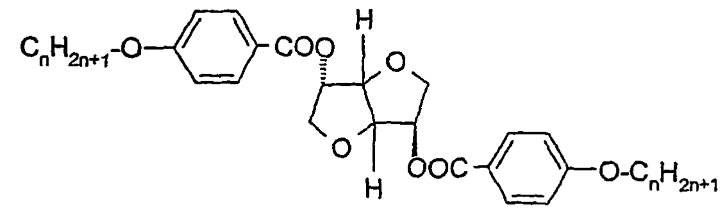

**(nOPZ)2X***

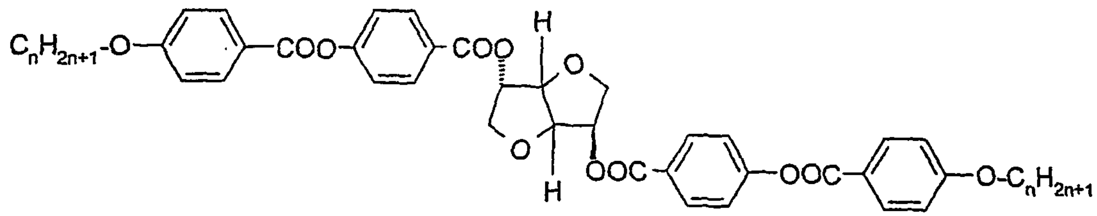

**(n0PZPZ)2X***

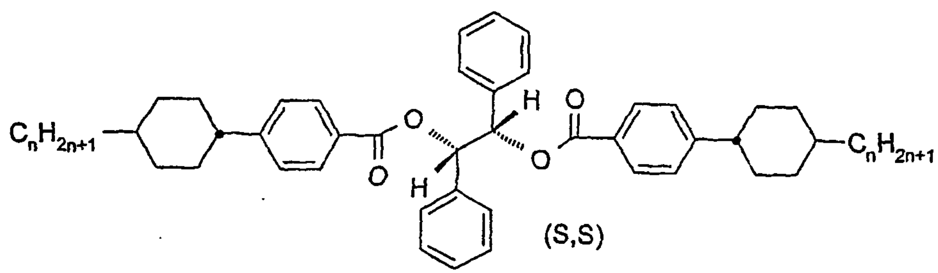

(S,S)

**SS-(nCPZ)2BE**

(fortgesetzt)

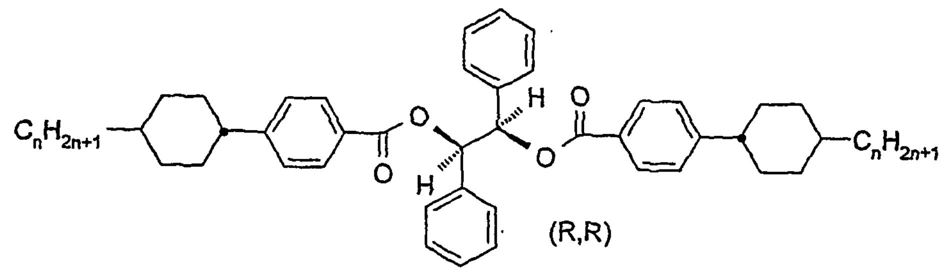

(R,R)

RR-(nCPZ)2BE

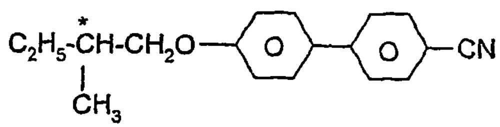

C 15

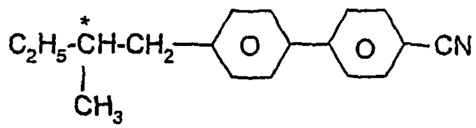

CB 15

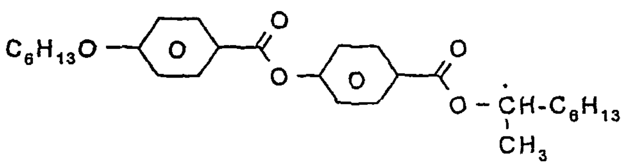

R/S-811

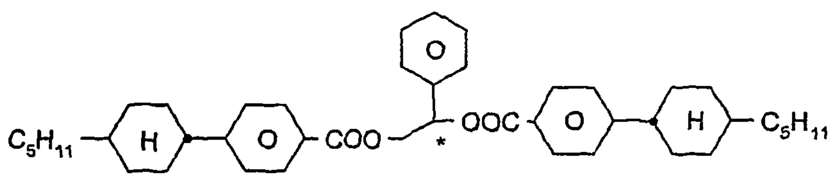

(fortgesetzt)

R 2-1011/S-1011

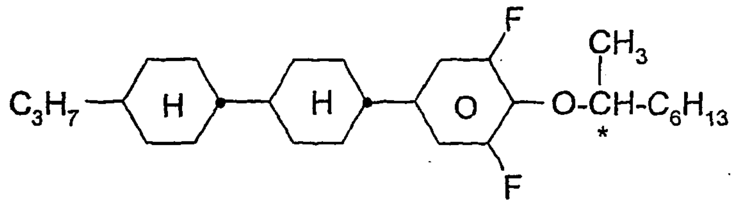

R-2011/S-2011

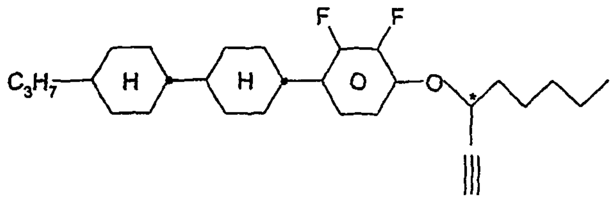

R S-3011/S-3011

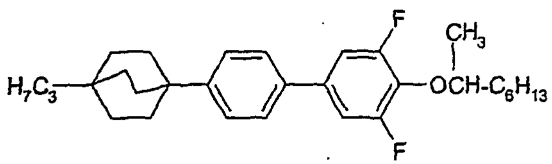

R-4011/S-4011

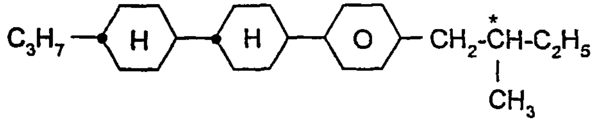

CM 44

(fortgesetzt)

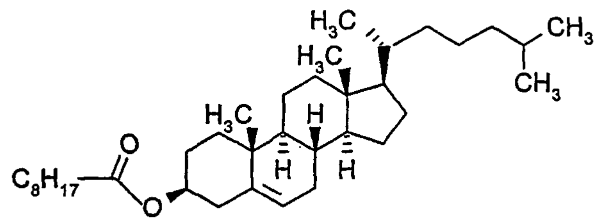

CN

Die mesogenen Medien gemäß der vorliegenden Anmeldung enthalten bevorzugt

- vier oder mehr, bevorzugt sechs oder mehr Verbindungen ausgewählt aus der Gruppe der Verbindungen der Tabellen A und B und/oder
- fünf oder mehr Verbindungen ausgewählt aus der Gruppe der Verbindungen der Tabelle B und/oder
- zwei oder mehr Verbindungen ausgewählt aus der Gruppe der Verbindungen der Tabelle A.

Die erfindungsgemäßen Medien nach der vorliegenden Anmeldung können bei Bedarf eine oder mehrere weitere Verbindungen in geringen Mengen als Stabilisatoren oder zur Einstellung des spezifischen Widerstands enthalten. Sie enthalten bevorzugt einen oder mehrere Stabilisatoren, bevorzugt ausgewählt aus der Liste der folgenden Verbindungen der Tabelle C.

**Tabelle C**

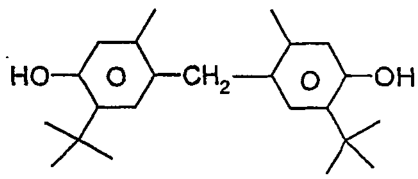
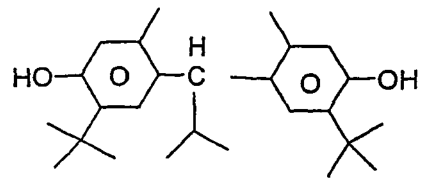

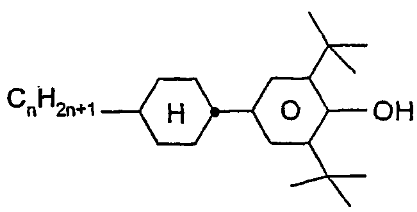
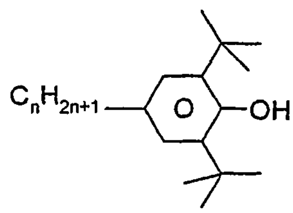

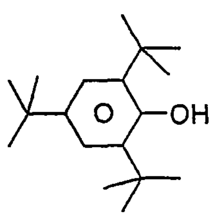
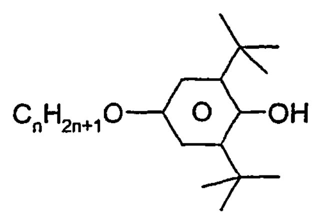

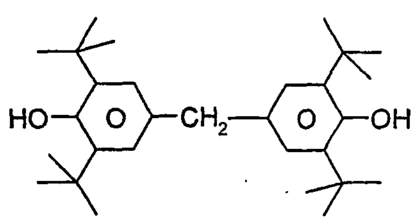
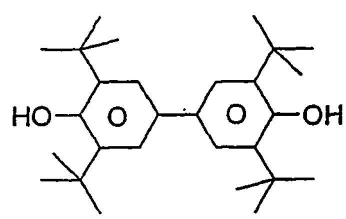

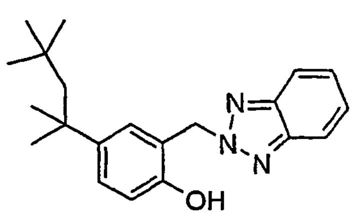
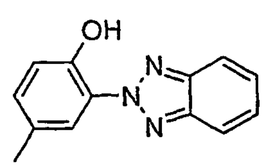

(fortgesetzt)

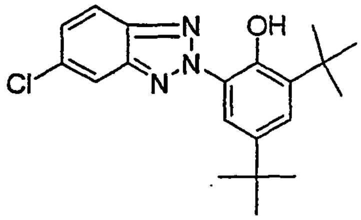

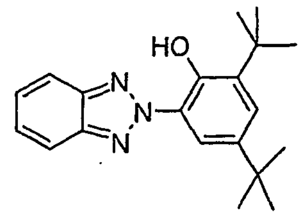

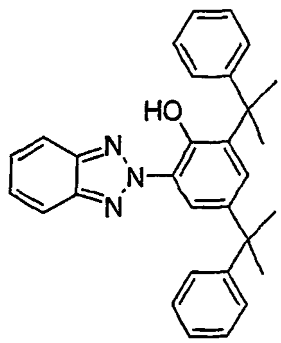

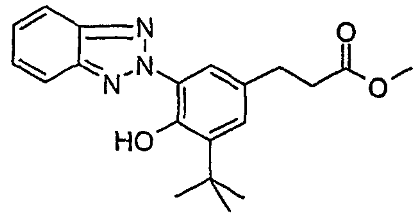

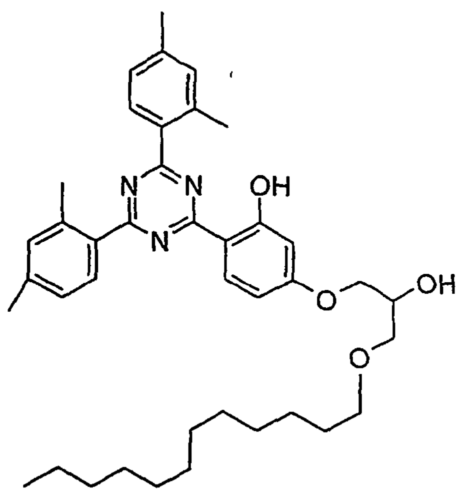

Eine typische Verbindung, die zur Einstellung des spezifischen Widerstands eingesetzt werden kann, hat die folgende Formel

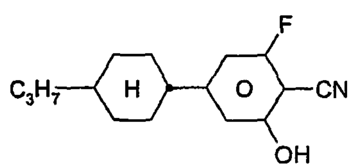

Beispiele

Die im Folgenden beschriebenen Beispiele illustrieren die vorliegende Erfindung ohne sie in irgend einer Art zu beschränken. Ferner zeigen sie dem Fachmann welche Eigenschaften und insbesondere welche Eigenschaftskombinationen mit der vorliegenden Erfindung erreicht werden können.

Beispiel 1 und Vergleichsbeispiele 1a bis 1d

Vergleichsbeispiel 1a

Die achirale Flüssigkristallmischung AM-1 mit der folgenden Zusammensetzung wurde hergestellt und untersucht.

| Zusammensetzung | | | Physikalische Eigenschaften | | |
|---|---|---|---|---|---|
| Verbindung # | Abkürzung | Konz. /Massen-% | T(N,I) | = | 5,7 °C |
| | | | $\Delta\varepsilon$(20°C, 1 kHz) | > | 0 |
| 1 | UZU-3A-N | 7,5 | | | |
| 2 | GZU-3A-N | 15,0 | $\varepsilon_{av.}$(T(N,I)+4°) | = | 55,0 |
| 3 | GZU-4A-N | 15,0 | | | |
| 4 | GZU-4O-N | 15,0 | $V_{70}$(T(N,I)+2°) | = | 45,0 V |
| 5 | PU-3-AN | 10,0 | $dV_{70}$(T(N,I)+2°)/dT | = | 11,5 V/Grad |
| 6 | PTU-4O-N | 15,0 | $dV^*_{70}(/V_{70})/dT$ | | 26 %/Grad |
| 6 | CUZU-2-N | 15,0 | | | |
| 7 | CUZU-3-N | 7,50 | | | |
| Σ | | 100,0 | | | |

Diese Flüssigkristallmischung wurde in eine Testzelle gefüllt und bei einer Temperatur von 7,7°C, sowie über einen Temperaturbereich von 6,2°C bis bei 10,7°C (5° oberhalb des Klärpunkts) bezüglich ihrer elektrooptischen Eigenschaften untersucht.

Die verwendete Testzelle wies interdigitale Elektroden auf nur einem der beiden Substrate auf. Eine elektrooptische Testzelle mit einem Lichtschaltelement enthaltend die Flüssigkristallmischung wurde hergestellt. Die Substrate bestanden aus Glas. Es wurden Substrate ohne Orientierungsschicht und ohne Passivierungsschicht verwendet. Die Elektrodenstruktur bestand aus ineinander verzahnten kammförmigen Elektroden. Der Abstand der Elektroden voneinander betrug 10 µm und die Breite der Elektroden betrug 10 µm. Die Schichtdicke der Elektroden betrug ca. 100 nm. Die Elektroden befanden sich alle in einer gemeinsamen Ebene. Die Schichtdicke des Steuermediums betrug ca. 10 µm.

Es wurde ein erster Polarisator vor und als Analysator ein zweiter Polarisator hinter der Zelle benutzt. Die Absorptionsachsen der beiden Polarisatoren bildeten einen Winkel von 90° zueinander. Der Winkel zwischen der Achse der maximalen Absorption der Polarisatoren und der Komponente des elektrischen Felds in der Ebene der Anzeige betrug jeweils 45°. Die Spannungs-Transmissions-Kennlinie wurde mit einem elektrooptischen Meßplatz DMS 703 der Firma Autronic-Melchers, Karlsruhe, Deutschland bestimmt. Bei senkrechter Beobachtung wurde eine Kurve erhalten wie sie für eine Zelle mit elektrisch kontrollierter Doppelbrechung (z.B. ECB) typisch ist.

Mit steigender Temperatur oberhalb des Klärpunkts des Mediums nehmen die charakteristischen Spannungen monoton zu. Bei 7,7°C beträgt $V_{70}$ 45 V. Die Ergebnisse sind in der folgenden Tabelle zusammengestellt.

Tabelle 1: Charakteristische Spannungen verschiedener Beispiele

| Beispiel | V.1a | 1 | 2c | 2d | 3b |
|---|---|---|---|---|---|
| Komponente (B) | AM-1 | | AM-2 | | AM-3 |
| Komponente (A) | keine | BC*HC | DM-2 | PPX* | BC*HC |
| Konz. (A)/% | 0 | 3 | 15 | 10 | 5 |
| T(N,I)/°C | 5,7 | n.b. | n.b. | n.b. | n.b. |
| $T_{char.}$/°C | 5,7 | 11,5 | -8,2 | 9 | 36,3 |
| Elektrodenabstand 10 µm, Elektrodenbreite 10 µm | | | | | |
| Charakteristische Spannungen | | | | | |
| $T-T_{char.}$/° | $V_{70}$/V | | | | |
| 0,5 | 22 | 27 | 31 | n.b. | 31 |

(fortgesetzt)

| Charakteristische Spannungen | | | | | |
|---|---|---|---|---|---|
| $T-T_{char.}$/° | $V_{70}$/V | | | | |
| 1,0 | 31 | 33 | 38 | 36,5 | 34 |
| 1,5 | 39 | 38 | 43 | 38,5 | 36 |
| 2,0 | 45 | 42 | 49 | 40,5 | 37 |
| 2,5 | n.b. | n.b. | n.b. | 42,5 | 38 |
| 3,0 | 55 | 51 | 59 | 44,5 | 39 |
| 4,0 | 63 | 58 | 67 | 49 | 42 |
| 5,0 | 71 | 65 | 73 | 52 | 46 |
| Temperaturabhängigkeit | | | | | |
| $V_{70}(T_{char.}+2°)$ / V | 45 | 40 (23§) | 49 | 40,5 | 37 |
| $dV_{70}/dT$ / V/Grad | 11,5 | 20 (2§) | 10,5 | 4 | 2,5 |
| $dV^*_{70}/dT$ / %/Grad | 26 | 45 (9§) | 21 | 9,9 | 6,8 |
| Bemerkungen: BC*HC: B(OC)2C*H-C-3,<br>PPX*: (1OPZPZ)2X*,<br>n.b.: nicht bestimmt,<br>$dV_{70}/dT$: $[V_{70}(T_{char.}+3°) - V_{70}(T_{char.}+1°) / (2°)]$,<br>$dV^*_{70}/dT$: $[V_{70}(T_{char.}+3°) - V_{70}(T_{char.}+1°) / (U_{70}(T_{char.}+2°)\cdot 2°)]$.<br>§: Werte bei $T_{char.}$+0,5°. | | | | | |

Beispiel 1

Es wird eine Mischung aus 97% der achiralen Flüssigkristallmischung AM-1 des Vergleichsbeispiels 1a und 3% der chiralen Verbindung B(OC)2C*H-C-3 hergestellt und untersucht. Die chirale Verbindung hat in der verwendeten Form bei 20°c eine HTP von +137 $\mu m^{-1}$ (in MLC-6828) und in MLC-6260 von +104 $\mu m^{-1}$.

| Zusammensetzung | | | Physikalische Eigenschaften | | |
|---|---|---|---|---|---|
| Verbindung # | Abkürzung | Konz. /Massen-% | $T_{char.}$ | = | 11,5 °C |
| 1 | B(OC)2C*H-C-3 | 3,0 | $\varepsilon_{av.}(T_{char.}+6°)$ | = | 69,9 |
| 2 | UZU-3A-N | 7,25 | | | |
| 3 | GZU-3A-N | 14,55 | $V_{70}(T_{char.}+0,5°)$ | = | 23 V |
| 4 | GZU-4A-N | 14,55 | $dV_{70}(T_{char.}+0,5°)/dT$ | = | 2 V/° |
| 5 | GZU-4O-N | 14,55 | $dV^*_{70}(/V_{70})/dT$ | = | 9 %/° |
| 6 | PU-3-AN | 9,7 | $V_{70}(T_{char.}+2°)$ | = | 40 V |
| 7 | PTU-4O-N | 14,55 | $dV_{70}(T_{char.}+2°)/dT$ | = | 20 V/° |
| 8 | CUZU-2-N | 14,55 | $dV^*_{70}(/V_{70})/dT$ | = | 45 %/° |
| 9 | CUZU-3-N | 7,25 | $V_{70}(T_{char.}+2,2°)$ | = | 42 V |
| Σ | | 100,0 | | | |

Die Mischung weist eine Blaue Phase über einen Bereich von ca. 2 Grad mit der folgenden Phasensequenz auf: N* 11,5°C BP 13,5°C I.

Die Mischung wird, wie bei Vergleichsbeispiel 1a beschrieben, in eine Testzelle gefüllt und beschrieben untersucht. Insbesondere werden ihre elektrooptischen Eigenschaften bei Temperatur bis zu einigen Grad oberhalb ihrer charakteristischen Temperatur untersucht. Die Ergebnisse sind zum Vergleich mit denen des Vergleichsbeispiels 1a in Tabelle 1 enthalten.

Wie man aus dieser Tabelle ersehen kann, sind die charakteristische Spannung $V_{70}$ der Flüssigkristallschal-

telemente des Beispiels 1 bei Temperaturen nahe oberhalb der charakteristischen Temperatur etwas größer als die des Vergleichsbeispiels 1a bei den entsprechenden Temperaturen. Die charakteristische Spannung der Flüssigkristallschaltelemente des Beispiels 1 nimmt wie die des Vergleichsbeispiels 1a mit steigender Temperatur monoton zu. Jedoch ist die Zunahme der charakteristische Spannung bei den Flüssigkristallschaltelementen des Beispiels 1a zunächst deutlich geringer als bei denen des Vergleichsbeispiels 1, so dass die beiden Schaltelemente bereits bei einer Temperatur von 1,5˚ oberhalb ihrer Referenztemperatur nahezu die selbe Spannung $V_{70}$ zeigen. Die Temperaturabhängigkeit bei einer Temperatur von 2˚ oberhalb der jeweiligen charakteristischen Temperatur wird im Vergleich der Lichtsteuerelemente des Vergleich beispiels 1a mit denen des Beispiels 1 von über 25% auf unter 20% verringert. Bei einer Temperatur von 0,5˚ oberhalb der charakteristischen Temperatur beträgt hier die relative Temperaturabhängigkeit der charakteristischen Spannung $dV^*_{70}(/V_{70})/dT$ 9 %/˚ und bei einer Temperatur von 2˚ oberhalb der charakteristischen Temperatur beträgt die relative Temperaturabhängigkeit der charakteristischen Spannung $dV^*_{70}(/V_{70})/dT$ 45 %/˚.

Bei den Mischungen des Beispiels 1 und des Vergleichsbeispiels 1a wurden zusätzlich Zellen mit einem Elektrodenabstand von 15 μm und einer Elektrodenbreite von 10 μm untersucht. Die Ergebnisse sind in Tabelle 2 zusammengestellt.

Tabelle 2: Charakteristische Spannungen

| Beispiel: | V.1a | V.1b | V.1c | V.1d | 1 |
|---|---|---|---|---|---|
| Komponente (A) | Keine | | | | BC*HC |
| Konz. (A)/% | 0 | | | | 3 |
| Komponente (B) | AM-1 | s. Text | s. Text | s. Text | AM-1 |
| Physikalische Parameter | | | | | |
| T(N,I)/˚C | 5,7 | 23,8 | 23,7 | 14,3 | n.b. |
| $T_{char.}$+2˚ / ˚C | 7,7 | 25,8 | 25,7 | 16,3 | 13,5 |
| $\varepsilon_{av.}$( $T_{char.}$+4˚) | 55,0 | 24,0 | 58,5 | 62,2 | 69,9 |
| Elektrodenabstand 15 μm, Elektrodenbreite 10 μm | | | | | |
| Temperaturabhängigkeit | | | | | |
| $V_{70}(T_{char.}$+2˚)/V | 67 | 134 | 71 | 70 | 23§ |
| $dV_{70}/dT$ / V/Grad | 17 | 38 | 18 | 17 | 2§ |
| $dV^*_{70}/dT$ / %/Grad | 25 | 28 | 25 | 24 | 9§ |
| Bemerkungen: siehe Tabelle 1,<br>BC*HC: B(OC)2C*H-C-3,<br>§: Werte bei $T_{char.}$+0,5˚.<br>Der Abstand Elektroden der verwendeten Zellen betrug hier, in Tabelle 2, ausnahmsweise 15 μm. | | | | | |

Vergleichsbeispiele 1b bis 1d

Bei den Vergleichsbeispielen 1b bis 1d wurden, im Gegensatz zu Beispiel 1, wie bei Vergleichsbeispiel 1a achirale Steuermedien verwendet. Hier wurden jedoch Steuermedien verwendet, die andere Zusammensetzungen aufwiesen, als das Steuermedien des Vergleichsbeispiels 1a.

Vergleichsbeispiel 1b

Es wurde eine Mischung mit der folgenden Zusammensetzung und mit den folgenden Eigenschaften hergestellt und untersucht.

| Zusammensetzung | | Physikalische Eigenschaften | | |
|---|---|---|---|---|
| Verbindung<br># Abkürzung | Konz.<br>/Massen-% | T(N,I) | = | 23,8 ˚C |

(fortgesetzt)

| Zusammensetzung | | | Physikalische Eigenschaften | | |
|---|---|---|---|---|---|
| 1 | ME2N.F | 3,0 | Δn(20°C, 589,3 nm) | = | 0,1444 |
| 2 | ME3N.F | 3,0 | | | |
| 3 | ME4N.F | 8,0 | Δε(20°C, 1 kHz) | = | 27,3 |
| 4 | ME5N.F | 8,0 | | | |
| 5 | UM-3-N | 4,0 | $\varepsilon_{av.}$(T(N,I)+4°) | = | 24,0 |
| 6 | PTG-3-N | 8,0 | | | |
| 7 | PTG-5-N | 8,0 | $V_{70}$(T(N,I)+2°) | = | 89 V |
| 8 | PTU-4O-N | 8,0 | $dV_{70}$/dT(T(N,I)+2°) | = | 25 V/Grad |
| 9 | PU-3-AN | 8,0 | | | |
| 10 | PU-5-AN | 8,0 | | | |
| 11 | PGU-2-F | 10,0 | | | |
| 12 | PGU-3-F | 10,0 | | | |
| 13 | PGU-5-F | 10,0 | | | |
| 14 | HP-3N.F | 4,0 | | | |
| Σ | | 100,0 | | | |

Die Ergebnisse sind in Tabelle 2 zusammengefasst.

Vergleichsbeispiel 1c

Es wurde eine Mischung mit der folgenden Zusammensetzung und mit den folgenden Eigenschaften hergestellt und untersucht.

| Zusammensetzung | | | Physikalische Eigenschaften | | |
|---|---|---|---|---|---|
| Verbindung<br># | <br>Abkürzung | Konz.<br>/Massen-% | T(N,I)<br>Δn(20°C, 589,3 nm) | =<br>= | 23,7 °C<br>0,0925 |
| 1 | UZU-3A-N | 12,0 | Δε(20°C, 1 kHz) | = | 46,1 |
| 2 | UZU-5A-N | 12,0 | ΔH(N,I) | = | 0,80 J/g |
| 3 | GZU-3A-N | 12,0 | $\varepsilon_{av.}$(T(N,I)+4°) | = | 58,5 |
| 4 | GZU-4A-N | 11,0 | | | |
| 5 | GZU-4O-N | 10,0 | $V_{70}$(T(N,I)+2°) | = | 47 V |
| 6 | UVZG-3-N | 10,0 | $dV_{70}$/dT(T(N,I)+2°) | = | 10 V/Grad |
| 7 | CUZU-2-N | 10,0 | | | |
| 8 | CUZU-3-N | 10,0 | | | |
| 9 | CUZU-4-N | 10,0 | | | |
| 10 | HP-5N.F | 3,0 | | | |
| Σ | | 100,0 | | | |

Die Ergebnisse sind in Tabelle 2 zusammengefasst.

Vergleichsbeispiel 1d

Es wurde eine Mischung mit der folgenden Zusammensetzung und mit den folgenden Eigenschaften hergestellt und untersucht.

| Zusammensetzung | | | Physikalische Eigenschaften | | |
|---|---|---|---|---|---|
| Verbindung<br># | <br>Abkürzung | Konz.<br>/Massen-% | T(N,I) | = | 14,3 °C |

(fortgesetzt)

| Zusammensetzung | | | Physikalische Eigenschaften | | |
|---|---|---|---|---|---|
| 1 | UZG-5A-NO2 | 10,0 | Δε(20°C, 1 kHz) | > | 0 |
| 2 | UZU-3A-N | 10,8 | | | |
| 3 | UZU-5A-N | 10,8 | $\varepsilon_{av.}$(T(N,I)+4°) | = | 62,2 |
| 4 | GZU-3A-N | 10,8 | | | |
| 5 | GZU-4A-N | 9,9 | $V_{70}$(T(N,I)+2°) | = | 47 V |
| 6 | GZU-4O-N | 9,0 | $dV_{70}/dT$(T(N,I)+2°) | = | 11 V/Grad |
| 7 | UVZG-3-N | 9,0 | | | |
| 8 | CUZU-2-N | 9,0 | | | |
| 9 | CUZU-3-N | 9,0 | | | |
| 10 | CUZU-4-N | 9,0 | | | |
| 11 | HP-5N.F | 2,7 | | | |
| Σ | | 100,0 | | | |

Die Ergebnisse sind in Tabelle 2 zusammengefasst.

Die Medien der Vergleichsbeispiele 1b bis 1d wurden, wie bei Beispiel 1 und Vergleichsbeispiel 1a, in Zellen mit einem Elektrodenabstand von 15 μm und einer Elektrodenbreite von 10 μm untersucht. Die Ergebnisse sind in Tabelle 2 dargestellt.

Wie man aus Tabelle 2 ersehen kann, ist die Temperaturabhängigkeit der relativen charakteristischen Spannung $V_{70}$ für alle vier Vergleichsbeispiele mit ca. 25% nahezu gleich groß, wohingegen sie bei Beispiel 1 nur 9% beträgt.

<u>Beispiele 2a bis 2d und Vergleichsbeispiel 2</u>

<u>Vergleichsbeispiel 2</u>

Zunächst wird die achirale Mischung AM-2 der folgenden Zusammensetzung hergestellt und untersucht.

| Zusammensetzung | | | Physikalische Eigenschaften | | |
|---|---|---|---|---|---|
| Verbindung | | Konz. | $T(N,I)_{bulk}$ | = | 22,5 °C |
| # | Abkürzung | /Massen% | $T_{char.}$ | | 24,4 |
| 1 | UZU-3A-N | 15,0 | | | |
| 2 | UZU-5A-N | 5,6 | $\varepsilon_{av.}$( $T_{char.}$+4°) | = | 60,8 |
| 3 | GZU-3A-N | 15,0 | | | |
| 4 | GZU-4A-N | 15,0 | $V_{70}$($T_{char.}$+2°) | = | 59 V |
| 5 | GZU-4O-N | 12,0 | $dV_{70}/dT$($T_{char.}$+2°) | = | 10 V/Grad |
| 6 | CUZU-2-N | 11,0 | $dV^*_{70}(N_{70})/dT$ | | 17 %/Grad |
| 7 | CUZU-3-N | 11,0 | | | |
| 8 | CUZU-4-N | 11,0 | | | |
| 9 | HP-3N.F | 4,4 | | | |
| Σ | | 100,0 | | | |

<u>Beispiel 2a</u>

Es wird eine Mischung aus 90% der achiralen Flüssigkristallmischung AM-2 des Vergleichsbeispiels 2 und 10% der chiralen Verbindung B(OC)2C*H-C-3 hergestellt und untersucht. Diese Mischung hatte eine charakteristische Temperatur von 22,5°C, die in der Zelle jedoch 24,4°C betrug, was hier als charakteristische Temperatur angenommen wird. Die Temperaturabhängigkeit der Spannung $V_{70}$ ist in der folgenden Tabelle (Tabelle 3) dargestellt.

Tabelle 3: Temperaturabhängigkeit der charakteristischen Spannungen des Beispiels 2a

| # | T /°C | $V_{70}$/V |
|---|---|---|
| 1 | - 19,3 | 156 |
| 2 | -17,3 | 116 |
| 3 | -15,5 | 93 |
| 4 | -13,5 | 82 |
| 5 | -11,6 | 80 |
| 6 | -9,6 | 82 |
| 7 | -7,7 | 88 |
| 8 | -5,6 | 94 |
| 9 | -3,7 | 102 |
| 10 | -1,9 | 108 |
| 11 | 2,0 | 125 |
| 12 | 5,9 | 143 |
| 13 | 9,7 | 164 |

Wie man aus dieser Tabelle (Tabelle 3) ersehen kann, nimmt die charakteristische Spannung $V_{70}$ der Zelle mit dieser dotierten Mischung, nicht wie bei dem Vergleichsbeispiel 1a und bei Beispiel 1 mit steigender Temperatur zu, vielmehr nimmt sie zunächst mit steigender Temperatur ab, durchläuft dann bei ca. -11,6° C ein Minimum und steigt erst dann mit weiter steigender Temperatur wieder an. Die Temperatur von -11,6°C wird, nach der Vorliegenden Anmeldung, als charakteristische Temperatur bezeichnet, da die charakteristische Spannung ein Minimum durchläuft. In einem Temperaturbereich von ca. +/-3° um diese Temperatur (also $T_{Char..}$ = -11,6°C) verschwindet die Temperaturabhängigkeit ($dV^*_{70}/dT$) nahezu, beträgt also ca. 0V/Grad.

Hier wird als Phasenbereich der Blauen Phase der Bereich von einer Temperatur von -19,3°C bis 13°C angegeben. Die Spannung erreicht bei tiefen Temperaturen nur 156 V, also weniger als das Doppelte des Werts der minimalen Spannung von 80 V. Die Untergrenze des Temperaturbereichs ist die Temperatur, bei der der elektrooptische Effekt zuerst ausgenutzt werden kann. Sie kann aus der beobachteten Schaltzeit ermittelt werden. Bei einer Temperatur von 13°C wird mit 164 V etwas mehr als das Doppelte des Werts der minimalen Spannung erreicht. Bei der Angabe dieser oberen Grenze wird, wie im entsprechenden Fall auch bei der unteren Grenze, auf eine Interpolation auf Werte mit einer Genauigkeit von unter einem Grad verzichtet.

Beispiel 2b

85% der achiralen Flüssigkristallmischung AM-2 des Beispiels 1 wurde mit 15% der Dotierstoffmischung DM-1 mit der folgenden Zusammensetzung.

| Zusammensetzung DM-1 | | | | |
|---|---|---|---|---|
| Verbindung<br>| | Konz. | HTP(MLC-6828) | HTP(MLC-6260) |
| # | Abkürzung | /Massen-% | /$\mu m^{-1}$ | /$\mu m^{-1}$ |
| 1 | B(OC)2C*H-C-3 | 28,6 | +137 | +104 |
| 2 | $(6OPZ)_2X^*$ | 14,2 | +58 | n.b. |
| 3 | $(1OPZPZ)_2X^*$ | 14,3 | +80 | n.b. |
| 4 | SS-(5CPZ)2BE | 14,2 | -56 | n.b. |
| 5 | RR-(5CPZ)2BE | 14,3 | +56 | n.b. |
| 6 | R-1011 | 14,4 | n.b. | +27 |

(fortgesetzt)

| Zusammensetzung DM-1 | | | | |
|---|---|---|---|---|
| Verbindung | | Konz. | HTP(MLC-6828) | HTP(MLC-6260) |
| # | Abkürzung | /Massen-% | /$\mu m^{-1}$ | /$\mu m^{-1}$ |
| Σ | | 100,0 | | |
| Bemerkungen: siehe Tabelle 1 | | | | |

Die in der Dotierstoffmischung DM-1 verwendeten chiralen Verbindungen haben alle, bis auf eine Ausnahme, einen hohen, positiven Wert der HTP in der Referenzmischung mit der angegebenen Zusammensetzung.

Für das resultierende Steuermedium konnte unter dem Mikroskop bei Temperaturen bis -20°C kein Klärpunkt und kein Übergang in die Blaue Phase bestimmt werden. Die Mischung aus 85% AM-2 und 15% DM-1 wird mit 0,1% des Phenols der Formel

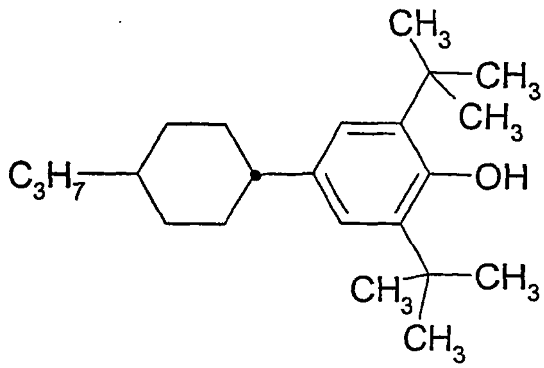

versetzt, in eine Testzelle gefüllt und, wie im Vergleichsbeispiel 1a beschrieben, untersucht. Insbesondere werden ihre elektrooptischen Eigenschaften bei verschiedenen Temperaturen oberhalb ihrer charakteristischen Temperatur bestimmt. Die Ergebnisse sind in Tabelle 4 zusammengestellt und zum Vergleich mit denen des Beispiels 2a, in Tabelle 5 enthalten.

Tabelle 4: Temperaturabhängigkeit der charakteristischen Spannungen des Beispiels 2b

| # | T /°C | $V_{70}/V$ |
|---|---|---|
| 1 | -11,4 | 71 |
| 2 | -10,5 | 67 |
| 3 | -9,5 | 65 |
| 4 | -8,5 | 64 |
| 5 | -7,5 | 65 |
| 6 | -6,6 | 68 |
| 7 | -5,6 | 71 |
| 8 | -3,6 | 81 |
| 9 | -2,7 | 85 |
| 10 | -1,8 | 90 |
| 11 | -0,9 | 94 |
| 12 | 0,1 | 100 |
| 13 | 1,2 | 106 |
| 14 | 2,2 | 111 |

(fortgesetzt)

| # | T /°C | $V_{70}/V$ |
|---|---|---|
| 15 | 4,0 | 121 |

Wie man aus dieser Tabelle (Tabelle 4) ersehen kann, ist die charakteristische Spannung $V_{70}$ der Zelle mit dieser dotierten Mischung über eine Temperaturbereich von -11,4°C bis -5,6°C nahezu unabhängig von der Temperatur.

Wie bei Beispiel 2a nimmt auch hier $V_{70}$ mit steigender Temperatur zunächst ab und steigt erst dann mit weiter steigender Temperatur wieder an. Das Minimum von $V_{70}$ liegt bei ca. -8,5°C in einem Temperaturbereich von ca. +/-2° um diese Referenztemperatur verschwindet auch hier die Temperaturabhängigkeit der charakteristischen Spannung ($dV_{70}/dT$) nahezu vollständig (vergleiche Tabelle 5).

Tabelle 5: Temperaturabhängigkeit der charakteristischen Spannungen der Beispiele 2a und 2b

| Beispiel | 2a | | 2b | |
|---|---|---|---|---|
| Komp. (B) | AM-2 | | | |
| Komp. (A) | B(OC)2C*H-C-3 | | DM-1 | |
| Konz. (A)/% | 10 | | 15 | |
| $T_{Char.}$/°C | -11,6 | | -8,5 | |
| Temperaturabhängigkeit | | | | |
| $T - T_{Char.}$§ /Grad | $\Delta V_{70}/\Delta T$ / V/Grad | $\Delta V^*_{70}/\Delta T$ / %/Grad | $\Delta V_{70}/\Delta T$ / V/Grad | $\Delta V^*_{70}/\Delta T$ / %/Grad |
| +1 | 2 | 1 | 2 | 3 |
| +2 | 2,5 | 3 | 4 | 4 |
| +3 | n.b. | n.b. | n.b. | n.b. |
| +4 | 3 | 3 | 4,5 | 5,5 |
| +6 | 3,5 | 3,5 | 5 | 6 |
| +8 | 4 | 3,5 | 5,5 | 5,5 |
| Bemerkungen: siehe Tabelle 1,<br>$\Delta V_{70}/\Delta T$ (T): [$V_{70}$(T+1°) - $V_{70}$(T-1°) / (2°)],<br>$\Delta V^*_{70}/\Delta T$ (T): [$V_{70}$(T.+1° - $V_{70}$(T-1°) / ($U_{70}$(T)·2°)],<br>§: hier wurde der Temperaturbereich nur einseitig erweitert. | | | | |

Beispiel 2c

Die Flüssigkristallmischung AM-2 des Vergleichsbeispiels 2 wurde zu 85% wie bei Beispiel 2b wieder mit 15% der einer Dotierstoffmischung gemischt. Hier wurde jedoch die Dotierstoffmischung DM-2 mit der folgenden Zusammensetzung verwendet.

| Zusammensetzung DM-2 | | | | |
|---|---|---|---|---|
| Verbindung<br># | <br>Abkürzung | Konz.<br>/Massen-% | HTP(MLC-6828)<br>$/\mu m^{-1}$ | HTP(MLC-6260)<br>$/\mu m^{-1}$ |
| 1 | BO2C*F-CC-3 | 18,3 | n.b. | n.b. |
| 2 | BO2C*F-5 | 35,8 | +59 | n.b. |
| 3 | RR-(5CPZ)2BE | 18,2 | +56 | n.b. |
| 4 | $(1OPZPZ)_2X^*$ | 9,3 | +80 | n.b. |
| 5 | R-1011 | 18,4 | n.b. | +27 |

(fortgesetzt)

| Zusammensetzung DM-2 | | | | |
|---|---|---|---|---|
| Verbindung | | Konz. | HTP(MLC-6828) | HTP(MLC-6260) |
| # | Abkürzung | /Massen-% | /$\mu m^{-1}$ | /$\mu m^{-1}$ |
| Σ | | 100,0 | | |
| Bemerkungen: siehe Tabelle 1, | | | | |

Die in der Dotierstoffmischung DM-2 verwendeten chiralen Verbindungen haben in der Referenzmischung Werte der HTP, die mit steigender Temperatur zunehmen. Die resultierende Mischung hat eine charakteristische Temperatur.

Die Mischung aus 85% AM-2 und 15% DM-2 wird mit 0,1 % des in Beispiel 2b verwendeten Phenols versetzt, in eine Testzelle gefüllt und untersucht, wie im Vergleichsbeispiel 1a beschrieben. Insbesondere werden ihre elektrooptischen Eigenschaften bei verschiedenen Temperaturen oberhalb ihrer charakteristischen Temperatur bestimmt. Diese Ergebnisse sind, zum Vergleich mit denen des Vergleichsbeispiels 1a und des Beispiels 1, ebenfalls in Tabelle 1 enthalten.

Beispiel 2d

Zu der Mischung AM-2 des Vergleichsbeispiels 4 wurden 10% der chiralen Verbindung (1OPZPZ)2X* gegeben.

Bei der resultierenden Mischung konnte keine Blaue Phase direkt beobachtet werden. Aus den elektrooptischen Daten wurde ein Phasenübergangsbereich von -5˚C bis 9˚C abgeleitet. Als charakteristische Temperatur wurde hier ausnahmsweise 9˚C angenommen. Die Ergebnisse sind in der folgenden Tabelle, Tabelle 6 dargestellt und, zum Vergleich, ebenfalls in Tabelle 1 aufgenommen.

Tabelle 6: Charakteristische Spannungen des Beispiels 2d

| Beispiel: | V. 2 | 2d |
|---|---|---|
| Komponente (A) | AM-2 | |
| Komponente (B) | keine | (1OPZPZ)2X* |
| Konzentration (B)/% | 0 | 10 |
| Physikalische Parameter | | |
| $T_{Char.}$ / ˚C | 24,4 | 9 |
| Elektrodenabstand 10 μm, Elektrodenbreite 10 μm | | |
| Charakteristische Spannungen | | |
| T-T(N,I)/˚ | $V_{70}$/V | |
| 1,0 | n.b. | 36,5 |
| 1,5 | n.b. | 38,5 |
| 2,0 | 59 | 40,5 |
| 2,5 | n.b. | 42,5 |
| 3,0 | n.b. | 44,5 |
| 4,0 | n.b. | 49 |
| 5,0 | n.b. | 52 |
| Temperaturabhängigkeit | | |
| $V_{70}$(T(N,I)+2˚) / V | 59 | 40,5 |

(fortgesetzt)

| Temperaturabhängigkeit | | |
|---|---|---|
| $dV_{70}/dT$ / V/Grad | 10 | 4 |
| $dV^*_{70}/dT$ / %/Grad | 17 | 10 |
| Bemerkungen: siehe Tabelle 1. | | |

Beispiele 3a bis 3f und Vergleichsbeispiel 3

Vergleichsbeispiel 3

Als achirale Ausgangsmischung wurde die Mischung AM-3 mit der folgenden Zusammensetzung hergestellt.

| Zusammensetzung | | | Physikalische Eigenschaften |
|---|---|---|---|
| Verbindung # | Abkürzung | Konz. /Massen-% | T(N,I) = 56,8 ˚C |
| 1 | GZU-3A-N | 15,0 | |
| 2 | GZU-4A-N | 15,0 | |
| 3 | GZU-4O-N | 15,0 | |
| 4 | UZU-3A-N | 8,0 | |
| 5 | CUZU-2-N | 9,0 | |
| 6 | CUZU-3-N | 9,0 | |
| 7 | CUZU-4-N | 9,0 | |
| 8 | HP-3N.F | 6,0 | |
| 9 | HP-4N.F | 6,0 | |
| 10 | HP-5N.F | 8,0 | |
| Σ | | 100,0 | |

Diese Mischung wurde als solche untersucht. Die charakteristische Temperatur betrug 60 ˚C. Die Ergebnisse sind in Tabelle 7 gezeigt.

Beispiele 3a bis 3c

Zu der Mischung AM-3 des Vergleichsbeispiels 3 wurden alternativ 3%, 5%, bzw. 7% der in Beispiel 1 verwendeten chiralen Verbindung B(OC)2C*H-C-3 gegeben (Beispiele 3a, 3b bzw. 3c). Die resultierenden Mischungen wiesen einen Phasenübergang in die Blaue Phase bei ca. 24˚C, 36˚C, bzw. 46˚C auf. Als charakteristische Temperaturen wurden hier 24,3˚C, 36,3˚C bzw. 45,9˚C angenommen. Die Ergebnisse sind in Tabelle 7 zusammengestellt und die des Beispiels 3b ebenfalls in Tabelle 1 aufgenommen.

Tabelle 7: Charakteristische Spannungen der Beispiele 3a bis 3c

| Beispiel: | V. 3 | 3a | 3b | 3c |
|---|---|---|---|---|
| Komponente (B) | AM-3 | | | |
| Komponente (A) | keine | B(OC)2C*H-C-3 | | |
| Konzentration (A)/% | 0 | 3,0 | 5,0 | 7,0 |
| Physikalische Parameter | | | | |
| T(N,I)/˚C | 56,8 | n.b. | n.b. | n.b. |
| $T_{Char.}$/˚C | 60 | 45,9 | 36,3 | 24,3 |
| Elektrodenabstand 10 μm, Elektrodenbreite 10 μm | | | | |

(fortgesetzt)

| Charakteristische Spannungen | | | | |
|---|---|---|---|---|
| T-T(N,I)/˚ | $V_{70}$/N | | | |
| 0,5 | n.b. | 23 | 31 | 35 |
| 1,0 | 76 | 23,5 | 34 | 37 |
| 1,5 | 84 | 24,5 | 36 | 39 |
| 2,0 | 92 | 25 | 37 | 41 |
| 2,5 | 100 | 28 | 38 | 43 |
| 3,0 | 107 | n.b. | 39 | 45 |
| 4,0 | 121 | n.b. | 42 | 48 |
| 5,0 | 135 | n.b. | 46 | 50 |
| Temperaturabhängigkeit | | | | |
| $V_{70}(T_{Char}+2^{\circ})$ / V | 92 25 37 | | | 41 |
| $dV_{70}/dT$ / V/Grad | 15. 3,5§ 2,5 | | | 4 |
| $dV^*_{70}/dT$ / %/Grad | 17 14§ 6,8 | | | 9,6 |
| Bemerkungen: siehe Tabelle 1.<br>§: $dV_{70}/dT$: $[V_{70}(T_{char.}+2,5^{\circ}) - V_{70}(T_{char.}+1,5^{\circ}) / (1\ ^{\circ}]$ $dV^*_{70}/dT$: $[V_{70}(T_{char.}+2,5^{\circ}) - V_{70}(T_{char.}+1,5^{\circ}) / (V_{70}(T_{char.}+1^{\circ})\cdot 1^{\circ})]$ | | | | |

Beispiele 3d bis 3f

Als achirale Ausgangsmischung wurde wieder die Mischung AM-3 der Beispiele 3a bis 3c verwendet.

Zu dieser Mischung (AM-3) wurden 10%, 13%, bzw. 16% der (in Beispiel 1 verwendeten) chiralen Verbindung B(OC)2C*H-C-3 gegeben. Die resultierenden Mischungen (Beispiele 3d, 3e bzw. 3f) wiesen einen Phasenübergang von der cholesterischen in die Blaue Phase bei einer Temperatur von 6˚C (Beispiel 3d) bzw. ein Minimum der Kennlinie der charakteristischen Spannungen bei Temperaturen von 1 ˚C (Beispiel 3e) bzw. 0,3˚C (Beispiel 3f) auf. Die Ergebnisse sind in der folgenden Tabelle, Tabelle 8 zusammengestellt.

Tabelle 8: Charakteristische Spannungen

| Beispiel: | V. 3 | 3d | 3e | 3f |
|---|---|---|---|---|
| Komponente (B) | AM-3 | | | |
| Komponente (A) | keine | B(OC)2C*H-C-3 | | |
| Konzentration (A)/% | 0 | 10,0 | 13,0 | 16,0 |
| Physikalische Parameter | | | | |
| $T_{Char.}$ / ˚C | 60 | 6 | 1 | 0,3 |
| $\Delta T(BP)$ /Grad | 0* | 17 | 33 | 35 |
| Elektrodenabstand 10 μm, Elektrodenbreite 10 μm | | | | |
| Charakteristische Spannungen bzw. Temperaturabhängigkeit | | | | |
| $T_{Char}$ +2˚ / Grad | 62 | 25 | 3 | 2,3 |
| $V_{10}(T+2^{\circ})$ / V | 60 | 33 | 50 | 79 |
| $dV_{10}/dT$ / V/Grad | 10 | 1 | 1 | 1 |

(fortgesetzt)

| Charakteristische Spannungen bzw. Temperaturabhängigkeit | | | | |
|---|---|---|---|---|
| $dV^*_{10}/dT$ / %/Grad | 17 | 3 | 2 | 1,2 |
| Bemerkungen: siehe Tabelle 1<br>* es konnte keine Blaue Phase beobachtet werden. | | | | |

## Patentansprüche

**1.** Mesogenes Steuermedium zur Verwendung in einem elektrooptischen Lichtsteuerelement, wobei das Steuermedium in einem bestimmten Temperaturbereich eine Blaue Phase aufweist,

- eine chirale Komponente, Komponente (A), die aus einer oder mehreren chiralen Verbindungen besteht, und
- eine achirale Komponente, Komponente (B), die aus einer oder mehreren achiralen Verbindungen besteht, enhält,

**dadurch gekennzeichnet, dass**

- die achirale Komponente, Komponente (B), eine oder mehrere Verbindungen ausgewählt aus der Gruppe der Verbindungen der Formeln I und II,

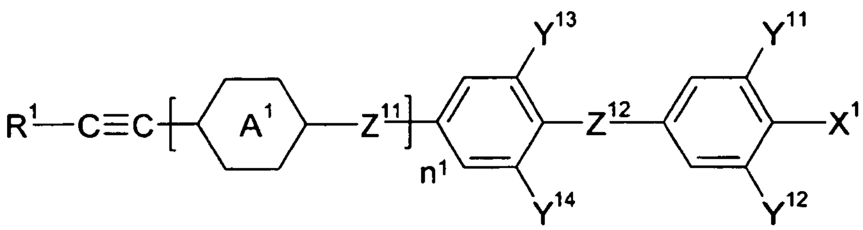
I

worin

$R^1$ Alkyl mit 1 bis 7 C-Atomen oder Oxaalkyl mit 2 bis 7 C-Atomen,

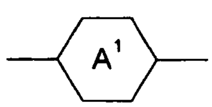 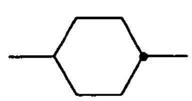, 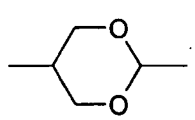, 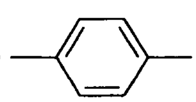,

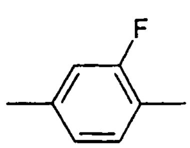, 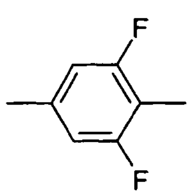, 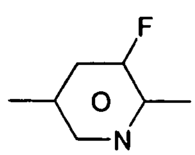,

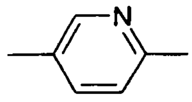 oder 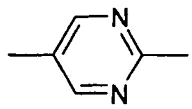

$Z^{11}$ und $Z^{12}$ jeweils voneinander unabhängig, eine Einfachbindung, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$ oder -C≡C- oder eine Kombination von zwei oder mehreren dieser Gruppen,
$X^1$ F, $-OCF_3$, $-CF_3$, $-OCF_2H$, Cl, CN, -C≡C-CN oder NCS,
$Y^{11}$, $Y^{12}$, $Y^{13}$ und $Y^{14}$ H oder F und
$n^1$ 0 oder 1, bedeuten,

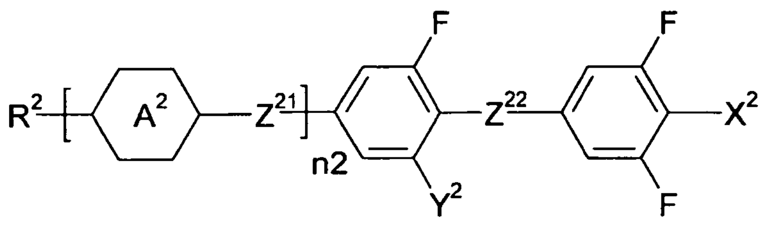

II

worin

$R^2$ Alkyl oder Alkoxy mit 1 bis 7 C-Atomen, Alkenyl, Alkenyloxy oder Oxaalkyl mit 2 bis 7 C-Atomen, bevorzugt Alkyl oder Alkoxy mit 1 bis 5 C-Atomen oder Alkenyl mit 2 bis 5 C-Atomen, bevorzugt Alkyl oder Alkoxy,

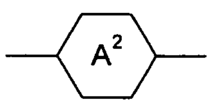 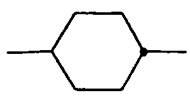, 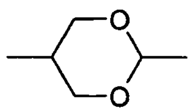, 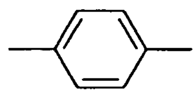,

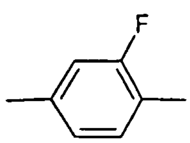, 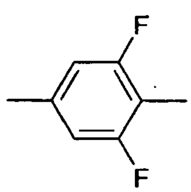, 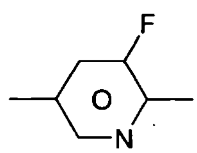,

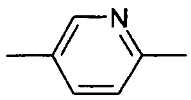 oder 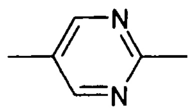

$Z^{21}$ und $Z^{22}$ jeweils voneinander unabhängig, eine Einfachbindung, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$ oder -C≡C- oder eine Kombination von zwei oder mehreren dieser Gruppen,
$X^2$ F, $-OCF_3$, $-CF_3$, $-OCF_2H$, Cl, CN, -C≡C-CN oder NCS,
$Y^2$ H oder F und
$n^2$ 0 oder 1 bedeuten, enthält.

2. Medium nach Anspruch 1, **dadurch gekennzeichnet, dass** die Blaue Phase einen Temperaturbereich von 5 Grad oder mehr als 5 Grad aufweist.

3. Medium nach Anspruch 2, **dadurch gekennzeichnet, dass** die Blaue Phase einen Temperaturbereich von 10 Grad oder mehr als 10 Grad aufweist.

4. Medium nach mindestens einem der Ansprüche 1 bis 3, **dadurch gekennzeichnet, dass** es eine Blaue Phase, im

gesamten Bereich von 0˚C oder weniger bis 80˚C oder mehr aufweist.

**5.** Medium nach mindestens einem der Ansprüche 1 bis 4, **dadurch gekennzeichnet, dass**

- die achirale Komponente, Komponente (B), des mesogenen Steuermediums eine oder mehrere Verbindungen der Formel I des Anspruchs 1 enthält.

**6.** Medium nach mindestens einem der Ansprüche 1 bis 5, **dadurch gekennzeichnet, dass**

- die achirale Komponente, Komponente (B), des mesogenen Steuermediums eine oder mehrere Verbindungen der Formel II des Anspruchs 1 enthält.

**7.** Medium nach mindestens einem der Ansprüche 5 und 6, **dadurch gekennzeichnet, dass** die achirale Komponente, Komponente (B), des mesogenen Steuermediums

- eine oder mehrere Verbindungen der Formel I des Anspruchs und
- eine oder mehrere Verbindungen der Formel II des Anspruchs 1 enthält.

**8.** Medium nach mindestens einem der Ansprüche 1 bis 7, **dadurch gekennzeichnet, dass**

- die chirale Komponente, Komponente (A), aus zwei oder mehr chiralen Verbindungen besteht.

**9.** Medium nach mindestens einem der Ansprüche 1 bis 8, **dadurch gekennzeichnet, dass**

- alle chiralen Verbindungen der Komponente (A) das selbe Vorzeichen der helikalen Verdrillungsstärke, HTP, bei 20˚C in der Referenzmischung, MLC-6828, haben.

**10.** Medium nach mindestens einem der Ansprüche 1 bis 9, **dadurch gekennzeichnet, dass**

- der Betrag der helikalen Verdrillungsstärke, HTP, einer oder mehrerer der chiralen Verbindungen der Komponente (A) bei 20˚C in der Referenzmischung, MLC-6828, 10 $\mu m^{-1}$ oder mehr beträgt.

**11.** Medium nach mindestens einem der Ansprüche 1 bis 10, **dadurch gekennzeichnet, dass**

- die dielektrische Suszeptibilität ($\varepsilon_{av.}$) des Steuermediums bei einer Temperatur von 4 Grad oberhalb der Umwandlungstemperatur von der Blauen Phase in die isotrope Phase 40 oder mehr beträgt.

**12.** Medium nach mindestens einem der Ansprüche 1 bis 11, **dadurch gekennzeichnet, dass**

- die optische Anisotropie bei einer Temperatur von 4 Grad unterhalb des Klärpunkts 0,050 oder mehr beträgt.

**13.** Elektrooptisches Lichtsteuerelement **dadurch gekennzeichnet, dass** es

- ein Substrat oder mehrere Substrate,
- eine Elektrodenanordnung,
- ein Element oder mehrere Elemente zur Polarisation des Lichts, und
- ein mesogenes Steuermedium nach einem oder mehreren der Ansprüche 1 bis 12 enthält;
- in dem das mesogene Steuermedium bei der Temperatur, bei der das Lichtsteuerelement betrieben wird, eine Blaue Phase aufweist.

**14.** Elektrooptisches Lichtsteuerelement nach Anspruch 13, **dadurch gekennzeichnet, dass**

- die Elektrodenanordnung ein elektrisches Feld mit einer signifikanten Komponente parallel zur Fläche des mesogenen Steuermediums erzeugen kann.

**15.** Elektrooptisches Lichtsteuerelement nach mindestens einem der Ansprüche 13 und 14, **dadurch gekennzeichnet, dass**

- sich das mesogene Medium zwischen zwei Polarisatoren befindet.

**16.** Elektrooptisches Lichtsteuerelement nach mindestens einem der Ansprüche 13 bis 15, **dadurch gekennzeichnet, dass**

- die relative Temperaturabhängigkeit ($dV^*_{10}/dT$) definiert als

$$dV^*_{10}/dT = dV_{10}(T_{ref.})/dT \ / \ V_{10}(T_{ref.})$$

worin

$V_{10}$: die Spannung bei der 10% relativer Kontrast erreicht wird,
T die Temperatur,
$T_{ref.}$ die Bezugstemperatur $T_{ref.} = T_{char.} + 2^{\circ}$ und
$T_{char.}$ Die charakteristische Temperatur bedeuten,

der charakteristischen Spannung für 10% relativen Kontrast ($V_{10}$) des Steuermediums bei einer Temperatur von 2° oberhalb der charakteristischen Temperatur ($T_{char.}$) im Bereich von +/-1 ° um diese Temperatur 30%/Grad oder weniger beträgt.

**17.** Lichtsteuerelement nach Anspruche 16, **dadurch gekennzeichnet, dass**

- die relative Temperaturabhängigkeit ($dV^*_{10}/dT$) 23%/Grad oder weniger beträgt.

**18.** Lichtsteuerelement nach mindestens einem der Ansprüche 13 bis 17, **dadurch gekennzeichnet, dass**

- die charakteristische Spannung für 10% relativen Kontrast ($V_{10}$) bei einer Temperatur von 2° oberhalb der charakteristischen Temperatur ($T_{Char.}$) des Steuermediums in Zellen 80 V oder weniger beträgt.

**19.** Elektrooptische Anzeige enthaltend ein oder mehrere Lichtsteuerelemente nach mindestens einem der Ansprüche 13 bis 18.

**20.** Elektrooptische Anzeige nach Anspruch 19, **dadurch gekennzeichnet, dass** die Anzeige mittels einer aktiven Matrix angesteuert wird.

**21.** Elektrooptisches Anzeigesystem enthaltend eine oder mehrere elektrooptische Anzeigen nach mindestens einem der Ansprüche 19 und 20.

**22.** Elektrooptisches Anzeigesystem nach Anspruch 21, **dadurch gekennzeichnet, dass** es als Fernsehbildschirm, als Computermonitor oder als beides verwendet werden kann.

**23.** Verwendung eines Lichtsteuerelements nach mindestens einem der Ansprüche 13 bis 18 zur Darstellung von Information.

**24.** Verwendung einer elektrooptischen Anzeige nach mindestens einem der Ansprüche 19 und 20, in einem elektrooptischen Anzeigesystem.

**25.** Verwendung eines elektrooptischen Anzeigesystems nach mindestens einem der Ansprüche 21 und 22, zur Darstellung von Videosignalen oder von digitalen Signalen.

## Claims

**1.** Mesogenic modulation medium for use in an electro-optical light modulation element, where the modulation medium has a blue phase in a particular temperature range, which comprises

- a chiral component, component (A), which consists of one or more chiral compounds, and
- an achiral component, component (B), which consists of one or more achiral compounds,

**characterised in that**

- the achiral component, component (B), comprises one or more compounds selected from the group of the compounds of the formulae I and II

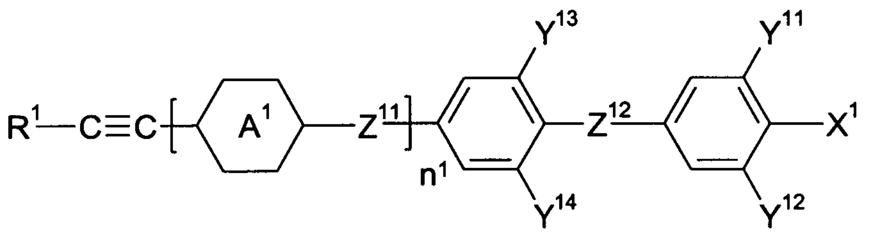

I

in which

$R^1$ denotes alkyl having 1 to 7 C atoms or oxaalkyl having 2 to 7 C atoms,

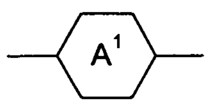 **denotes** 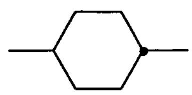, 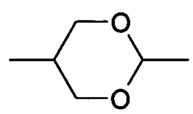, 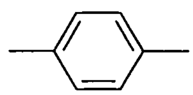,

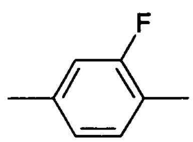, 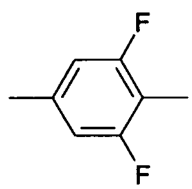, 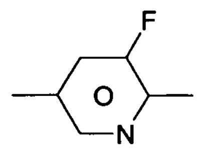,

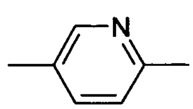 or 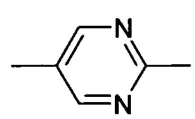

$Z^{11}$ and $Z^{12}$ each, independently of one another, denote a single bond, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$ or -C≡C- or a combination of two or more of these groups,
$X^1$ denotes F, $-OCF_3$, $-CF_3$, $-OCF_2H$, Cl, CN, -C≡C-CN or NCS,
$Y^{11}$, $Y^{12}$, $Y^{13}$ and $Y^{14}$ denote H or F, and
$n^1$ denotes 0 or 1,

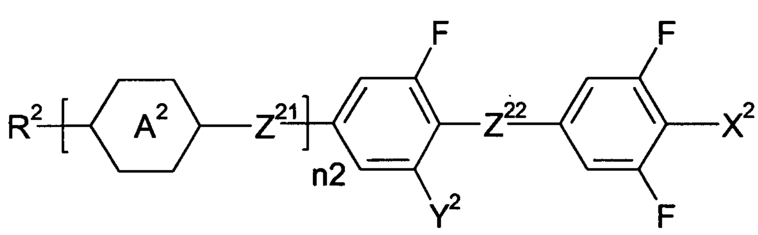

II

in which

$R^2$ denotes alkyl or alkoxy having 1 to 7 C atoms, alkenyl, alkenyloxy or oxaalkyl having 2 to 7 C atoms, preferably alkyl or alkoxy having 1 to 5 C atoms or alkenyl having 2 to 5 carbon atoms, preferably alkyl or alkoxy,

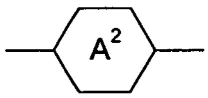 denotes 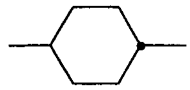, 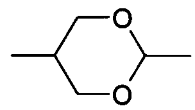, 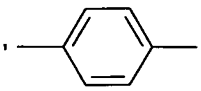,

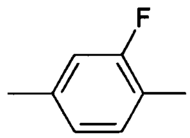, 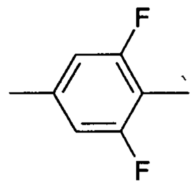, 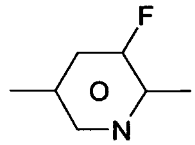,

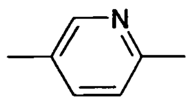 or 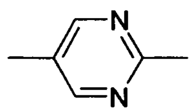

$Z^{21}$ and $Z^{22}$ each, independently of one another, denote a single bond, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$ or -C≡C- or a combination of two or more of these groups,
$X^2$ denotes F, $-OCF_3$, $-CF_3$, $-OCF_2H$, Cl, CN, -C≡C-CN or NCS,
$Y^2$ denotes H or F, and
$n^2$ denotes 0 or 1.

2. Medium according to Claim 1, **characterised in that** the blue phase has a temperature range of 5 degrees or more than 5 degrees.

3. Medium according to Claim 2, **characterised in that** the blue phase has a temperature range of 10 degrees or more than 10 degrees.

4. Medium according to at least one of Claims 1 to 3, **characterised in that** it has a blue phase in the entire range from 0°C or less to 80°C or more.

5. Medium according to at least one of Claims 1 to 4, **characterised in that**

- the achiral component, component (B), of the mesogenic modulation medium comprises one or more compounds of the formula I of Claim 1.

6. Medium according to at least one of Claims 1 to 5, **characterised in that**

- the achiral component, component (B), of the mesogenic modulation medium comprises one or more compounds of the formula II of Claim 1.

7. Medium according to at least one of Claims 5 and 6, **characterised in that** the achiral component, component (B), of the mesogenic modulation medium comprises

- one or more compounds of the formula I of Claim 1 and
- one or more compounds of the formula II of Claim 1.

**8.** Medium according to at least one of Claims 1 to 7, **characterised in that**

- the chiral component, component (A), consists of two or more chiral compounds.

**9.** Medium according to at least one of Claims 1 to 8, **characterised in that**

- all chiral compounds of component (A) have the same sign of the helical twisting power, HTP, at 20°C in the reference mixture, MLC-6828.

**10.** Medium according to at least one of Claims 1 to 9, **characterised in that**

- the value of the helical twisting power, HTP, of one or more of the chiral compounds of component (A) at 20°C in the reference mixture, MLC-6828, is 10 $\mu m^{-1}$ or more.

**11.** Medium according to at least one of Claims 1 to 10, **characterised in that**

- the dielectric susceptibility ($\varepsilon_{av.}$) of the modulation medium at a temperature of 4 degrees above the conversion temperature from the blue phase into the isotropic phase is 40 or more.

**12.** Medium according to at least one of Claims 1 to 11, **characterised in that**

- the optical anisotropy at a temperature of 4 degrees below the clearing point is 0.050 or more.

**13.** Electro-optical light modulation element, **characterised in that** it comprises

- a substrate or a plurality of substrates,
- an electrode arrangement,
- an element or a plurality of elements for the polarisation of light, and
- a mesogenic modulation medium according to one or more of Claims 1 to 12;
- in which the mesogenic modulation medium is operated at a temperature at which the light modulation element has a blue phase.

**14.** Electro-optical light modulation element according to Claim 13, **characterised in that**

- the electrode arrangement is able to generate an electric field having a significant component parallel to the surface of the mesogenic modulation medium.

**15.** Electro-optical light modulation element according to at least one of Claims 13 and 14, **characterised in that**

- the mesogenic medium is located between two polarisers.

**16.** Electro-optical light modulation element according to at least one of Claims 13 to 15, **characterised in that**

- the relative temperature dependence ($dV^*_{10}/dT$) defined as

$$dV^*_{10}/dT = dV_{10}(T_{ref.})/dT/V_{10}(T_{ref.})$$

in which

$V_{10}$ denotes the voltage at which 10% relative contrast is achieved,
T denotes the temperature,
$T_{ref.}$ denotes the reference temperature $T_{ref.} = T_{char.} + 2°$ and
$T_{char.}$ denotes the characteristic temperature,

of the characteristic voltage for 10% relative contrast ($V_{10}$) of the modulation medium at a temperature of 2°

above the characteristic temperature ($T_{char.}$) in the range of +/-1° around this temperature is 30%/degree or less.

**17.** Light modulation element according to Claim 16, **characterised in that**

- the relative temperature dependence ($dV^*_{10}/dT$) is 23%/degree or less.

**18.** Light modulation element according to at least one of Claims 13 to 17, **characterised in that**

- the characteristic voltage for 10% relative contrast ($V_{10}$) at a temperature of 2° above the characteristic temperature ($T_{char.}$) of the modulation medium in cells is 80 V or less.

**19.** Electro-optical display containing one or more light modulation elements according to at least one of Claims 13 to 18.

**20.** Electro-optical display according to Claim 19, **characterised in that** the display is addressed by means of an active matrix.

**21.** Electro-optical display system containing one or more electro-optical displays according to at least one of Claims 19 and 20.

**22.** Electro-optical display system according to Claim 21, **characterised in that** it can be used as television screen, as computer monitor or as both.

**23.** Use of a light modulation element according to at least one of Claims 13 to 18 for the display of information.

**24.** Use of an electro-optical display according to at least one of Claims 19 and 20 in an electro-optical display system.

**25.** Use of an electro-optical display system according to at least one of Claims 21 and 22 for the display of video signals or of digital signals.

## Revendications

**1.** Milieu de modulation mésogène pour une utilisation dans un élément de modulation de lumière électro-optique, où le milieu de modulation présente une phase bleue dans une plage de températures particulière, lequel comprend :

- un composant chiral, soit un composant (A), qui est constitué par un ou plusieurs composés chiraux ; et
- un composant achiral, soit un composant (B), qui est constitué par un ou plusieurs composés achiraux,

**caractérisé en ce que** :

- le composant achiral, soit le composant (B), comprend un ou plusieurs composés choisis parmi le groupe des composés des formules I et II

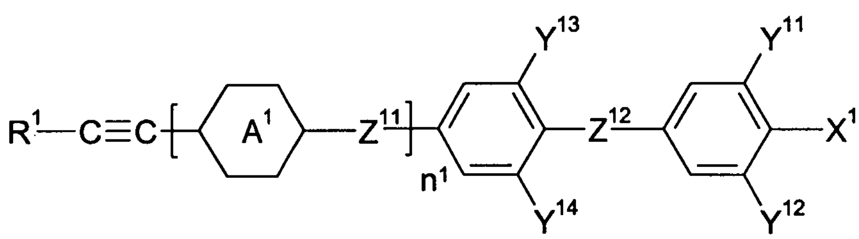

I

dans laquelle

$R^1$ représente alkyle comportant de 1 à 7 atomes de C ou oxaalkyle comportant de 2 à 7 atomes de C,

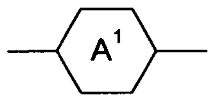 représente 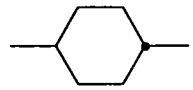 , 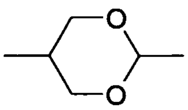 , 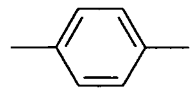

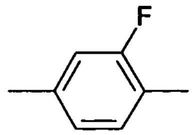 , 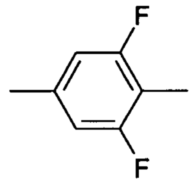 , 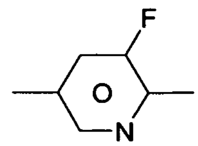 ,

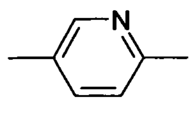 ou 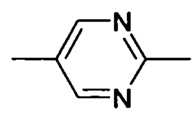

$Z^{11}$ et $Z^{12}$ chacun indépendamment l'un de l'autre, représentent une liaison simple, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$ ou -C≡C- ou une combinaison de deux de ces groupes ou plus,
$X^1$ représente F, $-OCF_3$, $-CF_3$, $-OCF_2H$, Cl, CN, -C≡C-CN ou NCS,
$Y^{11}$, $Y^{12}$ $Y^{13}$ et $Y^{14}$ représentent H ou F, et
$n^1$ représente 0 ou 1,

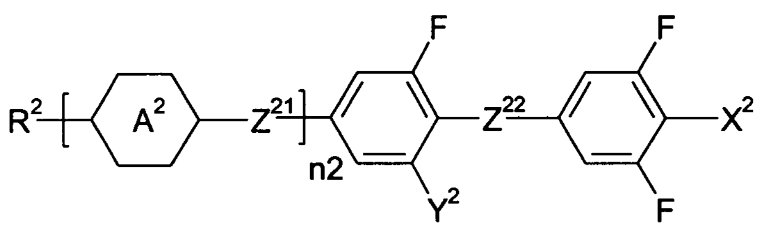 II

dans laquelle

$R^2$ représente alkyle ou alkoxy comportant de 1 à 7 atomes de C, alkényle, alkényloxy ou oxaalkyle comportant de 2 à 7 atomes de C, de préférence alkyle ou alkoxy comportant de 1 à 5 atomes de C ou alkényle comportant de 2 à 5 atomes de carbone, de préférence alkyle ou alkoxy,

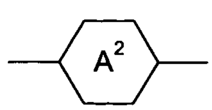 représente 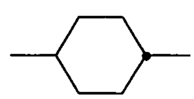 , 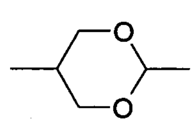 , 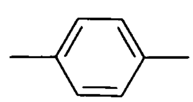 ,

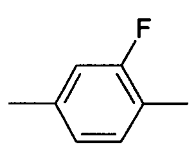 , 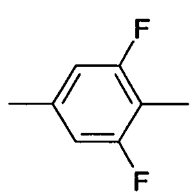 , 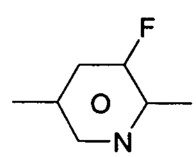 ,

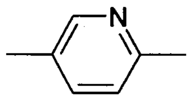 or 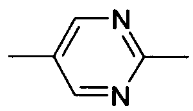

$Z^{21}$ et $Z^{22}$ chacun indépendamment l'un de l'autre, représentent une liaison simple, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$ ou -C=C- ou une combinaison de deux de ces groupes ou plus,
$X^2$ représente F, $-OCF_3$, $-CF_3$, $-OCF_2H$, Cl, CN, -C≡C-CN ou NCS,
$Y^2$ représente H ou F, et
$n^2$ représente 0 ou 1.

2. Milieu selon la revendication 1, **caractérisé en ce que** la phase bleue présente une plage de températures de 5 degrés ou plus de 5 degrés.

3. Milieu selon la revendication 2, **caractérisé en ce que** la phase bleue présente une plage de températures de 10 degrés ou plus de 10 degrés.

4. Milieu selon au moins l'une des revendications 1 à 3, **caractérisé en ce qu'**il présente une phase bleue dans la plage complète de 0° C ou moins à 80° C ou plus.

5. Milieu selon au moins l'une des revendications 1 à 4, **caractérisé en ce que** :

- le composant achiral, soit le composant (B), du milieu de modulation mésogène comprend un ou plusieurs composés de la formule I de la revendication 1.

6. Milieu selon au moins l'une des revendications 1 à 5, **caractérisé en ce que** :

- le composant achiral, soit le composant (B), du milieu de modulation mésogène comprend un ou plusieurs composés de la formule II de la revendication 1.

7. Milieu selon au moins l'une des revendications 5 et 6, **caractérisé en ce que** le composant achiral, soit le composant (B), du milieu de modulation mésogène comprend :

- un ou plusieurs composés de la formule I de la revendication 1 ; et
- un ou plusieurs composés de la formule II de la revendication 1.

8. Milieu selon au moins l'une des revendications 1 à 7, **caractérisé en ce que** :

- le composant chiral, soit le composant (A), est constitué par deux composés chiraux ou plus.

9. Milieu selon au moins l'une des revendications 1 à 8, **caractérisé en ce que** :

- tous les composés chiraux du composant (A) présentent le même signe de la puissance de vrillage en hélice, soit HTP, à 20° C dans le milieu de référence, soit MLC-6828.

10. Milieu selon au moins l'une des revendications 1 à 9, **caractérisé en ce que** :

- la valeur de la puissance de vrillage en hélice, soit HTP, d'un ou de plusieurs des composés chiraux du composant (A) à 20° C dans le mélange de référence, soit MLC-6828, est de 10 $\mu m^{-1}$

ou plus.

11. Milieu selon au moins l'une des revendications 1 à 10, **caractérisé en ce que** :

- la susceptibilité diélectrique ($\varepsilon_{av.}$) du milieu de modulation à une température de 4 degrés au-dessus de la

température de conversion de la phase bleue selon la phase isotrope est de 40

ou plus.

**12.** Milieu selon au moins l'une des revendications 1 à 11, **caractérisé en ce que** :

- l'anisotropie optique à une température de 4 degrés au-dessous du point de clarification est de 0,050 ou plus.

**13.** Elément de modulation de lumière électro-optique, **caractérisé en ce qu'**il comprend :

- un substrat ou une pluralité de substrats ;
- un agencement d'électrodes ;
- un élément ou une pluralité d'éléments pour la polarisation de la lumière ; et
- un milieu de modulation mésogène selon une ou plusieurs des revendications 1 à 12,
- dans lequel le milieu de modulation mésogène est actionné à une température à laquelle l'élément de modulation de lumière présente une phase bleue.

**14.** Elément de modulation de lumière électro-optique selon la revendication 13, **caractérisé en ce que** :

- l'agencement d'électrodes peut générer un champ électrique présentant une composante significative parallèle à la surface du milieu de modulation mésogène.

**15.** Elément de modulation de lumière électro-optique selon au moins l'une des revendications 13 et 14, **caractérisé en ce que** :

- le milieu mésogène est localisé entre deux polariseurs.

**16.** Elément de modulation de lumière électro-optique selon au moins l'une des revendications 13 à 15, **caractérisé en ce que** :

- la dépendance vis-à-vis de la température relative ($dV^*_{10}/dT$) qui est définie en tant que :

$$dV^*_{10}/dT = dV_{10}(T_{ref.})/dT/V_{10}(T_{ref.})$$

où

$V_{10}$ représente la tension à laquelle 10% du contraste relatif est réalisé,
T représente la température,
$T_{ref.}$ représente la température de référence $T_{ref.} = T_{char.} + 2^\circ$ et
$T_{char.}$ représente la température caractéristique,

de la tension caractéristique pour un contraste relatif de 10% ($V_{10}$) du milieu de modulation à une température de 2° au-dessus de la température caractéristique ($T_{char.}$) dans la plage de +/-1° autour de cette température est de 30%/degrés ou moins.

**17.** Elément de modulation de lumière selon la revendication 16, **caractérisé en ce que** :

- la dépendance vis-à-vis de la température relative ($dV^*_{10}/dT$) est de 23%/degrés ou moins.

**18.** Elément de modulation de lumière selon au moins l'une des revendications 13 à 17, **caractérisé en ce que** :

- la tension caractéristique pour un contraste relatif de 10% ($V_{10}$) à une température de 2° au-dessus de la température caractéristique ($T_{char.}$) du milieu de modulation dans des cellules est de 80 V ou moins.

**19.** Affichage électro-optique contenant un ou plusieurs éléments de modulation de lumière selon au moins l'une des revendications 13 à 18.

**20.** Affichage électro-optique selon la revendication 19, **caractérisé en ce que** l'affichage est adressé au moyen d'une matrice active.

**21.** Système d'affichage électro-optique contenant un ou plusieurs affichages électro-optiques selon au moins l'une des revendications 19 et 20.

**22.** Système d'affichage électro-optique selon la revendication 21, **caractérisé en ce qu'**il peut être utilisé en tant qu'écran de télévision, en tant que moniteur d'ordinateur ou en tant que les deux.

**23.** Utilisation d'un élément de modulation de lumière selon au moins l'une des revendications 13 à 18 pour l'affichage d'une information.

**24.** Utilisation d'un affichage électro-optique selon au moins l'une des revendications 19 et 20 dans un système d'affichage électro-optique.

**25.** Utilisation d'un système d'affichage électro-optique selon au moins l'une des revendications 21 et 22 pour l'affichage de signaux vidéo ou de signaux numériques.